# EUROPEAN PATENT APPLICATION

(11) **EP 4 852 173 A1**
(43) Date of publication of application: **09.12.2026**
(21) Application number: 24923118.4
(22) Date of filing: 15.04.2024
(51) Int. Cl.: H01M 50/244, H01M 50/249, H01M 10/625, H01M 10/655, H01M 10/6556, H01M 50/224, H01M 10/6568

(54) **BATTERY AND ELECTRIC DEVICE**

(30) Priority: 06.02.2024 CN 202410172422
(71) Applicant: Contemporary Amperex Technology Co., Limited, Ningde, Fujian 352100 (CN)
(72) Inventor: YANG, Hui, Ningde, Fujian 352100 (CN); HUANG, Le, Ningde, Fujian 352100 (CN)
(74) Representative: Gong, Jinping
(86) International application number: PCT/CN2024/087801
(87) International publication number: WO 2025/166893

(57) **Abstract**

A battery (1) and an electric apparatus are provided. The battery (1) includes: a casing (200) having an accommodation cavity (21); and a first heat exchange member (100) attached to an outer side of a wall of the casing (200) facing away from the accommodation cavity (21) and configured to exchange heat with a battery cell (102).

## Description

### CROSS-REFERENCE TO RELATED APPLICATIONS

This application claims priority to the Chinese Patent Application No.202410172422.0, filed on February 06, 2024, which is incorporated herein by reference in its entirety.

### TECHNICAL FIELD

This application relates to the field of battery technology, and in particular, to a battery and an electric apparatus.

### BACKGROUND

In recent years, new energy vehicles have made great strides. In the field of electric vehicles, traction batteries, as power sources of electric vehicles, play an irreplaceable and important role. A battery includes a casing and a plurality of battery cells accommodated in the casing. As core components of new energy vehicles, batteries have high requirements in terms of both safety and service life. To ensure the service life of the battery, a cold plate is integrated into the casing to cool the battery in the prior art. However, the sealing and liquid leakage issues of the cold plate affect the further improvement of the reliability and the further extension of the service life of the battery.

### SUMMARY

Embodiments of this application provide a battery and an electric apparatus, which can effectively improve the reliability of the battery.

According to a first aspect, an embodiment of this application provides a battery, where the battery includes: a casing having an accommodation cavity; and a first heat exchange member attached to an outer side of a wall of the casing facing away from the accommodation cavity and configured to exchange heat with a battery cell.

In the above technical solution, on the one hand, since the first heat exchange member is attached to the outer side of the wall of the casing facing away from the accommodation cavity, the requirements for sealing and insulation on a side of the casing close to the first heat exchange member can be reduced, thereby reducing the probability of safety hazards of the battery caused by liquid leakage of the first heat exchange member and improving the reliability of the battery. Moreover, since most of sealing and insulation structures are omitted, the manufacturing cost of the battery can also be reduced, and a volumetric energy density of the battery can be increased. On the other hand, the casing directly bears the weight of the battery cell, and the first heat exchange member does not directly come into contact with the battery cell and does not directly undertake the task of supporting the battery cell. Therefore, the first heat exchange member bears less load and stress, which can improve the reliability of the first heat exchange member, thereby further improving the reliability of the battery. In addition, the first heat exchange member is located on an outer side of the casing, which can protect a bottom wall of the casing, thereby further improving the reliability of the battery.

In some embodiments of this application, the accommodation cavity includes a first cavity; the first cavity is configured to accommodate the battery cell; the first heat exchange member has a heat exchange region configured for heat exchange; and an area of a projected contour of an orthographic projection of the heat exchange region on a side surface of the casing close to the first heat exchange member is greater than or equal to an area of a projected surface of an orthographic projection of the first cavity on the side surface of the casing close to the first heat exchange member, and is less than an area of the side surface of the casing close to the first heat exchange member.

In the above technical solution, the heat exchange region can cover a region where the first cavity is located, but does not exceed a corresponding side surface area of the casing. This allows the size of the heat exchange region not to be too large on the premise that the heat exchange region performs heat exchange for the battery cell in the first cavity, which is conducive to reducing the size of the first heat exchange member, reducing material consumption, further reducing the manufacturing cost of the battery, and reducing the weight of the battery, thereby increasing the volumetric energy density of the battery. Moreover, the area of the projected contour of the orthographic projection of the heat exchange region on the side surface of the casing close to the first heat exchange member is less than the area of the side surface of the casing close to the first heat exchange member, which can also reduce the probability of the heat exchange region coming into contact with other regions of the casing that do not require heat exchange, reducing the influence of portions of the wall of the casing other than a portion corresponding to the first cavity on the battery cell. This allows the heat exchange region to perform concentrated heat exchange in the region where the first cavity is located, which is conducive to improving the heat exchange efficiency in the region where the first cavity is located, thereby improving the reliability of the battery.

In some embodiments of this application, the accommodation cavity includes a second cavity configured to accommodate an electrical component, where an orthographic projection of the second cavity on the side surface of the casing close to the first heat exchange member is located outside the orthographic projection of the heat exchange region on the side surface of the casing close to the first heat exchange member.

In the above technical solution, the orthographic projection of the second cavity on the side surface of the casing close to the first heat exchange member is located outside the orthographic projection of the heat exchange region on the side surface of the casing close to the first heat exchange member, so that the heat exchange region does not need to cover a region where the second cavity for accommodating the electrical component is located. This can effectively reduce the size of the heat exchange region and is conducive to further reducing the size of the first heat exchange member, reducing the material consumption of the first heat exchange member, and reducing the manufacturing cost of the first heat exchange member, thereby further reducing the manufacturing cost of the battery. In addition, this is also conducive to reducing the weight of the battery.

In some embodiments of this application, the casing includes a casing body, a bottom plate, and a top plate, where the bottom plate and the top plate are connected to the casing body; and the first heat exchange member is attached to an outer side of the bottom plate and/or an outer side of the top plate.

In the above technical solution, areas of the bottom plate and the top plate are larger than an area of a side wall of the casing body, and the bottom plate and the top plate come into contact with a large number of battery cells in the first cavity. The first heat exchange member is attached to the outer side of the bottom plate and/or the outer side of the top plate, so that the first heat exchange member can exchange heat with more battery cells, providing a larger heat exchange surface, thereby better regulating the overall temperature of the battery, improving the heat exchange efficiency, and improving the heat exchange uniformity.

In some embodiments of this application, the casing body, the bottom plate, and the top plate are steel components or aluminum components.

In the above technical solution, steel components have relatively high strength and are relatively inexpensive. Setting the casing body, the bottom plate, and the top plate as steel components allows the casing to have both relatively high structural strength and reduced cost, thereby further reducing the manufacturing cost of the battery. Aluminum components have the advantages of light weight, good thermal conductivity, and good corrosion resistance. Therefore, setting the casing body, the bottom plate, and the top plate as aluminum components can make the casing body, the bottom plate, and the top plate relatively light, reducing the assembly difficulty, improving the operating efficiency, and reducing the overall weight of the casing. Moreover, heat from the first cavity can be better transferred to the first heat exchange member, which is conducive to improving the heat exchange efficiency, enhancing the heat exchange effect, alleviating chemical corrosion of the casing, and extending the service life of the battery. In addition, when the casing body, the bottom plate, and the top plate are aluminum components, the casing body, the bottom plate, and the top plate can each be easily formed through an integral stamping manner, which can reduce the manufacturing cost and improve the manufacturing efficiency.

In some embodiments of this application, when the casing body, the bottom plate, and the top plate are steel components, a thickness of the casing body is 0.8 mm to 2.0 mm.

In the above technical solution, when the casing body, the bottom plate, and the top plate are steel components, the thickness of the casing body is set to be within the range of 0.8 mm to 2.0 mm. This allows the casing body to have relatively high strength, helping to improve the strength of the casing, thereby helping to improve the overall reliability of the battery. Moreover, this can also make the weight of the casing body appropriate, allowing the casing body to have a relatively light weight, thereby helping to reduce the weight of the battery and increase the energy density of the battery.

In some embodiments of this application, thicknesses of the bottom plate and the top plate are 0.4 mm to 1.2 mm.

In the above technical solution, when the casing body, the bottom plate, and the top plate are steel components, the thicknesses of the bottom plate and the top plate are set to be within the range of 0.4 mm to 1.2 mm. This allows the bottom plate and the top plate to have relatively high strength, helping to improve the strength of the casing, thereby helping to improve the overall reliability of the battery. Moreover, this can also make the weights of the bottom plate and the top plate appropriate, allowing the bottom plate and the top plate to have relatively lighter weights, thereby helping to reduce the weight of the casing and increase the energy density of the battery.

In some embodiments of this application, when the casing body, the bottom plate, and the top plate are aluminum components, a thickness of the casing body is 1.0 mm to 5.0 mm.

In the above technical solution, when the casing body, the bottom plate, and the top plate are aluminum components, the thickness of the casing body is set to be within the range of 1.0 mm to 5.0 mm. This allows the casing body to have relatively high strength, helping to improve the strength of the casing, thereby helping to improve the overall reliability of the battery. Moreover, this can also make the weight of the casing body appropriate, allowing the casing body to have a relatively light weight, thereby helping to reduce the weight of the casing and increase the energy density of the battery.

In some embodiments of this application, thicknesses of the bottom plate and the top plate are 1.0 mm to 3.0 mm.

In the above technical solution, when the casing body, the bottom plate, and the top plate are aluminum components, the thicknesses of the bottom plate and the top plate are set to be within the range of 1.0 mm to 3.0 mm. This allows the bottom plate and the top plate to have relatively high strength, helping to improve the strength of the casing, thereby helping to improve the overall reliability of the battery. Moreover, this can also make the weights of the bottom plate and the top plate appropriate, allowing the bottom plate and the top plate to have relatively light weights, thereby helping to reduce the weight of the casing and increase the energy density of the battery.

In some embodiments of this application, both the bottom plate and the top plate are welded to the casing body. In this technical solution, the bottom plate and the top plate are welded to the casing body. On the one hand, the welding connection manner has a lower cost compared to an adhesive-applied connection manner and a fastener connection manner, so that the cost can be reduced. On the other hand, the welding connection manner has relatively high reliability, which can improve the connection strength between the bottom plate and the top plate and the casing body, thereby improving the reliability of the entire casing.

In some embodiments of this application, the battery further includes a fixing member, where the fixing member is disposed on the casing; and the fixing member is disposed close to at least one edge of the first heat exchange member and configured to fixedly connect the first heat exchange member and the casing.

In the above technical solution, the fixing member can be disposed close to at least one edge of the first heat exchange member, so that the at least one edge of the first heat exchange member can be fixedly connected to the casing. This can improve the connection reliability between a region where the edge of the first heat exchange member is located and the casing, thereby improving the firmness of the connection between the first heat exchange member and the casing, helping to improve the heat exchange stability of the first heat exchange member for the battery, and thus improving the reliability of the battery.

In some embodiments of this application, a first groove is provided in a wall of the casing close to the first heat exchange member; and the fixing member is at least partially located in the first groove.

In the above technical solution, since the fixing member is at least partially disposed in the first groove, the first groove can provide part of a space required for installing the fixing member. On the one hand, this can improve the structural compactness of an assembly formed by the casing, the fixing member, and the first heat exchange member, allowing the size of the casing to be relatively small, thereby helping to save space, reduce the volume, and increase the volumetric energy density of the battery. On the other hand, the first groove can provide a limiting and restraining effect on the fixing member, improving the connection reliability between the fixing member and the casing, thereby improving the connection reliability between the first heat exchange member and the casing, and helping to improve the reliability of the battery and extend the service life of the battery.

In some embodiments of this application, the wall of the casing close to the first heat exchange member protrudes toward an inner side of the accommodation cavity to form a protrusion; a peripheral wall of a protruding position of the protrusion forms a first groove; the battery further includes a beam body; the beam body is disposed in the accommodation cavity, and the beam body is provided with a second groove; and the protrusion is at least partially disposed in the second groove.

In the above technical solution, the protrusion protrudes toward the inner side of the casing, and the peripheral wall of the protruding position forms the first groove. Therefore, on the premise that the first groove is formed on the first casing wall and can be used for accommodating the fixing member, thicknesses of the remaining parts of the first casing wall other than the protrusion can be made relatively small, which is conducive to reducing the thickness of the first casing wall and reducing the weight of the first casing wall, thereby increasing the energy density of the battery. Moreover, the peripheral wall of the protrusion forming the first groove is also conducive to improving the strength of a position where the first groove is located, reducing the probability of insufficient structural strength of the first casing wall due to the provision of the first groove, and improving the reliability of the first casing wall, thereby improving the reliability of the casing, and thus improving the overall reliability of the battery. The beam body is provided with the second groove for accommodating the protrusion, so that the beam body and the protrusion can be combined together, reducing the probability of the protrusion occupying the space required by the battery cell in the casing, and helping to improve the compactness of an internal structure of the battery, thereby increasing the volumetric energy density of the battery. Secondly, the cooperation of the protrusion and the second groove can provide a limiting effect on the beam body, improving the connection reliability between the beam body and the casing, thereby improving the reliability of the battery.

In some embodiments of this application, the first heat exchange member includes a first heat exchange flow passage, where the first heat exchange flow passage includes a first heat exchange section and a second heat exchange section; the second heat exchange section is bent to form a U-shaped region; the first heat exchange section is disposed within the U-shaped region in a bent manner and connected to the second heat exchange section in a bent manner; and the fixing member is connected to the first heat exchange section and the second heat exchange section and disposed close to or corresponding to bent portions of the first heat exchange section and the second heat exchange section.

In the above technical solution, the second heat exchange section is bent to form the U-shaped region, and the first heat exchange section is disposed within the U-shaped region in a bent manner, so that when the first heat exchange member exchanges heat with the battery, the U-shaped region formed by a peripheral second heat exchange section may be opposite to a peripheral battery cell of the battery, and the first heat exchange section within the U-shaped region may be opposite to an inner battery cell. This allows the first heat exchange member to compensate for an internal and external temperature difference caused by heat exchange between the peripheral battery cell and the environment, making the heat exchange effect of the peripheral battery cell of the battery consistent with that of the inner battery cell of the battery, and improving the temperature uniformity of the battery, thereby extending the service life of the battery to a certain extent. The fixing member can provide a restraining and limiting effect on regions where the bent portions of the first heat exchange section and the second heat exchange section are located, improving the connection reliability between the bent portions of the first heat exchange section and the second heat exchange section and the casing, thereby improving the operating reliability of the first heat exchange section and the second heat exchange section, and helping to improve the reliability of the battery.

In some embodiments of this application, the first heat exchange member includes a first heat exchange flow passage, where the first heat exchange flow passage includes a first heat exchange section and a second heat exchange section; the second heat exchange section is bent to form a U-shaped region; and the first heat exchange section is disposed within the U-shaped region in a bent manner and connected to the second heat exchange section in a bent manner.

In the above technical solution, the second heat exchange section is bent to form a U-shaped region, and the first heat exchange section is disposed within the U-shaped region in a bent manner, so that when the first heat exchange member exchanges heat with the battery, the U-shaped region formed by a peripheral second heat exchange section may be opposite to a peripheral battery cell of the battery, and the first heat exchange section within the U-shaped region may be opposite to an inner battery cell. This allows the first heat exchange member to compensate for an internal and external temperature difference caused by heat exchange between the peripheral battery cell and the environment, making the heat exchange effect of the peripheral battery cell of the battery consistent with that of the inner battery cell of the battery, and improving the temperature uniformity of the battery, thereby extending the service life of the battery to a certain extent.

In some embodiments of this application, the first heat exchange section includes a plurality of first heat exchange portions, where the plurality of first heat exchange portions are arranged at intervals along a first direction and sequentially connected to each other in a bent manner; each of the first heat exchange portions extends linearly along a second direction; and the first direction and the second direction are arranged at an included angle.

In the above technical solution, on the one hand, providing the plurality of first heat exchange portions can increase a heat exchange area of the first heat exchange section, thereby increasing a heat exchange area of the first heat exchange flow passage, and thus improving the heat exchange effect of the first heat exchange flow passage. On the other hand, since inner battery cells are wrapped by outer battery cell, a temperature difference between the inner battery cells is not large. Therefore, providing the plurality of first heat exchange portions can improve the overall heat exchange effect on the premise of ensuring a small temperature difference between the inner and outer battery cells. Setting the first heat exchange portions to extend linearly along the second direction can reduce the manufacturing difficulty of the first heat exchange portions, thereby reducing the manufacturing complexity of the first heat exchange flow passage. In addition, straight pipes can also increase a flow rate of a heat exchange fluid, thereby improving the heat exchange effect of the first heat exchange flow passage.

In some embodiments of this application, the second heat exchange section includes a second heat exchange portion, a third heat exchange portion, and a fourth heat exchange portion, where the second heat exchange portion extends along a first side periphery of the first heat exchange section; the third heat exchange portion is connected between the second heat exchange portion and the first heat exchange section and extends along a second side periphery of the first heat exchange section; a first end of the third heat exchange portion is connected to the second heat exchange portion at an included angle, and a second end of the third heat exchange portion is connected to the first heat exchange section at an included angle; the fourth heat exchange portion is in communication with the second heat exchange portion, is connected to the second heat exchange portion at an included angle, and extends along a third side periphery of the first heat exchange section.

In the above technical solution, the second heat exchange portion, the third heat exchange portion, and the fourth heat exchange portion are respectively arranged on three sides of the first heat exchange section, so that the second heat exchange section can surround the first heat exchange section. Thus, this can improve the compactness of the arrangement of the first heat exchange flow passage, facilitating miniaturization of a structure of the first heat exchange flow passage, thereby helping to increase the volumetric energy density of the battery. In addition, this can also simplify the structure of the first heat exchange flow passage, facilitating the processing and production of the first heat exchange member.

In some embodiments of this application, the first heat exchange section includes a plurality of first heat exchange portions, where the plurality of first heat exchange portions are sequentially connected to each other in a bent manner in a first direction; the second heat exchange portion is located on a side of the plurality of first heat exchange portions along the first direction; the third heat exchange portion is located on a side of the plurality of first heat exchange portions along a second direction; the first direction and the second direction are arranged at an included angle; a first end of the third heat exchange portion is connected to one end of the second heat exchange portion along the second direction, and a second end of the third heat exchange portion is connected to one of the plurality of first heat exchange portions that is farthest from the second heat exchange portion along the first direction; the fourth heat exchange portion is located on the other side of the plurality of first heat exchange portions along the second direction; and one end of the fourth heat exchange portion is connected to one end of the second heat exchange portion away from the third heat exchange portion, and the other end of the fourth heat exchange portion extends along the first direction away from the second heat exchange portion.

In the above technical solution, the plurality of first heat exchange portions are set to be sequentially connected to each other in a bent manner in the first direction, the second heat exchange portion is set to be located on the side of the plurality of first heat exchange portions along the first direction, the third heat exchange portion is set to be located on the side of the plurality of first heat exchange portions along the second direction, and the fourth heat exchange portion is set to be located on the other side of the plurality of first heat exchange portions along the second direction, so that a positional relationship between the second heat exchange portion, the third heat exchange portion, the fourth heat exchange portion, and the first heat exchange portion is defined, thereby further defining the layout of the first heat exchange flow passage, simplifying the structure of the first heat exchange flow passage, and facilitating the manufacturing and processing of the first heat exchange member.

In some embodiments of this application, the third heat exchange portion and the fourth heat exchange portion extend along the first direction; and the first heat exchange portion and the second heat exchange portion both extend along the second direction.

In the above technical solution, the third heat exchange portion and the fourth heat exchange portion are set to extend along the first direction, and the first heat exchange portion and the second heat exchange portion are set to extend along the second direction, so that the tortuous arrangement of the first heat exchange flow passage can be facilitated, thereby reducing the manufacturing difficulty of the first heat exchange flow passage and reducing the manufacturing cost of the heat exchange member.

In some embodiments of this application, the fourth heat exchange portion extends along the first direction to a position close to one of the plurality of first heat exchange portions that is farthest from the second heat exchange portion.

In the above technical solution, the fourth heat exchange portion is set to extend along the first direction to the position close to the one of the plurality of first heat exchange portions that is farthest from the second heat exchange portion, so that a heat exchange area of the fourth heat exchange portion can be increased. This allows the first heat exchange flow passage to exchange heat with a plurality of battery cells arranged corresponding to the first heat exchange flow passage as much as possible, improving the heat exchange coverage of the first heat exchange flow passage, thereby improving the heat exchange effect of the battery.

In some embodiments of this application, the first heat exchange flow passage further includes a third heat exchange section, where the first heat exchange section is connected between the third heat exchange section and the second heat exchange section; and the third heat exchange section is connected to the first heat exchange section at an included angle.

In the above technical solution, providing the third heat exchange section can further increase the heat exchange area of the first heat exchange flow passage, thereby further improving the heat exchange effect of the first heat exchange flow passage.

In some embodiments of this application, the first heat exchange section includes a plurality of first heat exchange portions, where the plurality of first heat exchange portions are sequentially connected to each other in a bent manner in a first direction; the third heat exchange section is disposed on a side of the first heat exchange section facing away from the third heat exchange portion, and the third heat exchange section is connected to one of the plurality of first heat exchange portions that is closest to the second heat exchange portion along the first direction.

In the above technical solution, the third heat exchange section is additionally provided, and the third heat exchange section is set to be connected to the one of the plurality of first heat exchange portions that is closest to the second heat exchange portion along the first direction, so that the heat exchange area can be increased, and the temperature difference of a battery module formed by a plurality of rows of battery cells can be balanced, thereby improving the temperature uniformity of the battery module.

In some embodiments of this application, the third heat exchange section extends along the first direction away from the second heat exchange portion; the first heat exchange portion extends along the second direction; and the first direction and the second direction are arranged at an included angle.

In the above technical solution, setting the third heat exchange section to extend along the first direction away from the second heat exchange portion can increase the heat exchange area of the first heat exchange flow passage and improve the heat exchange effect of the first heat exchange flow passage on the battery cell. In addition, when the third heat exchange section and the fourth heat exchange portion jointly exchange heat with the battery module, a temperature difference in a region of an edge position of the battery module can be balanced, and the temperature uniformity at the edge position of the battery module can be improved.

In some embodiments of this application, the third heat exchange section extends along the first direction to the position close to the one of the plurality of first heat exchange portions that is farthest from the second heat exchange portion.

In the above technical solution, the third heat exchange section is set to extend along the first direction to the position close to the one of the plurality of first heat exchange portions that is farthest from the second heat exchange portion, so that a length of the third heat exchange portion can be increased, a heat exchange area of the third heat exchange portion can be increased, and the heat exchange effect of the first heat exchange flow passage can be improved.

In some embodiments of this application, the first heat exchange flow passage further includes a first inlet/outlet section, where one end of the first inlet/outlet section is connected to the third heat exchange section at an included angle, and the other end of the first inlet/outlet section is formed as a first inlet/outlet of the first heat exchange flow passage; the first inlet/outlet section extends along the second direction away from the first heat exchange section; and the third heat exchange section extends along the first direction.

In the above technical solution, providing the first inlet/outlet section can facilitate connection to an external pipeline, allowing a heat exchange medium to enter or exit the first heat exchange flow passage. In addition, the heat exchange fluid entering or exiting the first heat exchange flow passage can also be guided, allowing the heat exchange fluid to enter or exit quickly, thereby improving the heat exchange velocity. Setting the first inlet/outlet section to extend along the second direction away from the first heat exchange section allows the arrangement of pipelines of the first heat exchange flow passage to be more reasonable and facilitates connection to the external pipeline. In addition, this also allows the first inlet/outlet to be away from the battery module, helping to reduce the occurrence of damage to the battery module due to liquid leakage from the first inlet/outlet.

In some embodiments of this application, the first heat exchange flow passage further includes a second inlet/outlet section, where one end of the second inlet/outlet section is connected to the fourth heat exchange portion at an included angle, and the other end of the second inlet/outlet section is formed as a second inlet/outlet of the first heat exchange flow passage; the second inlet/outlet section extends along the second direction away from the first heat exchange section; and the fourth heat exchange portion extends along the first direction.

In the above technical solution, providing the second inlet/outlet section can facilitate connection to the external pipeline, allowing the heat exchange medium to enter or exit the first heat exchange flow passage to complete heat exchange for the battery cell. In addition, the heat exchange fluid entering or exiting the first heat exchange flow passage can also be guided, allowing the heat exchange fluid to enter or exit quickly, thereby improving the heat exchange velocity. Setting the second inlet/outlet section to extend along the second direction away from the first heat exchange section allows the pipeline arrangement of the first heat exchange flow passage to be more reasonable and facilitates connection to the external pipeline. In addition, this also allows the second inlet/outlet to be away from the battery module, helping to reduce the occurrence of damage to the battery module due to liquid leakage at the second inlet/outlet.

In some embodiments of this application, the first heat exchange member has one or more heat exchange flow passages; when a plurality of heat exchange flow passages are provided, the plurality of heat exchange flow passages are arranged at intervals along a first direction or wound around one another; and at least one heat exchange flow passage forms the first heat exchange flow passage.

In the above embodiment, the first heat exchange member is set to have one or more heat exchange flow passages, and the plurality of heat exchange flow passages are arranged at intervals along the first direction or wound around one another, so that the diversity of heat exchange flow passages can be improved, thereby improving the adaptability of the first heat exchange member, allowing the first heat exchange member to meet different needs of the battery, and thus improving the market competitiveness of the battery. In addition, the plurality of heat exchange flow passages are arranged in parallel, so that the plurality of heat exchange flow passages can exchange heat simultaneously, thereby reducing the heat exchange time of the first heat exchange member and improving the heat exchange efficiency.

In some embodiments of this application, the plurality of heat exchange flow passages are symmetrically arranged with respect to a center line of the first heat exchange member along a second direction; and the second direction and the first direction are arranged at an included angle.

In the above embodiment, the plurality of heat exchange flow passages are set to be symmetrically arranged with respect to the center line of the first heat exchange member along the second direction, so that the plurality of heat exchange flow passages can exchange heat with the battery module synchronously, improving the heat exchange efficiency. In addition, the temperature consistency of heat exchange regions corresponding to two symmetrically arranged portions of the battery module and the first heat exchange member can also be improved, thereby further improving the temperature equalization effect of the battery module.

In some embodiments of this application, the first heat exchange member includes: a first pipe portion, where an inlet end of the first pipe portion is formed as a first inlet/outlet of the heat exchange flow passage; a second pipe portion, where an outlet end of the second pipe portion is formed as a second inlet/outlet of the heat exchange flow passage; and an installation member, where the installation member is configured to be hermetically connected to the casing, and a through hole is formed on the installation member and is in communication with spaces on both sides of the installation member; and the first pipe portion and/or the second pipe portion passes through the through hole and is hermetically connected to the through hole.

In the above technical solution, after the installation member is sealed with the first pipe portion and the second pipe portion, the installation member is then sealed with the casing. This not only increases the structural strength at positions of the first pipe portion and the second pipe portion, but also reduces the labor and materials required for sealing. Thus, the production rate of the battery can be improved, and the labor cost for production of the battery can be reduced.

In some embodiments of this application, the battery further includes a protective plate, where the protective plate is disposed on a side of the first heat exchange member away from the casing; an outer peripheral surface of the protective plate is hermetically connected to the casing, jointly forming a third cavity configured to accommodate the first heat exchange member; the installation member has a cavity with an opening on one side; the through hole runs through a bottom wall of the cavity opposite to the opening; the installation member is adapted to be disposed between the casing and the protective plate; and an outer peripheral surface of the installation member is adapted to be hermetically connected to the casing and the protective plate.

In the above embodiments, setting the installation member as a cavity with an opening on one side can reduce the overall weight of the installation member, thereby reducing the overall weight of the entire battery, and facilitating the lightweight design of the battery. In addition, the installation member is adapted to be disposed between the casing and the protective plate, so that the bottom of the casing can isolate the first heat exchange member and a plurality of battery cells. Thus, when the first heat exchange member is damaged, no influence is generated on the plurality of battery cells, thereby reducing the maintenance cost of the battery.

In some embodiments of this application, the battery further includes a protective plate, where the protective plate is disposed on a side of the first heat exchange member away from the casing; an outer peripheral surface of the protective plate is hermetically connected to the casing, jointly forming a third cavity configured to accommodate the first heat exchange member; and the battery further includes a filler, and the filler is filled in a gap between the first heat exchange member and the third cavity.

In the above technical solution, setting the protective plate on the side of the first heat exchange member away from the casing can protect the first heat exchange member, reducing the probability of the first heat exchange member being impacted. The filler can isolate the first heat exchange member and the protective plate and provide a buffering effect when the protective plate is impacted, reducing the damage to the first heat exchange member when the protective plate is impacted, thereby improving the reliability of the first heat exchange member. Moreover, the filler is filled in the gap between the first heat exchange member and the third cavity, so that the filler can act on the first heat exchange member, the casing, and the protective plate, making the installation of the first heat exchange member in the third cavity more secure, reducing the probability of displacement of the first heat exchange member in the third cavity, and improving the stability of the first heat exchange member. Secondly, the filler can also provide thermal insulation, reducing the probability of heat exchange between the first heat exchange member and the protective plate as well as the external environment, so that the first heat exchange member can perform concentrated heat exchange with the battery cell in the accommodation cavity, helping to improve the heat exchange effect.

In some embodiments of this application, the filler is a filling layer and is disposed on the protective plate; the filling layer has a first top surface close to a side of the casing; the first heat exchange member has a second top surface close to a side of the casing; a height of the second top surface relative to the protective plate is greater than a height of the first top surface relative to the protective plate; and the battery further includes an adhesive member, and the adhesive member is disposed on the first top surface and the second top surface.

In the above technical solution, the second top surface of the first heat exchange member protrudes relative to the first top surface of the filling layer. Thus, a gap between the first top surface and the wall of the casing is larger than a gap between the second top surface and the wall of the casing. An adhesive thickness of the filling layer is larger than an adhesive thickness of the first heat exchange member. A larger adhesive thickness of the filling layer can improve the connection reliability between the filling layer and the casing, thereby improving the installation reliability of the first heat exchange member. A smaller adhesive thickness of the first heat exchange member can improve the connection reliability between the first heat exchange member and the casing, and can also reduce the obstruction to heat exchange of the first heat exchange member, improving the heat exchange effect of the first heat exchange member on the battery cell in the casing, thereby helping to improve the heat exchange efficiency of the first heat exchange member.

In some embodiments of this application, the casing is an integrally stamped component and includes a bottom wall and a peripheral wall.

In the above technical solution, the casing is set to be an integrally stamped component, and the bottom and peripheral side of the casing are closed, so that the casing has relatively high sealing performance. After the first heat exchange member is attached to an outer side of the casing, the sealing requirements for the casing can be reduced, helping to simplify the assembly process of the battery and reduce the manufacturing cost of the battery. Moreover, since the casing is an integrally stamped component, the casing has relatively high structural strength, and the probability of deformation and impact damage is relatively low, helping to improve the reliability of the battery. In addition, since the casing is an integrally stamped component, the casing has relatively high strength and a relatively small wall thickness, which can reduce the weight of the casing and increase the volumetric energy density of the battery.

In some embodiments of this application, the first heat exchange member includes a plurality of flat tubes in communication with each other sequentially, and an inner wall of each flat tube encloses a heat exchange flow passage.

In the above technical solution, since the casing is an integrally stamped component, on this basis, the first heat exchange member is set to include a plurality of flat tubes, the structural arrangement of the first heat exchange member and the casing may be more compact, and space utilization may be more efficient, helping to reduce the volume of the battery and increase the volumetric energy density of the battery. Secondly, the flat tubes also have good pressure resistance and can withstand a certain amount of pressure and load and provide good pipeline protection and structural support, thereby helping to improve the reliability of the first heat exchange member.

In some embodiments of this application, the flat tube includes one of a bent aluminum alloy tube, an aluminum alloy harmonica cold tube, a stamped aluminum alloy cold plate, and a brazed aluminum alloy cold plate. In this technical solution, the flat tube is set to include one of the bent aluminum alloy tube, the aluminum alloy harmonica cold tube, a stamped aluminum alloy cold plate, and a brazed aluminum alloy cold plate, so that various structures can be provided for the design of the flat tube, improving the design flexibility and reducing the manufacturing difficulty.

In some embodiments of this application, the battery further includes a second heat exchange member, where the second heat exchange member is disposed in the accommodation cavity and attached to at least one inner wall surface of the casing; and a structure of the second heat exchange member is the same as or different from a structure of the first heat exchange member.

In the above technical solution, the battery can not only exchange heat with one side of the battery cell in the casing through the first heat exchange member, but also exchange heat with the other side of the battery cell in the casing through the second heat exchange member. That is, the second heat exchange member and the first heat exchange member can cooperate with each other to exchange heat with the battery cells, thereby exchanging heat with more side surfaces of the battery cell, increasing heat exchange surfaces of the battery cell, and helping to improve the heat exchange efficiency and greatly improve the heat exchange effect.

In some embodiments of this application, the battery further includes a third heat exchange member, where the third heat exchange member is disposed in the accommodation cavity and configured to be arranged between two adjacent battery cells; and a structure of the third heat exchange member is the same as or different from a structure of the first heat exchange member.

In this technical solution, the first heat exchange member can exchange heat with same side surfaces of a plurality of battery cells in the casing, while the third heat exchange member can exchange heat with the other side surface between two adjacent battery cells. Thus, the third heat exchange member and the first heat exchange member cooperate with each other to exchange heat with two surfaces of the battery cells, thereby exchanging heat with more side surfaces of the battery cell, increasing heat exchange surfaces of the battery cell, and helping to improve the heat exchange efficiency and greatly improve the heat exchange effect.

In some embodiments of this application, the first heat exchange member includes a first heat exchange flow passage, where the first heat exchange flow passage includes a plurality of heat exchange portions; the plurality of heat exchange portions are arranged at intervals along a first direction and sequentially connected to each other; each heat exchange portion extends linearly along a second direction; the second direction and the first direction are arranged at an included angle; the battery includes at least one row of battery cells; the battery cells in each row are sequentially arranged along the second direction; and a side of the battery cells close to the first heat exchange member corresponds to at least two heat exchange portions.

In the above technical solution, the side of the battery cells close to the first heat exchange member corresponds to at least two heat exchange portions, so that a heat exchange area between the battery cells and the first heat exchange member can be increased, and the temperature of the battery cells can be adjusted quickly, thereby improving the heat exchange efficiency of the battery cells, making the temperature adjustment of the battery cells faster, and improving the heat exchange effect of the battery cells, and thus improving the reliability of the battery.

According to a second aspect, an embodiment of this application further provides an electric apparatus including the battery described above.

In the above technical solution, the battery has relatively high sealing performance and insulation performance and relatively high reliability. Therefore, the electric apparatus using this battery has relatively high electrical reliability. Moreover, since most of sealing and insulation structures of the casing of the battery can be omitted, the overall manufacturing cost of the battery can be effectively reduced, and the volumetric energy density of the battery can be increased. This can reduce the production cost of the electric apparatus and help to extend the service life.

### BRIEF DESCRIPTION OF DRAWINGS

In order to more clearly illustrate the technical solutions of the embodiments of this application, the accompanying drawings used in the embodiments will be briefly introduced below. It should be understood that the following accompanying drawings only show some embodiments of this application, and therefore should not be regarded as limiting the scope. For those of ordinary skill in the art, other related accompanying drawings can be obtained based on these accompanying drawings without creative effort.
FIG. 1 is a schematic structural diagram of a vehicle according to some embodiments of this application;
FIG. 2 is a first exploded view of a battery according to some embodiments of this application;
FIG. 3 is a first schematic three-dimensional structural diagram of a partial structure of a battery according to some embodiments of this application;
FIG. 4 is a first exploded view of a battery according to some embodiments of this application;
FIG. 5 is a first schematic diagram of an inner structure of a battery according to some embodiments of this application;
FIG. 6 is a second exploded view of a battery according to some embodiments of this application;
FIG. 7 is a second schematic three-dimensional structural diagram of a battery according to some embodiments of this application;
FIG. 8 is an enlarged schematic diagram of a partial structure of FIG. 7;
FIG. 9 is a top view of a partial structure of a battery according to some embodiments of this application;
FIG. 10 is a schematic diagram taken along line A-A in FIG. 9;
FIG. 11 is a partially enlarged schematic diagram of part I in FIG. 10;
FIG. 12 is a schematic diagram of positional distribution of a first heat exchange member and a plurality of rows of battery cells according to some embodiments of this application;
FIG. 13 is a first schematic three-dimensional structural diagram of a first heat exchange member according to some embodiments of this application;
FIG. 14 is a schematic partial structural diagram of part II in FIG. 13;
FIG. 15 is a second schematic three-dimensional structural diagram of a first heat exchange member according to some embodiments of this application from another angle;
FIG. 16 is a schematic partial structural diagram of FIG. 15;
FIG. 17 is a schematic assembly diagram of a protective plate and a first heat exchange member according to some embodiments of this application;
FIG. 18 is a partially enlarged schematic diagram of part III in FIG. 17;
FIG. 19 is a third exploded view of a battery according to some embodiments of this application;
FIG. 20 is a second schematic diagram of an inner structure of a battery according to some embodiments of this application;
FIG. 21 is a partially enlarged schematic diagram of part IV in FIG. 20;
FIG. 22 is a schematic structural diagram of a battery according to some embodiments of this application; and
FIG. 23 is a second exploded view of a battery according to some embodiments of this application.

### Reference signs:

1000. vehicle;
1. battery;
100. first heat exchange member; 100a. heat exchange region; 100b. second top surface; 100d. edge; 10. first heat exchange flow passage; 11. first heat exchange section; 111. first heat exchange portion; 112. first bent portion; 12. second heat exchange section; 120. U-shaped region; 121. second heat exchange portion; 122. third heat exchange portion; 123. second bent portion; 124. third bent portion; 125. fourth heat exchange portion; 126. sixth bent portion; 13. third heat exchange section; 14. fourth bent portion; 15. first inlet/outlet section; 17. second inlet/outlet section; 18. seventh bent portion; 193. installation member; 191. first pipe portion; 192. second pipe portion; 193. installation member; 1931. first plate; 1932. second plate; 1933. mounting plate; 1933a. through hole; 1934. stopper; 1934a. inclined surface; 20. fluid collector;
200. casing; 101a. third cavity; 1011. first casing main body; 1012. second casing main body; 21. accommodation cavity; 21a. first cavity; 21b. second cavity; 22. casing body; 23. bottom plate; 24. top plate; 25. fixing member; 27. protective plate; 28. filler; 28a. first top surface; 28b. mounting groove; 29. adhesive member; 200b. bottom wall; 200c. peripheral wall; 2011. first casing wall; 2011a. first groove; 2012. protrusion;
102. battery cell; 103. beam body; 103a. second groove;
300. second heat exchange member; 400. third heat exchange member;
2. controller; 3. motor; X. first direction; Y. second direction; and Z. third direction.

### DESCRIPTION OF EMBODIMENTS

In order to make the objectives, technical solutions, and advantages of the embodiments of this application clearer, the technical solutions in the embodiments of this application will be clearly described below with reference to the accompanying drawings in the embodiments of this application. Apparently, the described embodiments are only some rather than all of the embodiments of this application. All other embodiments obtained by those of ordinary skill in the art based on the embodiments in this application without creative efforts shall fall within the protection scope of this application.

Unless otherwise defined, all technical and scientific terms used in this application have the same meaning as commonly understood by those skilled in the art to which this application belongs; the terms used in the description of this application are only for the purpose of describing specific embodiments and are not intended to limit this application; the terms "include", "comprise", "have", and any variations thereof in the description and claims of this application and the above description of the accompanying drawings are intended to cover non-exclusive inclusions. The terms "first", "second", and the like in the description and claims of this application or the above accompanying drawings are used to distinguish different objects and are not used to describe a specific order or primary-secondary relationship.

References in this application to "embodiment" mean that the particular features, structures, or characteristics described in connection with the embodiment may be included in at least one embodiment of this application. The appearance of this phrase in various places throughout the specification does not necessarily refer to the same embodiment, nor is it an independent or alternative embodiment that is mutually exclusive with other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Those of ordinary skill in the art can understand specific meanings of these terms in the embodiments of this application as suitable to specific situations.

In this application, the term "and/or" is merely a description of an associative relationship between associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference numerals represent the same components, and for brevity, detailed descriptions of the same components are omitted in different embodiments. It should be understood that, as shown in the accompanying drawings, sizes such as thicknesses, lengths, and widths of various components and sizes such as overall thicknesses, lengths, and widths of integrated apparatuses in the embodiments of this application are merely for illustrative purposes and should not constitute any limitations on this application.

"A plurality of" in this application refers to two or more (including two).

A battery mentioned in the embodiments of this application refers to a single physical module that includes one or more battery cells to provide higher voltage and capacity. For example, the battery mentioned in this application may include a battery module, a battery pack, or the like. A battery typically includes a casing for encapsulating one or more battery cells or a plurality of battery modules. The casing can prevent liquid or other foreign matters from affecting the charging or discharging of the battery cell.

In this application, the battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of this application. The battery cell may be cylindrical, flat, cuboid, or of other shapes, which is not limited in the embodiments of this application either. Battery cells are typically divided into three types by packaging methods: cylindrical battery cells, prismatic battery cells, and pouch battery cells, which is not limited in the embodiments of this application either.

A battery cell includes a housing, an electrode assembly, and an electrolyte. The housing is configured to accommodate the electrode assembly and the electrolyte. The electrode assembly includes a positive electrode plate, a negative electrode plate, and a separator. The battery cell mainly operates by the movement of metal ions between the positive electrode plate and the negative electrode plate. The positive electrode plate includes a positive electrode current collector and a positive electrode active material layer. The positive electrode active material layer is applied on a surface of the positive electrode current collector. The positive electrode current collector not coated with the positive electrode active material layer protrudes from the positive electrode current collector coated with the positive electrode active material layer. The positive electrode current collector not coated with the positive electrode active material layer serves as a positive electrode tab. Taking a lithium-ion battery as an example, the material of the positive electrode current collector may be aluminum. A positive electrode active material may be lithium cobalt oxide, lithium iron phosphate, ternary lithium, lithium manganese oxide, or the like. The negative electrode plate includes a negative electrode current collector and a negative electrode active material layer. The negative electrode active material layer is applied on a surface of the negative electrode current collector. The negative electrode current collector not coated with the negative electrode active material layer protrudes from the negative electrode current collector coated with the negative electrode active material layer. The negative electrode current collector not coated with the negative electrode active material layer serves as a negative electrode tab. The material of the negative electrode current collector may be copper. A negative active material may be carbon, silicon, or the like. To ensure that a large current can pass without melting, a plurality of positive electrode tabs are provided and stacked together, and a plurality of negative electrode tabs are provided and stacked together.

The material of the separator may be PP (polypropylene, polypropylene), PE (polyethylene, polyethylene), or the like. In addition, the electrode assembly may be a wound structure or a stacked structure, and the embodiments of this application are not limited thereto.

In recent years, new energy vehicles have made great strides. In the field of electric vehicles, traction batteries, as power sources of electric vehicles, play an irreplaceable and important role. A battery includes a casing and a plurality of battery cells accommodated in the casing. As core components of new energy vehicles, batteries have high requirements in terms of both safety and service life. To ensure the service life of the battery, a cold plate is integrated into the casing to cool the battery in the prior art. However, the sealing and liquid leakage issues of the cold plate affect the further improvement of the reliability and the further extension of the service life of the battery.

In a typical battery, in order to achieve a good thermal management effect of the battery and reduce the production cost, a casing may include two parts: a frame and a cold plate. The cold plate is integrated with the frame and used as a wall of the casing, so that the cold plate directly comes into contact with a battery cell, thereby improving the heat exchange effect of the battery, better regulating the temperature of the battery, and reducing the cost of the casing. However, since the cold plate is used as the wall of the casing, the sealing requirements between the cold plate and the frame are relatively high, and there is a high probability of sealing failure. Moreover, the connection between the frame and the cold plate also has reliability issues, which affects the structural strength of the casing, thus affecting the reliability of the battery.

Based on the above considerations, in order to solve the issues in related art where the casing of the battery has difficulty in sealing, is prone to sealing failure, and has poor structural strength, affecting the reliability of the battery, this application designs a battery. The battery includes a casing and a first heat exchange member, where the casing has an accommodation cavity; and the first heat exchange member is attached to an outer side of a wall of the casing facing away from the accommodation cavity and configured to exchange heat with a battery cell.

In a battery with this structure, on the one hand, since the first heat exchange member is attached to the outer side of the wall of the casing facing away from the accommodation cavity, the requirements for sealing and insulation on a side of the casing close to the first heat exchange member can be reduced, thereby reducing the probability of safety hazards of the battery caused by liquid leakage of the first heat exchange member and improving the reliability of the battery. Moreover, since most of sealing and insulation structures are omitted, the manufacturing cost of the battery can also be reduced, and a volumetric energy density of the battery can be increased. On the other hand, the casing directly bears the weight of a battery cell, and the first heat exchange member does not directly come into contact with the battery cell and does not directly undertake the task of supporting the battery cell. Therefore, the first heat exchange member bears less load and stress, which can improve the reliability of the first heat exchange member, thereby further improving the reliability of the battery. In addition, the first heat exchange member is located on an outer side of the casing, which can protect a bottom wall of the casing, improving the reliability of the casing, thereby further improving the reliability of the battery.

The battery disclosed in the embodiments of this application can be used for, but is not limited to, electronic devices, power devices, vehicles, and industrial devices. Exemplarily, the electronic devices may be, but are not limited to, computers, servers, and televisions. The power devices may be, but are not limited to, power generators, transformers, and batteries. The industrial devices may be, but are not limited to, machining devices, metallurgical devices, and chemical devices. This is conducive to expanding the application range of the battery.

An embodiment of this application provides an electric apparatus using a battery as a power source. The electric apparatus may be, but is not limited to, a mobile phone, a tablet, a laptop computer, an electric toy, an electric tool, an electric bicycle, an electric vehicle, a ship, or a spacecraft. The electric toy may include a fixed or mobile electric toy, such as a game console, an electric toy car, an electric toy boat, and an electric toy aircraft. The spacecraft may include airplanes, rockets, space shuttles, and spacecraft.

For ease of description, an electric apparatus according to an embodiment of this application being a vehicle 1000 is used as an example for description of the following embodiments.

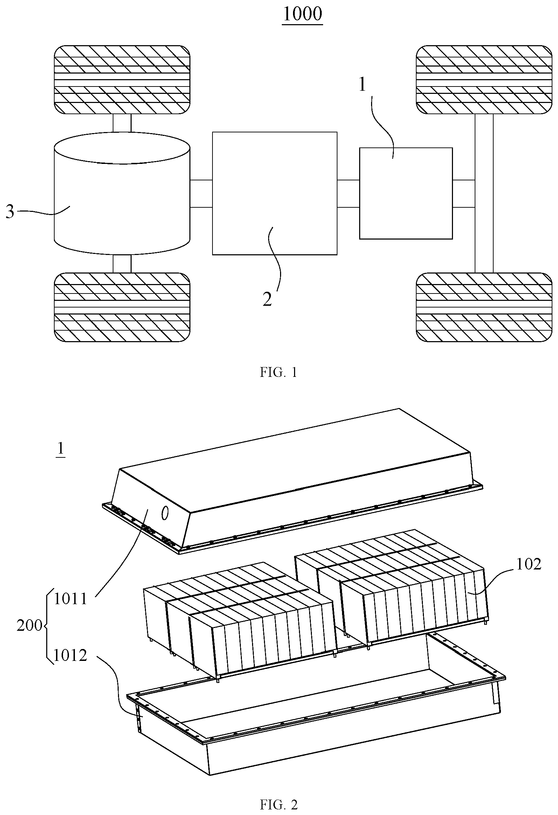

Referring to FIG. 1, FIG. 1 is a schematic structural diagram of a vehicle 1000 according to some embodiments of this application. The vehicle 1000 may be a fuel vehicle, a gas vehicle, or a new energy vehicle. The new energy vehicle may be a battery electric vehicle, a hybrid electric vehicle, or an extended-range electric vehicle. The vehicle 1000 is provided with a battery 1 inside. The battery 1 may be arranged at the bottom, front, or rear of the vehicle 1000. The battery 1 may be configured to supply power to the vehicle 1000. For example, the battery 1 can serve as an operating power source of the vehicle 1000. The vehicle 1000 may further include a controller 2 and a motor 3. The controller 2 is configured to control the battery 1 to supply power to the motor 3, for example, to satisfy power needs of start, navigation, and driving of the vehicle 1000.

In some embodiments of this application, the battery 1 can not only serve as the operating power source of the vehicle 1000, but also as a driving power source of the vehicle 1000, replacing or partially replacing fuel or natural gas to provide driving traction for the vehicle 1000.

Referring to FIG. 2, FIG. 2 is an exploded view of a structure of a battery 1 according to some embodiments of this application. The battery 1 includes a casing 200 and a plurality of battery cells 102. The battery cells 102 are configured to be accommodated in the casing 200. The casing 200 is configured to provide an assembly space for the battery cells 102. The casing 200 may adopt various structures. In some embodiments, the casing 200 may include a first casing main body 1011 and a second casing main body 1012. The first casing main body 1011 and the second casing main body 1012 fit each other. The first casing main body 1011 and the second casing main body 1012 jointly define the assembly space for accommodating the battery cells 102. The second casing main body 1012 may be a hollow structure with an opening at one end. The first casing main body 1011 may be a plate-like structure. The first casing main body 1011 covers an opening side of the second casing main body 1012, so that the first casing main body 1011 and the second casing main body 1012 jointly define the assembly space. The first casing main body 1011 and the second casing main body 1012 may alternatively each be a hollow structure with an opening at one side. The opening side of the first casing main body 1011 is engaged with the opening side of the second casing main body 1012. Certainly, the casing 101 formed by the first casing main body 1011 and the second casing main body 1012 may be of various shapes, such as a cylindrical shape and a cuboid shape.

In the battery 1, the plurality of battery cells 102 may be connected in series, parallel, or series-parallel, where being connected in series-parallel means a combination of series and parallel connections of the plurality of battery cells 102. The plurality of battery cells 102 may be directly connected in series, in parallel, or series-parallel, and then an entirety formed by the plurality of battery cells 102 is accommodated in the casing 101. Certainly, the battery 1 may alternatively be formed by a plurality of battery cells 102 being connected in series, parallel or series-parallel first to form a battery module and then a plurality of battery modules being connected in series, parallel or series-parallel to form an entirety which is accommodated in the casing 101. The battery 1 may further include other structures. For example, the battery 1 may further include a busbar configured to implement an electrical connection between the plurality of battery cells 102.

Referring to FIG. 2, FIG. 2 is a schematic partial structural diagram of a battery 1 according to some embodiments of this application. The battery 1 includes a plurality of rows of battery cells 102, The plurality of rows of battery cells 102 are arranged along a length direction of the casing 101, and each row of battery cells 102 include a plurality of battery cells 102 arranged along a width direction of the casing 101. Alternatively, the plurality of rows of battery cells 102 are arranged along the width direction of the casing 101, and each row of battery cells 102 include a plurality of battery cells 102 arranged along the length direction of the casing 101.

Each battery cell 102 may be a secondary battery or a primary battery, or may be a lithium-sulfur battery, a sodium-ion battery, or a magnesium-ion battery, but is not limited thereto. The battery cell 102 may be cylindrical, flat, cuboid, or of other shapes. Exemplarily, in FIG. 2, the shape of the battery cell 102 is cuboid.

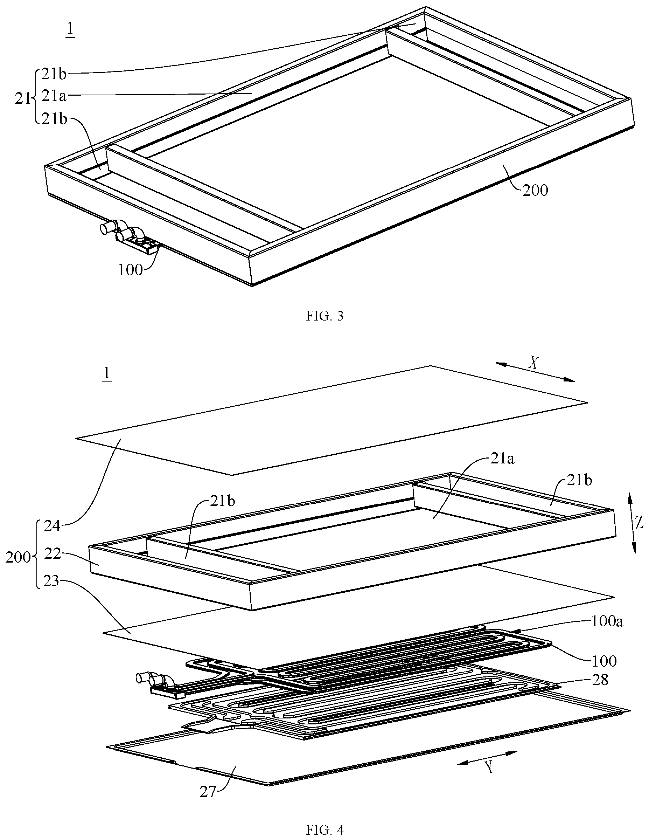

According to a first aspect, referring to FIG. 3, FIG. 3 is a schematic three-dimensional structural diagram of a battery 1 according to an embodiment of this application. An embodiment of this application provides a battery 1. The battery 1 includes a casing 200 and a first heat exchange member 100. The casing 200 has an accommodation cavity 21. The first heat exchange member 100 is attached to an outer side of a wall of the casing 200 facing away from the accommodation cavity 21 and configured to exchange heat with a battery cell 102.

The casing 200 may refer to a housing of the battery 1, includes a space for accommodating the battery cell 102, and can provide protection and support structures. The casing 200 may be typically made of hard materials (including but not limited to metal, plastic, and wood), and has appropriate strength and stability to withstand the weight of objects and external pressure.

The accommodation cavity 21 may refer to a space formed inside the casing 200 for accommodating the battery cell 102.

The first heat exchange member 100 may refer to an apparatus or a component configured to transfer heat during a heat exchange process. The first heat exchange member 100 is typically configured to transfer heat from one medium to another medium, achieving the transfer and utilization of heat. Exemplarily, the first heat exchange member 100 may be, but is not limited to, a radiator, a cold plate, or a cold tube.

In the above solution, the first heat exchange member 100 is attached to the outer side of the wall of the casing 200 facing away from the accommodation cavity 21, which can be understood as the first heat exchange member 100 being arranged on the outer side of the casing 200, and the first heat exchange member 100 being able to be attached to any one of a top wall, a bottom wall, and a peripheral wall of the casing 200. The peripheral wall may refer to a plurality of side walls enclosing the peripheral wall of the casing 200, and the number of side walls may be, but is not limited to, three, four, or five. For example, when the casing 200 is a cuboid, the peripheral wall may include four side walls. The first heat exchange member 100 may be attached to one or more side walls. Exemplarily, referring to FIG. 3 and FIG. 4, the first heat exchange member 100 may be attached to an outer side of the bottom wall of the casing 200.

In the above solution, since the first heat exchange member 100 is disposed on the outer side of the casing 200, the first heat exchange member 100 does not directly come into contact with the battery cell 102 in the accommodation cavity 21. The wall of the casing 200 can isolate the first heat exchange member 100 and the battery cell 102. This can eliminate most of sealing and insulation structures on a side of the casing 200 close to the first heat exchange member 100, reducing the sealing and insulation requirements of the casing 200, and simplifying the manufacturing process of the battery 1, thereby reducing the cost of the battery 1 and further reducing the manufacturing cost of the battery 1. Moreover, the first heat exchange member 100 exchanges heat with the battery cell 102 in the accommodation cavity 21 through the wall of the casing 200, thereby reducing the probability of leakage of a heat exchange fluid of the first heat exchange member 100 into the accommodation cavity 21, which otherwise causes safety issues for the battery 1, and thus improving the reliability of the battery 1.

On the other hand, since the first heat exchange member 100 is located on the outer side of the casing 200, the load and stress generated by the battery cell 102 mainly act on the wall of the casing 200, and the first heat exchange member 100 does not directly come into contact with the battery cell 102. Therefore, the first heat exchange member 100 bears less load and stress, which can reduce the probability of damage to the first heat exchange member 100, improve the reliability of the first heat exchange member 100, and helps the first heat exchange member 100 to perform stable and reliable heat exchange for the battery 1, thereby improving the reliability of the battery 1. Moreover, the first heat exchange member 100 is located on the outer side of the casing 200, which can isolate the bottom wall of the casing 200 from the external environment. When the bottom of the casing 200 is impacted, the first heat exchange member 100 can play a protective role and bear the impact before the bottom wall of the casing 200, reducing the impact force on the bottom wall of the casing 200, and reducing the probability of damage and rupture of the bottom wall of the casing 200, thereby reducing the probability of damage to the battery cell 102 in the casing 200 due to impact, and further improving the reliability of the battery 1.

In the above technical solution, on the one hand, since the first heat exchange member 100 is attached to the outer side of the wall of the casing 200 facing away from the accommodation cavity 21, the requirements for sealing and insulation on the side of the casing 200 close to the first heat exchange member 100 can be reduced, thereby reducing the probability of safety hazards of the battery 1caused by liquid leakage of the first heat exchange member 100 and improving the reliability of the battery 1. Moreover, since most of sealing and insulation structures are omitted, the manufacturing cost of the battery 1 can also be reduced, and a volumetric energy density of the battery can be increased. On the other hand, the casing 200 directly bears the weight of the battery cell 102, and the first heat exchange member 100 does not directly come into contact with the battery cell 102 and does not directly undertake the task of supporting the battery cell 102. Therefore, the first heat exchange member 100 bears less load and stress, which can improve the reliability of the first heat exchange member 100, thereby further improving the reliability of the battery 1. In addition, the first heat exchange member 100 is located on the outer side of the casing 200, which can protect the bottom wall of the casing, improving the reliability of the casing 200, thereby further improving the reliability of the battery 1.

In some embodiments of this application, referring to FIG. 3 and FIG. 4, the accommodation cavity 21 includes a first cavity 21a. The first cavity 21a is configured to accommodate the battery cell 102. The first heat exchange member 100 has a heat exchange region 100a configured for heat exchange. An area of a projected contour of an orthographic projection of the heat exchange region 100a on a side surface of the casing 200 close to the first heat exchange member 100 is greater than or equal to an area of a projected surface of an orthographic projection of the first cavity 21a on the side surface of the casing 200 close to the first heat exchange member 100, and is less than an area of the side surface of the casing 200 close to the first heat exchange member 100.

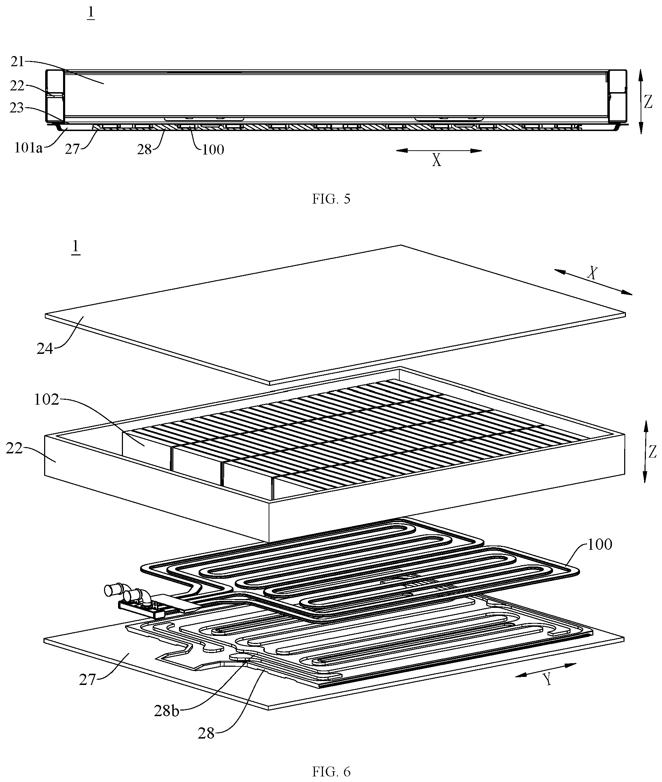

The first cavity 21a may refer to a partial space of the accommodation cavity 21 used to accommodate the battery cell 102. The first cavity 21a can be used to accommodate one or more battery cells 102. When a plurality of battery cells 102 are provided, the plurality of battery cells 102 can be arranged in one or more rows in the first cavity 21a, and a plurality of battery cells 102 are provided in each row. Exemplarily, referring to FIG. 6, the battery cells 102 are arranged in a plurality of rows along a second direction Y in the first cavity 21a, and three battery cells 102 in each row may be arranged along a first direction X.

The heat exchange region 100a may refer to a specific region surface of the first heat exchange member 100 where heat is transferred during the heat exchange process, which is a specific portion designed and arranged on the first heat exchange member 100. The first heat exchange member 100 can exchange heat with the battery cell 102 in the first cavity 21a through the heat exchange region 100a, thereby achieving a heat exchange effect. Exemplarily, when the first heat exchange member 100 is a cold plate, the heat exchange region 100a may refer to a region formed by a cold plate surface of the cold plate corresponding to the battery cell 102 in the first cavity 21a. When the first heat exchange member 100 is a cold tube, the heat exchange region 100a may refer to a region of the cold tube corresponding to all battery cells 102.

In the above exemplary solution, the area of the projected contour of the orthographic projection of the heat exchange region 100a on the side surface of the casing 200 close to the first heat exchange member 100 may be greater than the area of the projected surface of the orthographic projection of the first cavity 21a on the side surface of the casing 200 close to the first heat exchange member 100, and less than the area of the side surface of the casing 200 close to the first heat exchange member 100. Alternatively, the area of the projected contour of the orthographic projection of the heat exchange region 100a on the side surface of the casing 200 close to the first heat exchange member 100 may be equal to the area of the projected surface of the orthographic projection of the first cavity 21a on the side surface of the casing 200 close to the first heat exchange member 100, and less than the area of the side surface of the casing 200 close to the first heat exchange member 100.

In the above technical solution, the heat exchange region 100a can cover a region where the first cavity 21a is located, but does not exceed a corresponding side surface area of the casing 200. This allows the size of the heat exchange region 100a not to be too large on the premise that the heat exchange region 100a performs heat exchange for the battery cell 102 in the first cavity 21a, which is conducive to reducing the size of the first heat exchange member 100, reducing material consumption of the first heat exchange member 100, further reducing the manufacturing cost of the battery 1, and reducing the weight of the casing 200, thereby increasing the volumetric energy density of the battery 1. Moreover, the area of the projected contour of the orthographic projection of the heat exchange region 100a on the side surface of the casing 200 close to the first heat exchange member 100 is less than the area of the side surface of the casing 200 close to the first heat exchange member 100, which can also reduce the probability of the heat exchange region 100a coming into contact with other regions of the casing 200 that do not require heat exchange, reducing the influence of portions of the wall of the casing 200 other than a portion corresponding to the first cavity 21a on the battery cell 102. This allows the heat exchange region 100a to perform concentrated heat exchange in the region where the first cavity 21a is located, which is conducive to improving the heat exchange efficiency in the region where the first cavity 21a is located, thereby improving the reliability of the battery 1.

In some embodiments of this application, referring to FIG. 3 and FIG. 4, the accommodation cavity 21 includes a second cavity 21b configured to accommodate an electrical component, where an orthographic projection of the second cavity 21b on the side surface of the casing 200 close to the first heat exchange member 100 is located outside the orthographic projection of the heat exchange region 100a on the side surface of the casing 200 close to the first heat exchange member 100.

The second cavity 21b may refer to a partial space of the accommodation cavity 21 used to accommodate the electrical component. The electrical component may include, but is not limited to, a battery management system (BMS), a battery disconnect unit (BDU), a current sensing component, and a temperature detection component.

In the above technical solution, the orthographic projection of the second cavity 21b on the side surface of the casing 200 close to the first heat exchange member 100 is located outside the orthographic projection of the heat exchange region 100a on the side surface of the casing 200 close to the first heat exchange member 100, so that the heat exchange region 100a does not need to cover a region where the second cavity 21b for accommodating the electrical component is located. This can effectively reduce the size of the heat exchange region 100a and is conducive to further reducing the size of the first heat exchange member 100, reducing the material consumption of the first heat exchange member 100, and reducing the manufacturing cost of the first heat exchange member 100, thereby further reducing the manufacturing cost of the battery 1. In addition, this is also conducive to reducing the weight of the casing 200.

In some embodiments of this application, referring to FIG. 4 and FIG. 6, the casing 200 includes a casing body 22, a bottom plate 23, and a top plate 24. The bottom plate 23 and the top plate 24 are connected to the casing body 22. The first heat exchange member 100 is attached to an outer side of the bottom plate 23 and/or an outer side of the top plate 24.

The casing body 22 may refer to a body portion of the casing 200, which may refer to a frame structure with openings at both ends. The casing body 22 may include, but is not limited to, a frame structure and a shell structure formed by a plurality of plates.

The bottom plate 23 may refer to a plate disposed at the bottom of the casing 200 and configured to close a bottom opening of the casing body 22.

The top plate 24 may refer to a plate disposed at the top of the casing 200 and configured to close a top opening of the casing body 22.

In the above solution, one first heat exchange member 100 may be provided, where the first heat exchange member 100 may be attached to the outer side of the bottom plate 23, or the first heat exchange member 100 may be attached to the outer side of the top plate 24. A plurality of first heat exchange members 100 may alternatively be provided, where one of the plurality of first heat exchange members 100 may be attached to the outer side of the bottom plate 23, and another may be attached to the outer side of the top plate 24.

In the above technical solution, areas of the bottom plate 23 and the top plate 24 are larger than an area of a side wall of the casing body 22, and the bottom plate 23 and the top plate 24 come into contact with a large number of battery cells 102 in the first cavity 21a. The first heat exchange member 100 is attached to the outer side of the bottom plate 23 and/or the outer side of the top plate 24, so that the first heat exchange member 100 can exchange heat with more battery cells 102, providing a larger heat exchange surface, thereby better regulating the overall temperature of the battery 1, improving the heat exchange efficiency, and improving the heat exchange uniformity.

In some embodiments of this application, the casing body 22, the bottom plate 23, and the top plate 24 are steel components or aluminum components.

In the above technical solution, steel components have relatively high strength and relatively inexpensive. Setting the casing body 22, the bottom plate 23, and the top plate 24 as steel components allows the casing 200 to have both relatively high structural strength and reduced cost, thereby further reducing the manufacturing costs of the casing 200 and the battery 1. Aluminum components have the advantages of light weight, good thermal conductivity, and good corrosion resistance. Therefore, setting the casing body 22, the bottom plate 23, and the top plate 24 as aluminum components can make the casing body 22, the bottom plate 23, and the top plate 24 relatively light, reducing the assembly difficulty, improving the operating efficiency, and reducing the overall weight of the casing 200. Moreover, heat from the first cavity 21a can be better transferred to the first heat exchange member 100, which is conducive to improving the heat exchange efficiency, enhancing the heat exchange effect, alleviating chemical corrosion of the casing 200, and extending the service life of the battery 1. In addition, when the casing body 22, the bottom plate 23, and the top plate 24 are aluminum components, the casing body 22, the bottom plate 23, and the top plate 24 can be easily formed through an integral stamping manner, which can reduce the manufacturing cost and improve the manufacturing efficiency.

In some embodiments of this application, when the casing body 22, the bottom plate 23, and the top plate 24 are steel components, a thickness of the casing body 22 is 0.8 mm to 2.0 mm.

That is, the thickness of the casing body 22 may be, but is not limited to, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, or 2.0 mm.

When the casing body 22, the bottom plate 23, and the top plate 24 are steel components, if the thickness of the casing body 22 is less than 0.8 mm, the strength of the casing body 22 is relatively poor, affecting the strength of the casing 200. The probability of damage to the casing 200 is relatively high, which in turn increases the probability of damage to the battery cell 102 inside the casing 200, thus affecting the reliability of the battery 1. If the thickness of the casing body 22 is greater than 2.0 mm, the casing body 22 has relatively high strength but is relatively thick, which increases the weight of the casing body 22 and thus increases the weight of the casing 200. This is not conducive to increasing the energy density of the battery 1.

In the above technical solution, when the casing body 22, the bottom plate 23, and the top plate 24 are steel components, the thickness of the casing body 22 is set to be within the range of 0.8 mm to 2.0 mm. This allows the casing body 22 to have relatively high strength, helping to improve the strength of the casing 200, thereby helping to improve the overall reliability of the battery 1. Moreover, this can also make the weight of the casing body 22 appropriate, allowing the casing body 22 to have a relatively light weight, thereby helping to reduce the weight of the casing 200 and increase the energy density of the battery 1.

In some embodiments of this application, thicknesses of the bottom plate 23 and the top plate 24 are 0.4 mm to 1.2 mm.

That is, the thicknesses of the bottom plate 23 and the top plate 24 may be, but are not limited to, 0.4 mm, 0.5 mm, 0.6 mm, 0.7 mm, 0.8 mm, 0.9 mm, 1.0 mm, 1.1 mm, or 1.2 mm.

When the casing body 22, the bottom plate 23, and the top plate 24 are steel components, if the thicknesses of the bottom plate 23 and the top plate 24 are less than 0.4 mm, the strength of the bottom plate 23 and the top plate 24 is relatively poor, affecting the strength of the casing 200. The probability of damage to the casing 200 is relatively high, which in turn increases the probability of damage to the battery cell 102 inside the casing 200, thus affecting the reliability of the battery 1. If the thicknesses of the bottom plate 23 and the top plate 24 are greater than 1.5 mm, the bottom plate 23 and the top plate 24 have relatively high strength but are relatively thick, which increases the weights of the bottom plate 23 and the top plate 24 and thus increases the weight of the casing 200. This is not conducive to increasing the energy density of the battery 1.

In the above technical solution, when the casing body 22, the bottom plate 23, and the top plate 24 are steel components, the thicknesses of the bottom plate 23 and the top plate 24 are set to be within the range of 0.4 mm to 1.2 mm. This allows the bottom plate 23 and the top plate 24 to have relatively high strength, helping to improve the strength of the casing 200, thereby helping to improve the overall reliability of the battery 1. Moreover, this can also make the weights of the bottom plate 23 and the top plate 24 appropriate, allowing the bottom plate 23 and the top plate 24 to have relatively light weights, thereby helping to reduce the weight of the casing 200 and increase the energy density of the battery 1.

In some embodiments of this application, when the casing body 22, the bottom plate 23, and the top plate 24 are aluminum components, a thickness of the casing body 22 is 1.0 mm to 5.0 mm.

Compared to steel, aluminum has lower strength but lighter weight. Therefore, when the casing body 22, the bottom plate 23, and the top plate 24 are aluminum components, the thickness of the casing body 22 is greater than that when the casing body 22, the bottom plate 23, and the top plate 24 are steel components. When the casing body 22, the bottom plate 23, and the top plate 24 are aluminum components, the thickness of the casing body 22 may be, but is not limited to, 1.0 mm, 1.2 mm, 1.4 mm, 1.5 mm, 1.6 mm, 1.8 mm, 2.0 mm, 2.2 mm, 2.4 mm, 2.5 mm, 2.6 mm, 2.8 mm, 3.0 mm, 3.2 mm, 3.4 mm, 3.5 mm, 3.6 mm, 3.8 mm, 4.0 mm, 4.2 mm, 4.4 mm, 4.5 mm, 4.6 mm, 4.8 mm, or 5.0 mm.

It can be understood that when the casing body 22, the bottom plate 23, and the top plate 24 are aluminum components, if the thickness of the casing body 22 is less than 1.0 mm, the strength of the casing body 22 is relatively poor, affecting the strength of the casing 2001. The probability of damage to the casing 200 is relatively high, which in turn increases the probability of damage to the battery cell 102 inside the casing 200, thus affecting the reliability of the battery 1. If the thickness of the casing body 22 is greater than 5.0 mm, the casing body 22 has high strength but is relatively thick, which increases the weight of the casing body 22 and thus increases the weight of the casing 200. This is not conducive to increasing the energy density of the battery 1.

In the above technical solution, when the casing body 22, the bottom plate 23, and the top plate 24 are aluminum components, the thickness of the casing body 22 is set to be within the range of 1.0 mm to 5.0 mm. This allows the casing body 22 to have relatively high strength, helping to improve the strength of the casing 200, thereby helping to improve the overall reliability of the battery 1. Moreover, this can also make the weight of the casing body 22 appropriate, allowing the casing body 22 to have a relatively light weight, thereby helping to reduce the weight of the casing 200 and increase the energy density of the battery 1.

In some embodiments of this application, thicknesses of the bottom plate 23 and the top plate 24 are 1.0 mm to 3.0 mm.

When the casing body 22, the bottom plate 23, and the top plate 24 are aluminum components, if the thicknesses of the bottom plate 23 and the top plate 24 are less than 1.0 mm, the strength of the bottom plate 23 and the top plate 24 is relatively poor, affecting the strength of the casing 200. The probability of damage to the casing 200 is relatively high, which in turn increases the probability of damage to the battery cell 102 inside the casing 200, thus affecting the reliability of the battery 1. If the thicknesses of the bottom plate 23 and the top plate 24 are greater than 3.0 mm, the bottom plate 23 and the top plate 24 have relatively high strength but are relatively thick, which increases the weight of the bottom plate 23 and the top plate 24 and thus increases the weight of the casing 200. This is not conducive to increasing the energy density of the battery 1.

In the above technical solution, when the casing body 22, the bottom plate 23, and the top plate 24 are aluminum components, the thicknesses of the bottom plate 23 and the top plate 24 are set to be within the range of 1.0 mm to 3.0 mm. This allows the bottom plate 23 and the top plate 24 to have relatively high strength, helping to improve the strength of the casing 200, thereby helping to improve the overall reliability of the battery 1. Moreover, this can also make the weights of the bottom plate 23 and the top plate 24 appropriate, allowing the bottom plate 23 and the top plate 24 to have relatively light weights, helping to reduce the weight of the casing 200 and increase the energy density of the battery 1.

In some embodiments of this application, both the bottom plate 23 and the top plate 24 are welded to the casing body 22. In this technical solution, the bottom plate 23 and the top plate 24 are welded to the casing body 22. On the one hand, the welding connection manner has a lower cost compared to an adhesive-applied connection manner and a fastener connection manner, so that the cost can be reduced. On the other hand, the welding connection manner has relatively high reliability, which can improve the connection strength between the bottom plate 23 and the top plate 24 and the casing body 22, thereby improving the reliability of the entire casing 200.

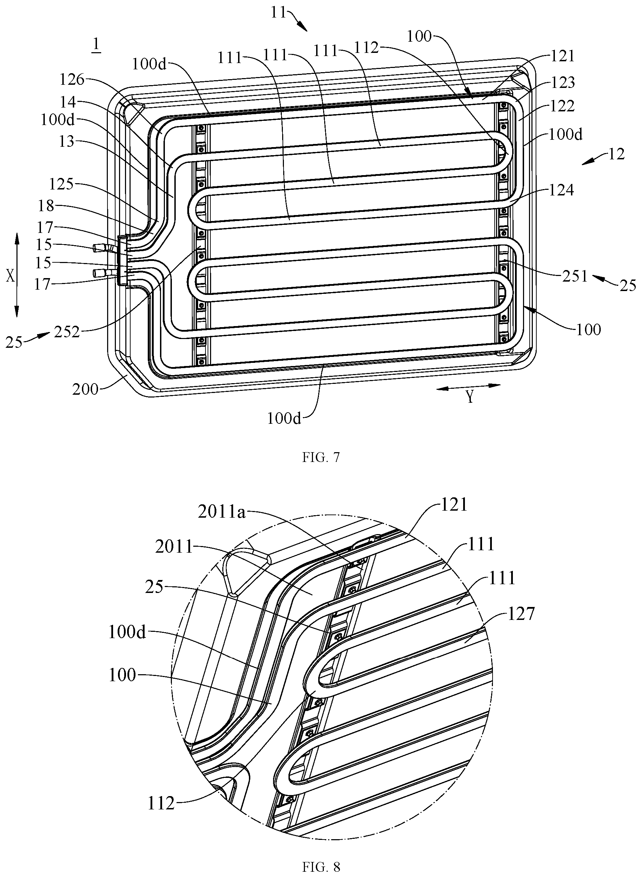

In some embodiments of this application, referring to FIG. 7, the battery 1 further includes a fixing member 25. The fixing member 25 is disposed on the casing 200. The fixing member 25 is disposed close to at least one edge 100d of the first heat exchange member 100 and configured to fixedly connect the first heat exchange member 100 and the casing 200.

The fixing member 25 may refer to a part, a component, or an apparatus configured to connect the first heat exchange member 100 and the casing 200. The fixing member 25 may be, but is not limited to, a mounting bracket or a hook. The connection manner between the fixing member 25 and the casing 200 may be, but is not limited to, welding, adhesive bonding, riveting, and snap-fitted connection.

Exemplarily, when the fixing member 25 is a mounting bracket, the first heat exchange member 100 can be fixed to the mounting bracket through a support plate in a bolt connection manner. When the fixing member 25 is a hook, the first heat exchange member 100 can be directly hooked onto the hook.

The "edge 100d" may refer to a boundary or an edge of a peripheral contour of the first heat exchange member 100. Exemplarily, when the first heat exchange member 100 is rectangular, the edge 100d may refer to four sides enclosing the rectangular first heat exchange member 100.

In the above embodiment, the first heat exchange member 100 can be connected to the wall of the casing 200 through adhesive bonding, and a portion where the at least one edge 100d of the first heat exchange member 100 is located is fixed to the casing 200 by the fixing member 25. Referring to FIG. 7, the shape of the first heat exchange member 100 may be rectangular. The first heat exchange member 100 has four edges 100d. The four edges 100d are respectively located at both ends of the first direction X and both ends of the second direction Y of the first heat exchange member 100. The fixing member 25 may be arranged corresponding to one or more of the four edges 100d. Thus, the fixing member 25 can provide a restraining effect on the edge 100d of the first heat exchange member 100 and fixedly connect the edge 100d of the first heat exchange member 100 to the casing 200, improving the fitting reliability between the first heat exchange member 100 and the casing 200, reducing the probability of separation between the first heat exchange member 100 and the casing 200, and improving the connection reliability of the first heat exchange member 100 on the casing 200. Moreover, the better fit between the first heat exchange member 100 and the casing 200 is also conducive to improving heat exchange reliability, allowing the first heat exchange member 100 to better regulate the temperature of the battery cell 102, thereby improving the reliability of the battery 1.

Exemplarily, referring to FIG. 7, the first heat exchange member 100 may be provided with the fixing member 25 at the edges 100d of both ends in the second direction Y. The fixing member 25 is configured to fix a portion of the first heat exchange member 100 close to the edge 100d to the casing 200.

In the above technical solution, the fixing member 25 can be disposed close to at least one edge 100d of the first heat exchange member 100, so that the at least one edge 100d of the first heat exchange member 100 can be fixedly connected to the casing 200. This can improve the connection reliability between a region where the edge 100d of the first heat exchange member 100 is located and the casing 200, thereby improving the firmness of the connection between the first heat exchange member 100 and the casing 200, helping to improve the overall heat exchange stability of the first heat exchange member 100 for the battery 1, and thus improving the reliability of the battery 1.

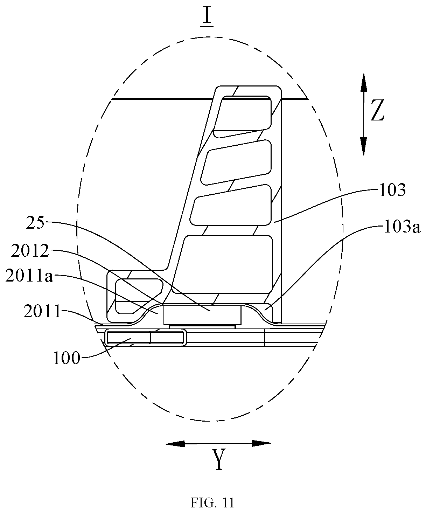

In some embodiments of this application, referring to FIG. 8 and FIG. 11, a first groove 2011a is provided in a wall of the casing 200 close to the first heat exchange member 100. The fixing member 25 is at least partially located in the first groove 2011a.

The casing wall may refer to a wall that encloses an internal space of the casing 200, which can be understood as a flat structure that surrounds the internal space of the casing 200. The wall of the casing may be made of other materials including but not limited to wood, plastic, metal. Due to the different shapes of the casing 200, the number of casing walls enclosing the casing 200 also varies. Exemplarily, when the casing 200 is cuboid, the casing 200 can have six casing walls. In a plurality of casing walls of the casing 200, one casing wall may be referred to as a first casing wall 2011. The first groove 2011a is provided in the first casing wall 2011.

The first groove 2011a may refer to a recess or slot formed in the casing wall that can be used to accommodate or fix components. The shape of the first groove 2011a may include, but is not limited to, a rectangular shape, an elongated shape, a circular shape, and a racetrack shape, and can be adjusted according to the shape of the fixing member 25 to match the shape of the fixing member 25.

There may be many ways to form the first groove 2011a in the casing wall. For example, when the thickness of the first casing wall 2011 is relatively large, the first groove 2011a may be a groove dug in the first casing wall 2011. When the first casing wall 2011 is a sheet metal component with a relatively small thickness, the first groove 2011a may be a groove formed by the depression of the first casing wall 2011.

In the above solution, the fixing member 25 may be partially located in the first groove 2011a, that is, a height of the fixing member 25 is greater than a depth of the first groove 2011a. The fixing member 25 may also be entirely located in the first groove 2011a, that is, the height of the fixing member 25 is less than or equal to the depth of the first groove 2011a. Exemplarily, referring to FIG. 8 and FIG. 11, the casing wall where the first groove 2011a is located may be the bottom wall of the casing 200. Thus, the aforementioned "height of the fixing member 25" and "depth of the first groove 2011a" may refer to a third direction Z in FIG. 11, that is, a size of the fixing member 25 protruding relative to the casing wall in the third direction Z is relatively small or does not protrude. Thus, a structure of an assembly formed by the casing 200, the fixing member 25, and the first heat exchange member 100 is relatively compact in the third direction Z, and the overall size in the third direction Z is relatively small.

In the above technical solution, since the fixing member 25 is at least partially disposed in the first groove 2011a, the first groove 2011a can provide part of a space required for installing the fixing member 25. On the one hand, this can improve the structural compactness of the assembly formed by the casing 200, the fixing member 25, and the first heat exchange member 100, allowing the size of the casing 200 to be relatively small, thereby helping to save space, reduce the volume, and increase the volumetric energy density of the battery 1. On the other hand, the first groove 2011a can provide a limiting and restraining effect on the fixing member 25, improving the connection reliability between the fixing member 25 and the casing 200, thereby improving the connection reliability between the first heat exchange member 100 and the casing 200, and helping to improve the reliability of the battery 1 and extend the service life of the battery 1.

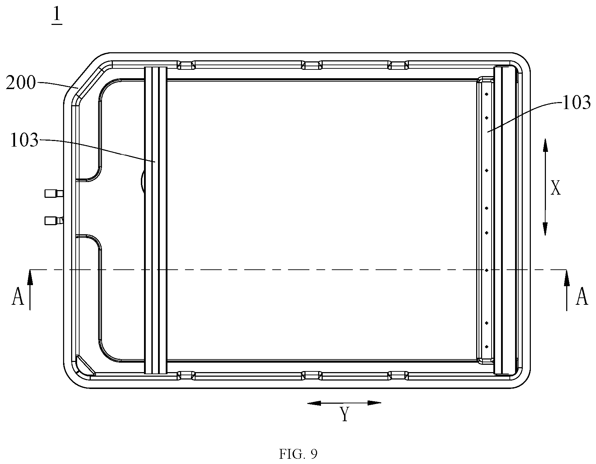

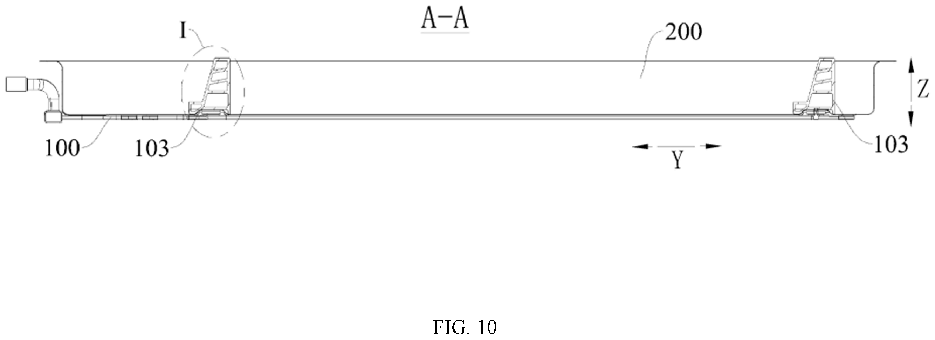

In some embodiments of this application, referring to FIG. 9, FIG. 10, and FIG. 11, the wall of the casing 200 close to the first heat exchange member 100 protrudes toward an inner side of the accommodation cavity 21 to form a protrusion 2012. A peripheral wall of a protruding position of the protrusion 2012 forms a first groove 2011a. The battery 1 further includes a beam body 103. The beam body 103 is disposed in the accommodation cavity 21. The beam body 103 is provided with a second groove 103a. The protrusion 2012 is at least partially disposed in the second groove 103a.

The protrusion 2012 may refer to a portion of the first casing wall 2011 that protrudes or bulges relative to a peripheral region. Exemplarily, in conjunction with the foregoing description, when the first casing wall 2011 is a sheet metal component, the protrusion 2012 may be a stiffener on the first casing wall 2011.

The beam body 103 may refer to a beam arranged on an inner side of the casing 200 to provide reinforcement or a beam (for example, an expansion beam) that buffers the expansion of the battery cell 102. The beam body 103 may be, but is not limited to, a solid beam, a hollow beam, or the like. The shape of the beam body 103 may be, but is not limited to, a rectangular shape, a cylindrical shape, or the like.

The second groove 103a may refer to a recess or slot provided in the beam body 103 for accommodating or fixing components.

In the above technical solution, the protrusion 2012 protrudes toward the inner side of the casing 200, and the peripheral wall of the protruding position forms the first groove 2011a. Therefore, on the premise that the first groove 2011a is formed in the wall of the casing 200 and can be used for accommodating the fixing member 25, thicknesses of the remaining parts of the casing wall other than the protrusion 2012 can be made relatively small, which is conducive to reducing the thickness of the casing wall where the first groove 2011a is located and reducing the weight of the casing 200, thereby increasing the energy density of the battery 1. Moreover, the peripheral wall of the protrusion 2012 forming the first groove 2011a is also conducive to improving the strength of a position where the first groove 2011a is located, reducing the probability of insufficient structural strength of the casing wall due to the provision of the first groove 2011a, and improving the reliability of the casing wall where the first groove 2011a is located, thereby improving the reliability of the casing 200, and thus improving the overall reliability of the battery 1. The beam body 103 is provided with the second groove 103a for accommodating the protrusion 2012, so that the beam body 103 and the protrusion 2012 can be combined together, reducing the probability of the protrusion 2012 occupying the space required by the battery cell 102 in the casing 200, and helping to improve the compactness of an internal structure of the battery 1, thereby increasing the volumetric energy density of the battery 1. The cooperation of the protrusion 2012 and the second groove 103a can provide a limiting effect on the beam body 103, improving the connection reliability between the beam body 103 and the casing 200, thereby improving the reliability of the battery 1.

In some embodiments of this application, referring to FIG. 7, FIG. 8, and FIG. 9, the beam body 103 and the fixing member 25 extend along the first direction X. The second groove 103a and the protrusion 2012 extend along the first direction X.

In the above technical solution, the beam body 103, the fixing member 25, the second groove 103a, and the protrusion 2012 are all elongated. The elongated second groove 103a and protrusion 2012 can not only improve the strength of the beam body 103, but also improve the tensile and bending strength of the beam body 103 in the first direction X, thereby improving the overall strength of the beam body 103. The elongated fixing member 25 can cooperate with the protrusion 2012 to further improve the structural strength of the beam body 103, and can also provide more fixing positions and a larger fixing surface. This can enhance the fixing effect on the first heat exchange member 100, achieve a better fixing effect on the first heat exchange member 100, and reduce the number of fixing members 25, thereby improving the assembly efficiency.

In some embodiments of this application, referring to FIG. 9 to FIG. 11, the beam body 103 is an expansion beam. The expansion beam can expand or contract along the second direction Y. The second direction Y is parallel to the first casing wall 2011 and perpendicular to the first direction X.

The expansion beam may refer to a component configured to alleviate volume expansion or contraction within the battery 1 due to charging/discharging or temperature changes. The expansion beam is typically made of a flexible material such as elastic rubber or polymer.

During the use of the battery 1, the expansion beam can absorb the volume changes caused by chemical reactions inside the battery through its own deformation or bending, preventing or reducing the deformation of the battery cell 102, and reducing the risk of stress concentration and damage to the battery cell 102. The expansion beam can also protect a positive electrode, a negative electrode, and other components of the battery cell 102, reducing the probability of damage or rupture of the positive electrode, the negative electrode, and the other components during the charging and discharging process of the battery 1. It can be seen that the expansion beam, as one of relatively important components of the battery 1, helps to maintain the electrochemical performance and cycle life of the battery 1 by reducing stress concentration and structural instability.

In the above technical solution, since the fixing member 25 extends along the first direction X, and the second groove 103a and the protrusion 2012 extend along the first direction X, the fixing member 25 and the protrusion 2012 can improve the structural strength of the expansion beam, improve the tensile and bending strength of the expansion beam in the first direction X, and improve the reliability of the expansion beam, helping to reduce the probability of stress concentration and structural instability of the battery cell 102, thereby further improving the overall reliability of the battery 1.

In some embodiments of this application, referring to FIG. 11, the beam body 103 is a hollow beam. A portion of the beam body 103 protrudes toward an inner side of the hollow beam to form a second groove 103a.

The hollow beam may refer to a beam structure with a hollow cross-section central portion, which is typically formed by hollowing out the cross-section central portion of the beam. The hollowed shape may include, but is not limited to, a circular shape, a rectangular shape, a triangular shape, or a trapezoidal shape.

In the above technical solution, the beam body 103 is set as a hollow beam. After a portion of the beam body 103 protrudes toward the inner side of the hollow beam to form the second groove 103a, the strength of the beam body 103 can be further improved, and the reliability of the beam body 103 can be improved. Moreover, the beam body 103 is a hollow beam, the beam body 103 can protrude inward to form the second groove 103a, which is conducive to reducing the difficulty of forming the second groove 103a, and improving the manufacturability of the second groove 103a, thereby reducing the manufacturing cost. The beam body 103 being a hollow beam can also reduce the weight of the beam body 103, thereby reducing the overall weight of the battery 1 and increasing the energy density of the battery 1. In addition, the beam body 103 being a hollow beam has relatively high strength and rigidity, which can provide better support, reduce the amount of materials used, and further reduce the manufacturing cost.

In some embodiments of this application, the protrusion 2012 and the second groove 103a are adhesively connected to each other.

The protrusion 2012 and the second groove 103a being adhesively connected to each other may refer to that the protrusion 2012 and the second groove 103a may be connected to each other via adhesives including but not limited to glue, double-sided tapes, and hot melt adhesives.

In the above technical solution, the protrusion 2012 and the second groove 103a being adhesively connected to each other make the bonding between the two tighter and firmer, can improve the connection reliability between the beam body 103 and the casing 200, and can further enhance the strength-increasing effect of the protrusion 2012 on the beam body 103, thereby making the beam body 103 have higher strength.

In some embodiments of this application, the beam body 103 is a non-metallic beam body. In this technical solution, since the cooperation of the protrusion 2012 and the second groove 103a can improve the strength of the beam body 103, the requirements for stress strength of the beam body 103 can be reduced. Setting the beam body 103 as a non-metallic beam body can not only reduce the weight of the beam body 103, but also improve electrical safety and enhance the thermal insulation effect.

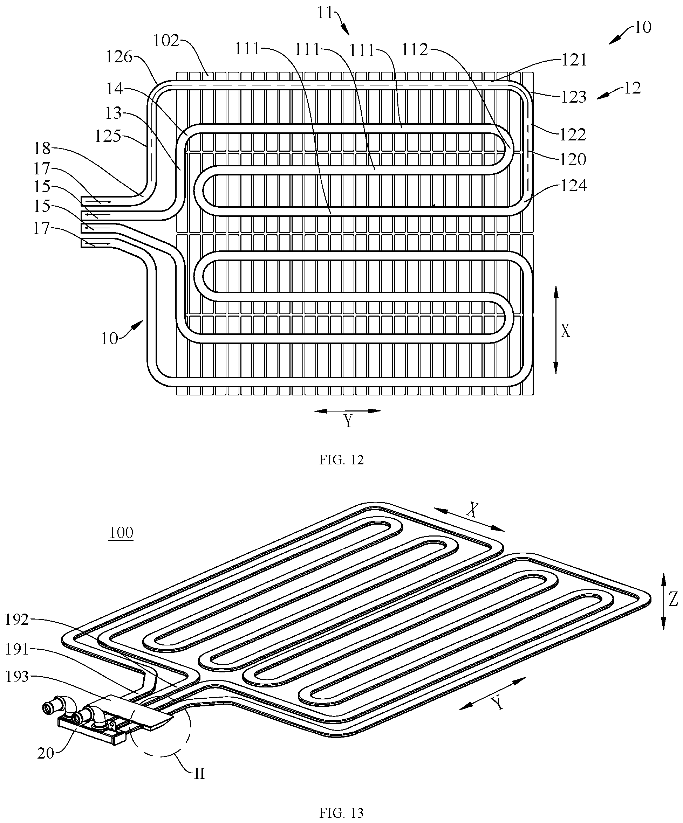

In some embodiments of this application, referring to FIG. 7 and FIG. 12, the first heat exchange member 100 includes a first heat exchange flow passage 10, where the first heat exchange flow passage 10 includes a first heat exchange section 11 and a second heat exchange section 12. The second heat exchange section 12 is bent to form a U-shaped region 120. The first heat exchange section 11 is disposed within the U-shaped region 120 in a bent manner and connected to the second heat exchange section 12 in a bent manner. The fixing member 25 is connected to the first heat exchange section 11 and the second heat exchange section 12 and disposed close to or corresponding to bent portions of the first heat exchange section 11 and the second heat exchange section 12.

Specifically, the battery 1 may include a plurality of battery cells 102. The first heat exchange flow passage 10 is configured to exchange heat with the plurality of battery cells 102 of the battery 1, so that the temperature of the battery 1 can be limited within a safe operating temperature, thereby improving the operating reliability of the battery 1.

The aforementioned "second heat exchange section 12 is bent to form a U-shaped region 120 (see a dashed portion in FIG. 12), and the first heat exchange section 11 is disposed within the U-shaped region 120 in a bent manner" aims to illustrate that the second heat exchange section 12 is disposed on a circumferential periphery of the first heat exchange section 11 and can be arranged on three sides of the circumference of the first heat exchange section 11, and the second heat exchange section 12 can be arranged closer to a peripheral position of the battery 1 relative to the first heat exchange section 11.

The second heat exchange section 12 is bent to form a U-shaped region 120, that is, in a direction from one end of the second heat exchange section 12 to the other end, the second heat exchange section 12 extends along a U-shaped line to form a U-shaped region 120.

The first heat exchange section 11 is disposed within the U-shaped region 120 in a bent manner, that is, the first heat exchange section 11 is arranged within a space enclosed by the second heat exchange section 12. In addition, the first heat exchange section 11 extends non-linearly along an inner side of the second heat exchange section 12 and has at least one bent position.

It should be noted that in this embodiment, the first heat exchange section 11 is only limited to be disposed within the U-shaped region in a bent manner, but the bent manner of the first heat exchange section 11 is not limited, that is, the specific bent manner of the first heat exchange section 11 can be designed according to the heat exchange requirements for the battery 1. For example, the first heat exchange section 11 can extend along a length direction (that is, the first direction X in FIG. 12) of the battery cell 102, bend toward a width direction (that is, the second direction Y in FIG. 12) of the battery cell 102 after extending to a certain length, and then continue to extend along the length direction of the battery cell 102 and bend along the width direction. Alternatively, the first heat exchange section 11 can extend along the width direction of the battery cell 102, bend toward the length direction of the battery cell 102 after extending to a certain length, and then continue to extend along the width direction of the battery cell 102 and bend along the length direction.

The first heat exchange section 11 and the second heat exchange section 12 are connected to each other in a bent manner, that is, one end of the first heat exchange section 11 and one end of the second heat exchange section 12 are connected to each other, and a connection position between the first heat exchange section 11 and the second heat exchange section 12 is a bent non-linear structure. For example, the connection position between the first heat exchange section 11 and the second heat exchange section 12 can be bent into an arc segment.

The first heat exchange section 11 and the second heat exchange section 12 are connected to each other. Thus, one of an end of the first heat exchange section 11 away from the second heat exchange section 12 and an end of the second heat exchange section 12 away from the first heat exchange section 11 can serve as a liquid inlet end and the other can serve as a liquid outlet end. Therefore, when the first heat exchange flow passage 10 performs heat exchange, a heat exchange medium can flow from the first heat exchange section 11 to the second heat exchange section 12 or flow from the second heat exchange section 12 to the first heat exchange section 11.

It can be understood that during the flow of a heat exchange fluid in the first heat exchange flow passage 10, the temperature of the heat exchange fluid gradually changes, leading to a gradual decrease in the heat exchange effect. For example, when the first heat exchange member 100 cools the battery 1, the heat of the battery cell 102 is gradually transferred to the heat exchange fluid, so that the temperature of the heat exchange fluid gradually increases as the heat exchange fluid flows along the first heat exchange flow passage 10, a temperature difference between the heat exchange fluid and the battery cell 102 gradually decreases, and the heat exchange efficiency gradually decreases. When the first heat exchange member 100 heats the battery 1, the heat in the heat exchange fluid is gradually transferred to the battery cells 102, so that the temperature of the heat exchange fluid gradually decreases as the heat exchange fluid flows along the first heat exchange flow passage 10, a temperature difference between the heat exchange fluid and the battery cell 102 gradually decreases, and the heat exchange efficiency gradually decreases.

In this embodiment, when the first heat exchange member 100 cools the battery 1, the heat exchange fluid can also flow from the first heat exchange section 11 to the second heat exchange section 12, or the heat exchange fluid can also flow from the second heat exchange section 12 to the first heat exchange section 11. When the heat exchange fluid also flows from the first heat exchange section 11 to the second heat exchange section 12, a battery cell 102 at a middle position of the battery 1 (for example, an inner battery cell on an inner side of an outer periphery) can be cooled first, and then a battery cell 102 at the peripheral position of the battery 1 can be cooled. Since the heat dissipation of the battery cell 102 at the peripheral position of the battery 1 is better than that of the inner battery cell 102, the heat exchange fluid with a relatively low temperature in the first heat exchange section 11 can better meet the heat dissipation needs of the battery cell 102 at the middle position of the battery 1. In addition, since the battery cell 102 at the peripheral position can directly dissipate heat naturally to the external environment, when the temperature of the heat exchange fluid in the second heat exchange section 12 is slightly higher, the heat dissipation needs of the peripheral battery cell 102 can still be met, so that the battery cell 102 at the peripheral position of the battery 1 and the battery cell 102 at the middle position of the battery 1 obtain roughly consistent cooling effects, thereby making the temperature of the battery cell 102 at the peripheral position of the battery 1 and the temperature of the battery cell 102 at the middle position of the battery 1 more consistent after cooled, and making the temperature distribution inside the battery 1 more uniform.

When the first heat exchange member 100 heats the battery 1, the heat exchange fluid can also flow from the first heat exchange section 11 to the second heat exchange section 12, or the heat exchange fluid can also flow from the second heat exchange section 12 to the first heat exchange section 11. Exemplarily, when the heat exchange fluid flows from the second heat exchange section 12 to the first heat exchange section 11, the peripheral battery cell 102 of the battery 1 can be heated first, and then the heat exchange fluid cools the battery cell 102 at the middle position of the battery 1. Since the peripheral battery cell 102 of the battery 1 dissipate more heat to the external environment, the temperature of the peripheral battery cell 102 of the battery 1 drops more easily. The heat exchange fluid first heats the peripheral battery cell 102 of the battery 1. The heat exchange fluid with a relatively high temperature can increase the temperature of the peripheral battery cell 102 and compensate for the heat lost by the battery cell 102 due to heat dissipation to the external environment, meeting the heating needs. The battery cell 102 at the middle position of the battery 1 has a small contact area with the external environment and less heat loss. The heat exchange fluid with a relatively low temperature flowing in the first heat exchange section 11 can cooperate with the heat generated by the battery cell 102 to well meet the heating needs. Thus, the peripheral battery cell 102 of the battery 1 and the battery cell 102 at the middle position of the battery 1 can obtain substantially consistent heating effects, thereby making the temperature of the peripheral battery cell 102 of the battery 1 and the battery cell 102 at the middle position of the battery 1 more consistent after heated, and making the temperature distribution inside the battery 1 more uniform.

Since the first heat exchange section 11 and the second heat exchange section 12 are bent structures, bent portions of the first heat exchange section 11 and the second heat exchange section 12 may refer to edge positions of the first heat exchange section 11 and the second heat exchange section 12. Moreover, since the first heat exchange section 11 and the second heat exchange section 12 are typically connected to the casing 200 by adhesive bonding, affected by the adhesive process, outer sides of the bent portions of the first heat exchange section 11 and the second heat exchange section 12 are less restrained than central side regions of the first heat exchange section 11 and the second heat exchange section 12, and the probability of adhesive failure or insufficient adhesive compression is relatively high. In this application, the fixing member 25 can be connected to the bent portions of the first heat exchange section 11 and the second heat exchange section 12, or be disposed close to the bent portions of the first heat exchange section 11 and the second heat exchange section 12. Thus, the fixing member 25 can provide additional restraining and limiting effects on the bent portions of the first heat exchange section 11 and the second heat exchange section 12, thereby reducing the probability of adhesive failure or insufficient adhesive compression of the bent portions of the first heat exchange section 11 and the second heat exchange section 12 and the casing 200, improving the heat exchange reliability of the first heat exchange section 11 and the second heat exchange section 12, and thus improving the reliability of the battery 1.

In the above technical solution, the second heat exchange section 12 is bent to form the U-shaped region 120, and the first heat exchange section 11 is disposed within the U-shaped region 120 in a bent manner, so that when the first heat exchange member 100 exchanges heat with the battery 1, the U-shaped region 120 formed by a peripheral second heat exchange section 12 may be opposite to a peripheral battery cell 102 of the battery 1, and the first heat exchange section 11 within the U-shaped region 120 may be opposite to an inner battery cell 102. This allows the first heat exchange member 100 to compensate for an internal and external temperature difference caused by heat exchange between the peripheral battery cell 102 and the environment, making the heat exchange effect of the peripheral battery cell 102 of the battery 1 consistent with that of the inner battery cell 102 of the battery 1, and improving the temperature uniformity of the battery 1, thereby extending the service life of the battery 1 to a certain extent. The fixing member 25 can provide a restraining and limiting effect on regions where the bent portions of the first heat exchange section 11 and the second heat exchange section 12 are located, improving the connection reliability between the bent portions of the first heat exchange section 11 and the second heat exchange section 12 and the casing 200, thereby improving the operating reliability of the first heat exchange section 11 and the second heat exchange section 12, and helping to improve the reliability of the battery 1.

According to some embodiments of this application, referring to FIG. 12, the second heat exchange section 12 may be located at the outermost circumference of the first heat exchange flow passage 10.

That is, the second heat exchange section 12 is formed as the outermost flow passage of the first heat exchange flow passage 10. Thus, the second heat exchange section 12 can be used to exchange heat with the battery cell 102 at the periphery of the battery 1, thereby improving the temperature uniformity of the battery cell 102 at the periphery of the battery 1.

In the above technical solution, the second heat exchange section 12 is set to be located at the outermost circumference of the first heat exchange flow passage 10, so that the second heat exchange section 12 can exchange heat with the battery cell 102 at the outer circumference of the battery 1. This is conducive to alleviating the internal and external temperature difference of the battery 1 caused by heat exchange with the environment, and extending the service life of the battery 1 to a certain extent.

According to some embodiments of this application, the first heat exchange section 11 and the second heat exchange section 12 can be bent in a same plane.

In the above technical solution, the first heat exchange section 11 and the second heat exchange section 12 are set to be bent in the same plane, so that the first heat exchange flow passage 10 can exchange heat with the battery 1 in the same plane, thereby simplifying the structure of the first heat exchange flow passage 10, reducing the manufacturing difficulty of the first heat exchange flow passage 10, reducing the space occupied by the first heat exchange flow passage 10, and increasing the volumetric energy density of the battery 1.

In some embodiments of this application, referring to FIG. 7 and FIG. 12, the first heat exchange member 100 includes a first heat exchange flow passage 10. The first heat exchange flow passage 10 includes a first heat exchange section 11 and a second heat exchange section 12. The second heat exchange section 12 is bent to form a U-shaped region 120. The first heat exchange section 11 is disposed within the U-shaped region 120 in a bent manner and connected to the second heat exchange section 12 in a bent manner.

In the above technical solution, the second heat exchange section 12 is bent to form a U-shaped region 120 in a bent manner, and the first heat exchange section 11 is disposed within the U-shaped region 120 in a bent manner, so that when the first heat exchange member 100 exchanges heat with the battery 1, the U-shaped region 120 formed by a peripheral second heat exchange section 12 may be opposite to a peripheral battery cell 102 of the battery 1, and the first heat exchange section 11 within the U-shaped region 120 may be opposite to the inner battery cell 102. This allows the first heat exchange member 100 to compensate for an internal and external temperature difference caused by heat exchange between the peripheral battery cell 102 and the environment, making the heat exchange effect of the peripheral battery cell 102 of the battery 1 consistent with that of the inner battery cell 102 of the battery 1, and improving the temperature uniformity of the battery 1, thereby extending the service life of the battery 1 to a certain extent.

In some embodiments of this application, referring to FIG. 7, FIG. 8, and FIG. 12, the first heat exchange section 11 includes a plurality of first heat exchange portions 111. The plurality of first heat exchange portions 111 are arranged at intervals along the first direction X and sequentially connected to each other in a bent manner. Each of the first heat exchange portions 111 extends linearly along the second direction Y. The first direction X and the second direction Y are arranged at an included angle.

That is, the plurality of first heat exchange portions 111 are sequentially connected to each other, and connection positions of two connected first heat exchange portions 111 are bent. For example, the two connected first heat exchange portions 111 can be bent along a broken line, or can be bent along an arc line. The number of first heat exchange portions 111 may be two, three, four, five, or more.

It should be noted that the shape of the first heat exchange portion 111 may be various. For example, the first heat exchange portion 111 may be linear or arc-shaped. An extension direction of the first heat exchange portion 111 may also be various. For example, the first heat exchange portion 111 can extend along a length direction or a thickness direction of the battery cell 102. Thus, the plurality of first heat exchange portions 111 being sequentially connected to each other in a bent manner allows the first heat exchange section 11 to form S-shaped heat exchange flow passages, zigzag heat exchange flow passages, V-shaped heat exchange flow passages, or other forms of heat exchange flow passages.

"The first direction X and the second direction Y are arranged at an included angle" aims to illustrate that the first direction X and the second direction Y may be arranged to be perpendicular to each other, or may be arranged to intersect only without being perpendicular to each other. For example, the first direction X and the second direction Y may be arranged at an angle of 30°, 60°, 80°, 120°, 150°, or 170°. For example, as shown in FIG. 12, the first direction X is the length direction of the battery cell 102. The second direction Y is the thickness direction of the battery cell 102. The first heat exchange portions 111 extend along the length direction of the battery cell 102 and are arranged at intervals along the thickness direction of the battery cells 102. Thus, a plurality of first heat exchange portions 111 being connected to each other in a bent manner can form an S-shaped heat exchange flow passage, thereby achieving heat exchange for a plurality of battery cells 102.

In the above technical solution, on the one hand, providing the plurality of first heat exchange portions 111 can increase a heat exchange area of the first heat exchange section 11, thereby increasing a heat exchange area of the first heat exchange flow passage 10, and thus improving the heat exchange effect of the first heat exchange flow passage 10. On the other hand, since inner battery cells are wrapped by outer battery cells, a temperature difference between the inner battery cells is not large. Therefore, providing the plurality of first heat exchange portions 111 can improve the overall heat exchange effect on the premise of ensuring a small temperature difference between the inner and outer battery cells. Setting the first heat exchange portions 111 to extend linearly along the second direction Y can reduce the manufacturing difficulty of the first heat exchange portions 111, thereby reducing the manufacturing complexity of the first heat exchange flow passage 10. In addition, straight pipes can also increase a flow rate of a heat exchange fluid, thereby improving the heat exchange effect of the first heat exchange flow passage 10.

According to some embodiments of this application, referring to FIG. 7 and FIG. 12, the first heat exchange section 11 may further include a first bent portion 112. The first bent portion 112 is arc-shaped and connected between two adjacent first heat exchange portions 111 in a bent manner.

The first bent portion 112 is arc-shaped. That is, the first bent portion 112 extends along an arc line, and fluid flow directions at both ends of the first bent portion 112 have a certain included angle. Thus, the first bent portion 112 can change the fluid flow direction, and thus the two connected first heat exchange portions 111 can extend within a preset region, thereby increasing the heat exchange area of the first heat exchange section 11 and improving the heat exchange efficiency of the first heat exchange section 11. In addition, the first bent portion 112 is arc-shaped, and the arc shape can reduce the flow resistance of the fluid and reduce the pressure drop, thereby increasing the flow rate of the fluid and further improving the heat exchange efficiency of the first heat exchange section 11.

Furthermore, the number of first bent portions 112 may be one, two, three, or more. The first bent portion 112 can make the first heat exchange section 11 arranged tortuously, thereby increasing the heat exchange area of the first heat exchange flow passage 10 and improving the heat exchange efficiency of the first heat exchange flow passage 10.

In the above technical solution, providing the first bent portion 112 can change the fluid flow direction inside the first heat exchange section 11, achieving a smooth transition connection between two first heat exchange portions 111, and achieving the tortuous extension of the first heat exchange flow passage 10. Thus, a contact area between a single battery cell and the first heat exchange flow passage 10 can be increased, thereby increasing the heat exchange area and improving the heat exchange efficiency of the first heat exchange flow passage 10. In addition, the first bent portion 112 is arc-shaped, which can also reduce the flow resistance of the fluid and reduce the pressure drop, thereby increasing the flow rate of the fluid and further improving the heat exchange efficiency of the first heat exchange section 11. In addition, the provision of the first bent portion 112 also makes the structure of the first heat exchange section 11 more compact and the overall space occupied smaller, which is more conducive to achieving a miniaturized design of the battery 1 and increasing the volumetric energy density of the battery 1.

According to some embodiments of this application, referring to FIG. 7 and FIG. 12, the first bent portion 112 may be semi-circular arc-shaped.

That is, the first bent portion 112 can extend along a semi-circular arc line. Specifically, the first bent portion 112 can extend along a semi-circular arc line that protrudes along a direction facing away from two first heat exchange portions 111 connected to the first bent portion 112. An included angle between an inlet and outlet of the first bent portion 112 is 180°, and flow directions at the outlet and inlet positions of the first bent portion 112 are opposite. Thus, two adjacent first heat exchange portions 111 are arranged closer to each other, and the structure of the entire first heat exchange section 11 is more compact and reliable. The first bent portion 112 is used to connect two first heat exchange portions 111 that are parallel to each other and are arranged at intervals. In other embodiments, a bent degree of the first bent portion 112 can also be adjusted as needed, for example, it may be 150° or 135°. This is not limited in the embodiments of this application.

Two first heat exchange portions 111 may be connected to each other through the first bent portion 112 to form a "U"-shaped heat exchange passage. The first heat exchange section 11 may include one or more "U"-shaped heat exchange passages. A plurality of "U"-shaped heat exchange passages are sequentially connected to each other. The connected "U"-shaped heat exchange passages are connected to each other through the first bent portion 112.

In the above technical solution, setting the first bent portion 112 to be semi-circular arc-shaped can improve the design diversity of the heat exchange flow passage, thereby improving the adaptability of the first heat exchange member 100 to the battery 1. In addition, the semi-circular arc-shaped structure is relatively simple, thereby reducing the manufacturing difficulty of the first heat exchange member 100 and improving the manufacturing speed of the first heat exchange member 100.

In some embodiments of this application, referring to FIG. 7, the fixing member 25 is connected to the first bent portion 112 or a portion of the first heat exchange portion 111 close to the first bent portion 112.

It can be understood that the fixing member 25 may be connected to the first bent portion 112 or the portion of the first heat exchange portion 111 close to the first bent portion 112. Regardless of which of the above methods is used, the fixing member 25 can fix the first heat exchange portion 111 to the casing 200, thereby improving the reliability of the first heat exchange portion 111 and the first bent portion 112, and facilitating the flow smoothness of the heat exchange fluid in the first heat exchange portion 111 and the first bent portion 112.

In the above technical solution, the fixing member 25 being connected to the first bent portion 112 or the portion of the first heat exchange portion 111 close to the first bent portion 112 can improve the reliability of the first heat exchange portion 111 and the first bent portion 112, thereby improving the heat exchange stability for the battery cell 102, and helping to improve the reliability of the battery 1.

In some embodiments of this application, referring to FIG. 7 and FIG. 12, the second heat exchange section 12 includes a second heat exchange portion 121, a third heat exchange portion 122, and a fourth heat exchange portion 125. The second heat exchange portion 121 extends along a first side periphery of the first heat exchange section 11. The third heat exchange portion 122 is connected between the second heat exchange portion 121 and the first heat exchange section 11 and extends along a second side periphery of the first heat exchange section 11. A first end of the third heat exchange portion 122 is connected to the second heat exchange portion 121 at an included angle, and a second end of the third heat exchange portion 122 is connected to the first heat exchange section 11 at an included angle. The fourth heat exchange portion 125 is in communication with the second heat exchange portion 121, is connected to the second heat exchange portion 121 at an included angle, and extends along a third side periphery of the first heat exchange section 11.

It can be understood that the fourth heat exchange portion 125 is connected to an end of the second heat exchange portion 121 away from the third heat exchange portion 122. The fourth heat exchange portion 125, the second heat exchange portion 121, and the third heat exchange portion 122 are sequentially connected to each other to form a U-shaped region 120. The first heat exchange section 11 is arranged within the U-shaped region 120 and connected to an end of the third heat exchange portion 122 away from the second heat exchange portion 121.

The first end of the third heat exchange portion 122 is connected to the second heat exchange portion 121 at an included angle. That is, the third heat exchange portion 122 is connected to the second heat exchange portion 121, and the third heat exchange portion 122 and the second heat exchange portion 121 are not collinear or parallel to each other, but are arranged at an angle greater than 0° and less than 180°. For example, the third heat exchange portion 122 is connected to the second heat exchange portion 121 at an included angle of 30°, 45°, 60°, 90°, 120°, 135°, 150°, or the like.

The second end of the third heat exchange portion 122 is connected to the first heat exchange section 11 at an included angle. That is, the second end of the third heat exchange portion 122 is connected to the second heat exchange portion 121, and the second end of the third heat exchange portion 122 and the first heat exchange section 11 are arranged at an angle greater than 0° and less than 180°. For example, the second end of the third heat exchange portion 122 is connected to the first heat exchange section 11 at an included angle of 30°, 45°, 60°, 90°, 120°, 135°, 150°, or the like.

The fourth heat exchange portion 125 is in communication with the second heat exchange portion 121 and is connected to the second heat exchange portion 121 at an included angle. That is, the fourth heat exchange portion 125 and the second heat exchange portion 121 are connected to each other and are arranged at an included angle greater than 0° and less than 180°. For example, the fourth heat exchange portion 125 is connected to the second heat exchange portion 121 at an included angle of 30°, 45°, 60°, 90°, 120°, 135°, 150°, or the like.

It should be noted that in this embodiment, the second heat exchange section 12 is limited to being arranged on three sides of the circumference of the first heat exchange section 11; and there is no limitation on specific positions where the second heat exchange portion 121, the third heat exchange portion 122, and the fourth heat exchange portion 125 are respectively arranged relative to the first heat exchange section 11. Thus, the specific positions of the second heat exchange portion 121, the third heat exchange portion 122, and the fourth heat exchange portion 125 can be designed according to actual conditions. For example, if the second heat exchange portion 121 can be arranged on one side of the first heat exchange section 11 in the first direction, the third heat exchange portion 122 and the fourth heat exchange portion 125 are respectively arranged on both sides of the first heat exchange section 11 in the second direction. If the second heat exchange portion 121 is arranged on one side of the first heat exchange section 11 in the second direction, the third heat exchange portion 122 and the fourth heat exchange portion 125 are respectively arranged on both sides of the first heat exchange section 11 in the first direction.

In the above technical solution, the second heat exchange portion 121, the third heat exchange portion 122, and the fourth heat exchange portion 125 are respectively arranged on three sides of the first heat exchange section 11, so that the second heat exchange section 12 can surround the first heat exchange section 11. Thus, this can improve the compactness of the arrangement of the first heat exchange flow passage 10, achieving miniaturization of a structure of the first heat exchange flow passage 10, thereby helping to increase the volumetric energy density of the battery 1. In addition, this can also simplify the structure of the first heat exchange flow passage 10, facilitating the processing and production of the first heat exchange member 100.

In some embodiments of this application, referring to FIG. 7 and FIG. 12, the first heat exchange section 11 includes a plurality of first heat exchange portions 111. The plurality of first heat exchange portions 111 are sequentially connected to each other in a bent manner in the first direction X. The second heat exchange portion 121 is located on a side of the plurality of first heat exchange portions 111 along the first direction X. The third heat exchange portion 122 is located on a side of the plurality of first heat exchange portions 111 along the second direction Y. The first direction X and the second direction Y are arranged at an included angle. A first end of the third heat exchange portion 122 is connected to one end of the second heat exchange portion 121 along the second direction Y, and a second end of the third heat exchange portion 122 is connected to one of the plurality of first heat exchange portions 111 that is farthest from the second heat exchange portion 121 along the first direction X. The fourth heat exchange portion 125 is located on the other side of the plurality of first heat exchange portions 111 along the second direction Y. One end of the fourth heat exchange portion 125 is connected to one end of the second heat exchange portion 121 away from the third heat exchange portion 122, and the other end of the fourth heat exchange portion 125 extends along the first direction X away from the second heat exchange portion 121.

The plurality of first heat exchange portions 111 are sequentially connected to each other in a bent manner in the first direction X. That is, the plurality of first heat exchange portions 111 are arranged sequentially in the first direction X, and in the first direction X, two adjacent and connected first heat exchange portions 111 are connected to each other in a bent manner. The first heat exchange portion 111 can extend along a straight line parallel to the second direction Y; the first heat exchange portion 111 can extend along a straight line arranged at an angle with the second direction Y; or the first heat exchange portion 111 can extend along a curve and/or a broken line in the second direction Y.

It can be understood that the fourth heat exchange portion 125, the second heat exchange portion 121, the third heat exchange portion 122, and the first heat exchange portion 111 farthest from the second heat exchange portion 121 are sequentially connected to each other; and the plurality of first heat exchange portions 111 are arranged at intervals along the first direction X and sequentially connected to each other. Thus, the heat exchange fluid can flow sequentially through the fourth heat exchange portion 125, the second heat exchange portion 121, and the third heat exchange portion 122, and then enter the first heat exchange section 11. In the first heat exchange section 11, the fluid first passes through the first heat exchange portion 111 farthest from the second heat exchange portion 121, and finally flows to a first heat exchange portion 111 closest to the second heat exchange portion 121; or the heat exchange fluid can first flow into the first heat exchange section 11. In the first heat exchange section 11, the fluid first flows through the first heat exchange portion 111 closest to the second heat exchange portion 121, then flows out of the first heat exchange portion 111 farthest from the second heat exchange portion 121 and then flows to the third heat exchange portion 122, and then flows sequentially through the second heat exchange portion 121 and the fourth heat exchange portion 125 through the third heat exchange portion 122.

In addition, "the first direction X and the second direction Y are arranged at an included angle" aims to illustrate that the first direction X and the second direction Y may be arranged to be perpendicular to each other, or may be arranged to intersect only without being perpendicular to each other. For example, the first direction X and the second direction Y may be arranged at an angle of 30°, 60°, 80°, 120°, 150°, or 170°.

Referring to FIG. 12, the first direction X may be the length direction of the battery cell 102, and the second direction Y may be the thickness direction of the battery cell 102. The first heat exchange portion 111 extends linearly along the second direction Y. A plurality of first heat exchange portions 111 are arranged at intervals in the first direction X. The second heat exchange portion 121 is arranged on a side of the plurality of first heat exchange portions 111 close to an edge of the casing 200, and is configured for heat exchange with an outermost battery cell 102 in a battery module formed by a plurality of rows of battery cells 102. The third heat exchange portion 122 is arranged on a side of the plurality of first heat exchange portions 111 close to the middle of the casing 200, and the third heat exchange portion 122 is configured for heat exchange with a battery cell 102 closer to the middle of the battery module. The fourth heat exchange portion 125 is arranged at an end of the plurality of first heat exchange portions 111 along the second direction Y and extends along the first direction X, and the fourth heat exchange portion 125 may be configured for heat exchange with a battery cell 102 at an end of the battery module in the second direction Y.

In the above technical solution, the plurality of first heat exchange portions 111 are set to be sequentially connected to each other in a bent manner in the first direction X, the second heat exchange portion 121 is set to be located on the side of the plurality of first heat exchange portions 111 along the first direction X, the third heat exchange portion 122 is set to be located on one side of the plurality of first heat exchange portions 111 along the second direction Y, and the fourth heat exchange portion 125 is set to be located on the other side of the plurality of first heat exchange portions 111 along the second direction Y, so that a positional relationship between the second heat exchange portion 121, the third heat exchange portion 122, the fourth heat exchange portion 125, and the first heat exchange portion 111 is defined, thereby further defining the layout of the first heat exchange flow passage 10, simplifying the structure of the first heat exchange flow passage 10, and facilitating manufacturing and processing.

In some embodiments of this application, referring to FIG. 12, the third heat exchange portion 122 and the fourth heat exchange portion 125 extend along the first direction X. The first heat exchange portion 111 and the second heat exchange portion 121 both extend along the second direction Y.

Further, the third heat exchange portion 122 and the fourth heat exchange portion 125 may both extend linearly along the first direction X, and the first heat exchange portion 111 and the second heat exchange portion 121 may both extend linearly along the second direction Y. The linear structure is simple and is easy to manufacture and arrange. Thus, the manufacturing complexity and manufacturing cost of the first heat exchange flow passage 10 can be further reduced.

In the above technical solution, the third heat exchange portion 122 and the fourth heat exchange portion 125 are set to extend along the first direction X, and the first heat exchange portion 111 and the second heat exchange portion 121 are set to both extend along the second direction Y, so that the tortuous arrangement of the first heat exchange flow passage 10 can be facilitated, thereby reducing the manufacturing difficulty of the first heat exchange flow passage 10 and reducing the manufacturing cost of the heat exchange member 100.

In some embodiments of this application, referring to FIG. 7 and FIG. 12, the fourth heat exchange portion 125 extends along the first direction X and extends to a position close to one of the plurality of first heat exchange portions 111 that is farthest from the second heat exchange portion 121.

Specifically, the fourth heat exchange portion 125 extends along the first direction X. One end of the fourth heat exchange portion 125 is connected to the second heat exchange portion 121, and the other end of the fourth heat exchange portion 125 extends to the position close to the one of the plurality of first heat exchange portions 111 that is farthest from the second heat exchange portion 121. That is, the other end of the fourth heat exchange portion 125 is flush with the first heat exchange portion 111 farthest from the second heat exchange portion 121, or the other end of the fourth heat exchange portion 125 extends to the position close to the first heat exchange portion 111 farthest from the second heat exchange portion 121, or the other end of the fourth heat exchange portion 125 extends beyond the first heat exchange portion 111 farthest from the second heat exchange portion 121.

This can increase the length of the fourth heat exchange portion 125, increase a heat exchange area between the fourth heat exchange portion 125 and the battery module, further improve the heat exchange effect of the first heat exchange member 100, and also facilitate the layout of the first heat exchange flow passage 10.

In the above technical solution, the fourth heat exchange portion 125 is set to extend along the first direction X to the position close to the one of the plurality of first heat exchange portions 111 that is farthest from the second heat exchange portion 121, so that a heat exchange area of the fourth heat exchange portion 125 can be increased. This allows the first heat exchange flow passage 10 to exchange heat with a plurality of battery cells 102 arranged corresponding to the first heat exchange flow passage 10 as much as possible, improving the heat exchange coverage of the first heat exchange flow passage 10, thereby improving the heat exchange effect of the battery 1.

According to some embodiments of this application, referring to FIG. 7 and FIG. 12, the second heat exchange section 12 may further include a second bent portion 123 and a third bent portion 124. The second bent portion 123 and the third bent portion 124 are both arc-shaped. The second bent portion 123 is connected between the first end of the third heat exchange portion 122 and the second heat exchange portion 121. The third bent portion 124 is connected between the second end of the third heat exchange portion 122 and the first heat exchange portion 111.

The second bent portion 123 and the third bent portion 124 are respectively configured to connect the second heat exchange portion 121 to the third heat exchange portion 122, and connect the third heat exchange portion 122 to the first heat exchange portion 111. The second bent portion 123 is arc-shaped. That is, the second bent portion 123 extends along an arc line, and fluid flow directions at both ends of the second bent portion 123 have a certain included angle. The third bent portion 124 is arc-shaped. That is, the third bent portion 124 extends along an arc line, and fluid flow directions at both ends of the third bent portion 124 have a certain included angle.

Thus, the second bent portion 123 and the third bent portion 124 can change the flow direction of the heat exchange fluid, allowing the second heat exchange section 12 to extend within a preset region and exchange heat with the battery module formed by the plurality of rows of battery cells 102. In addition, the arc-shaped second bent portion 123 and third bent portion 124 can reduce the flow resistance of the fluid and reduce the pressure drop, thereby increasing the flow rate of the heat exchange fluid and further improving the heat exchange efficiency of the first heat exchange flow passage 10.

In the above technical solution, providing the second bent portion 123 and the third bent portion 124 can change the fluid flow direction within the first heat exchange flow passage 10, achieving a smooth transition connection between the third heat exchange portion 122 and the second heat exchange portion 121, and achieving a smooth transition connection between the third heat exchange portion 122 and the first heat exchange portion 111. Thus, the second bent portion 123 and the third bent portion 124 can reduce the flow resistance of the fluid flowing within the second heat exchange section 12, reduce the pressure drop, increase the flow rate of the heat exchange fluid, and further improve the heat exchange efficiency of the first heat exchange flow passage 10.

According to some embodiments of this application, referring to FIG. 7 and FIG. 12, the second bent portion 123 may be quarter-circular arc-shaped.

That is, the second bent portion 123 can extend along a semi-circular arc line. Specifically, the first bent portion 112 can extend along a quarter-circular arc line that protrudes away from a first connecting section. An included angle between an inlet and outlet of the second bent portion 123 may be 90°. The second bent portion 123 is similar to a 90° elbow in a pipe material, which can change a flow passage direction, allowing the fluid flow direction to be changed by 90° after the fluid passes through the second bent portion 123.

Further, the second bent portion 123 connects the second heat exchange portion 121 and the third heat exchange portion 122. In this case, the second heat exchange portion 121 and the third heat exchange portion 122 are arranged perpendicular to each other.

In the above technical solution, the second bent portion 123 is set to be quarter-circular arc-shaped, so that after the fluid passes through the second bent portion 123, the flow direction of the fluid can be changed from an original flow direction to a direction perpendicular to the original flow direction. In addition, the arc shape can also reduce the flow resistance of the fluid, allowing the fluid to flow smoothly within the second bent portion 123, and effectively preventing the reduction of heat exchange efficiency due to excessively slow fluid flow.

Optionally, the second bent portion 123 may alternatively be semi-circular arc-shaped. That is, the second bent portion 123 can extend along a semi-circular arc line, the included angle between the inlet and outlet of the second bent portion 123 is 180°, and the flow directions at the outlet and inlet positions of the second bent portion 123 are opposite, so that the third heat exchange portion 122 and the second heat exchange portion 121 are closer to each other, and the structure of the entire second heat exchange section 12 is more compact and reliable. In other embodiments, a bent degree of the second bent portion 123 can also be adjusted as needed, for example, it may be 150° or 135°. This is not limited in the embodiments of this application.

According to some embodiments of this application, referring to FIG. 7 and FIG. 12, the third bent portion 124 is quarter-circular arc-shaped.

That is, the third bent portion 124 can extend along a semi-circular arc line. Specifically, the third bent portion 124 can extend along a quarter-circular arc line that protrudes away from the first connecting section. An included angle between an inlet and outlet of the third bent portion 124 is 90°. The third bent portion 124 is similar to a 90° elbow in a pipe material, which can change a flow passage direction, allowing the fluid flow direction to be changed by 90° after the fluid passes through the third bent portion 124.

Further, the third bent portion 124 connects the third heat exchange portion 122 and the first heat exchange portion 111. In this case, the third heat exchange portion 122 and the first heat exchange portion 111 are arranged perpendicular to each other.

In the above technical solution, the third bent portion 124 is set to be quarter-circular arc-shaped, so that after the fluid passes through the third bent portion 124, the flow direction of the fluid can be changed from an original flow direction to a direction perpendicular to the original flow direction. In addition, the arc-shaped third bent portion 124 can also reduce the flow resistance of the fluid, allowing the fluid to flow smoothly within the third bent portion 124, and effectively preventing the reduction of heat exchange efficiency due to excessively slow fluid flow.

Optionally, the third bent portion 124 may alternatively be semi-circular arc-shaped. That is, the third bent portion 124 can extend along a semi-circular arc line, the included angle between the inlet and outlet of the third bent portion 124 is 180°, and the flow directions at the outlet and inlet positions of the third bent portion 124 are opposite, so that the third heat exchange portion 122 and the first heat exchange section 11 are closer to each other, and the structures of the first heat exchange section 11 and the second heat exchange section 12 are more compact and reliable. In other embodiments, a bent degree of the third bent portion 124 can also be adjusted as needed, for example, it may be 150° or 135°. This is not limited in the embodiments of this application.

In some embodiments of this application, referring to FIG. 7, the fixing member 25 is connected to the second bent portion 123 or a portion of the second heat exchange portion 121 close to the second bent portion 123. The fixing member 25 is connected to the third bent portion 124 or a portion of the first heat exchange section 11 close to the third bent portion 124.

The fixing member 25 being connected to the second bent portion 123 or a portion of the second heat exchange portion 121 close to the second bent portion 123 can be understood as the fixing member 25 being connected to the second heat exchange portion 121 or the fixing member 25 being connected to the portion of the second heat exchange portion 121 close to the second bent portion 123. Thus, the fixing member 25 can improve the connection reliability between adjacent regions of the second heat exchange portion 121 and the second bent portion 123 and the casing 200, thereby improving the stability of liquid flowing in the second heat exchange portion 121 and the second bent portion 123, and improving the heat exchange reliability of portions where the second heat exchange portion 121 and the second bent portion 123 are located.

The fixing member 25 being connected to the third bent portion 124 or a portion of the first heat exchange section 11 close to the third bent portion 124 can be understood as the fixing member 25 being connected to the third bent portion 124, or the fixing member 25 being connected to the portion of the first heat exchange section 11 close to the third bent portion 124. Thus, the fixing member 25 can improve the connection reliability between adjacent regions of the first heat exchange section 11 and the third bent portion 124 and the casing 200, thereby improving the stability of liquid flowing in the first heat exchange section 11 and the third bent portion 124, and improving the heat exchange reliability of portions where the first heat exchange section 11 and the third bent portion 124 are located.

In the above technical solution, the fixing member 25 is connected to the second bent portion 123 or the portion of the second heat exchange portion 121 close to the second bent portion 123; and the fixing member 25 is connected to the third bent portion 124 or the portion of the first heat exchange section 11 close to the third bent portion 124. This can improve the connection reliability between the casing 200 and the adjacent regions of the second bent portion 123 and the second heat exchange portion 121 as well as the adjacent regions of the third bent portion 124 and the first heat exchange section 11, improving the stability of the heat exchange fluid flowing through the second heat exchange portion 121, the second bent portion 123, the third bent portion 124, and the first heat exchange section 11, and helping to improve the heat exchange reliability of the first heat exchange member 100 for the battery cells 102, thereby improving the reliability of the battery 1.

In some embodiments of this application, referring to FIG. 7 and FIG. 12, the first heat exchange flow passage 10 further includes a third heat exchange section 13. The first heat exchange section 11 is connected between the third heat exchange section 13 and the second heat exchange section 12. The third heat exchange section 13 is connected to the first heat exchange section 11 at an included angle.

That is, in the first heat exchange flow passage 10, the second heat exchange section 12, the first heat exchange section 11, and the third heat exchange section 13 are sequentially connected to each other. The heat exchange fluid can flow from the second heat exchange section 12 through the first heat exchange section 11 to the third heat exchange section 13, or flow from the third heat exchange section 13 through the first heat exchange section 11 to the second heat exchange section 12.

The third heat exchange section 13 is connected to the first heat exchange section 11 at an angle greater than 0° and less than or equal to 180°. For example, the included angle between the third heat exchange section 13 and the first heat exchange section 11 may be 30°, 45°, 60°, 90°, 120°, 135°, or 150°.

In the above technical solution, providing the third heat exchange section 13 can further increase the heat exchange area of the first heat exchange flow passage 10, thereby further improving the heat exchange effect of the first heat exchange flow passage 10.

In some embodiments of this application, referring to FIG. 7 and FIG. 12, the first heat exchange section 11 includes a plurality of first heat exchange portions 111. The plurality of first heat exchange portions 111 are sequentially connected to each other in a bent manner in a first direction X. The third heat exchange section 13 is disposed on a side of the first heat exchange section 11 facing away from the third heat exchange portion 122, and the third heat exchange section 13 is connected to the one of the plurality of first heat exchange portions 111 that is closest to the second heat exchange portion 121 along the first direction X.

Specifically, the third heat exchange section 13 is arranged adjacent to the fourth heat exchange portion 125 and between the fourth heat exchange portion 125 and the first heat exchange portion 111, so that the third heat exchange section 13 is also arranged on a circumferential outer side of the first heat exchange section 11. This can increase a circumferential heat exchange area of the first heat exchange flow passage 10, improving the heat exchange efficiency of the first heat exchange flow passage 10 at the circumferential position.

Further, the third heat exchange section 13 may be arranged internally and externally with the fourth heat exchange portion 125 on a same side of the first heat exchange section 11. This can further increase a heat exchange area at this position and improve the heat exchange efficiency. In addition, since the third heat exchange section 13 and the fourth heat exchange portion 125 are respectively located at both ends of the first heat exchange portion 111 in the fluid flow direction, the third heat exchange section 13 and the fourth heat exchange portion 125 can exchange heat with a same region of the battery module, thereby improving the temperature uniformity of this region.

Moreover, the third heat exchange section 13 is connected to the one of the plurality of first heat exchange portions 111 that is closest to the second heat exchange portion 121 along the first direction. The plurality of first heat exchange portions 111 are sequentially connected to each other in the first direction. The third heat exchange portion 122 is connected to the one of the plurality of first heat exchange portions 111 that is farthest from the second heat exchange portion 121 along the first direction. Thus, when heat exchange is performed for the battery module formed by the plurality of rows of battery cells 102, in the first heat exchange flow passage 10, the temperature of the heat exchange fluid in the first heat exchange portion 111 closest to the second heat exchange portion 121 and the temperature of the heat exchange fluid in the third heat exchange section 13, as well as the temperatures of the heat exchange fluids in the second heat exchange portion 121 and the fourth heat exchange portion 125, are the relatively highest temperature and the relatively lowest temperature, respectively, while the temperatures of the remaining portions are intermediate.

Due to the heat dissipation effect of the battery 1, an edge temperature of the battery 1 is lower than a middle temperature. Thus, the second heat exchange portion 121 exchanges heat with the first heat exchange portion 111 closest to the second heat exchange portion 121 in a same region, and the third heat exchange section 13 and the fourth heat exchange portion 125 exchange heat in a same region, so that the temperature uniformity within the battery module can be further improved, and the temperature difference of the battery module can be balanced, thereby improving the temperature uniformity of the battery module.

In the above technical solution, the third heat exchange section 13 is additionally provided, and the third heat exchange section 13 is set to be connected to the one of the plurality of first heat exchange portions 111 that is closest to the second heat exchange portion 121 along the first direction, so that the heat exchange area can be increased, and the temperature difference of the battery module can be balanced, thereby improving the temperature uniformity of the battery module.

In some embodiments of this application, referring to FIG. 7 and FIG. 12, the third heat exchange section 13 extends along the first direction X away from the second heat exchange portion 121. The first heat exchange portion 111 extends along the second direction Y. The first direction X and the second direction Y are arranged at an included angle.

Specifically, one end of the third heat exchange portion 122 is connected to the one of the plurality of first heat exchange portions 111 that is farthest from the second heat exchange portion 121 along the first direction, and the other end of the third heat exchange portion 122 extends toward the first heat exchange portion 111 farthest from the second heat exchange portion 121. In addition, the fourth heat exchange portion 125 also extends toward the first heat exchange portion 111 farthest from the second heat exchange portion 121.

Further, the third heat exchange section 13 is disposed on a side of the first heat exchange section 11 facing away from the third heat exchange portion 122. In this case, the third heat exchange section 13 and the fourth heat exchange portion 125 are disposed on a same outer side of the circumference of the first heat exchange portion 111, while the third heat exchange section 13 and the fourth heat exchange portion 125 are respectively located at both ends of the first flow passage in the fluid flow direction. When the third heat exchange section 13 and the fourth heat exchange portion 125 jointly exchange heat with a same region of the battery module, the temperature difference at the edge position of the battery module can be balanced, and the temperature uniformity at the edge position of the battery module can be improved.

In the above technical solution, setting the third heat exchange section 13 to extend along the first direction X away from the second heat exchange portion 121 can increase the heat exchange area of the first heat exchange flow passage 10 and improve the heat exchange effect of the first heat exchange flow passage 10 on the battery cell 102. In addition, when the third heat exchange section 13 and the fourth heat exchange portion 125 jointly exchange heat with the battery module, a temperature difference in a region of an edge position of the battery module can be balanced, and the temperature uniformity at the edge position of the battery module can be improved.

In some embodiments of this application, referring to FIG. 7 and FIG. 12, the third heat exchange section 13 extends along the first direction X to the position close to the one of the plurality of first heat exchange portions 111 that is farthest from the second heat exchange portion 121.

In the above technical solution, the third heat exchange section 13 is set to extend along the first direction X to the position close to the one of the plurality of first heat exchange portions 111 that is farthest from the second heat exchange portion 121, so that a length of the third heat exchange portion 122 can be increased, a heat exchange area of the third heat exchange portion 122 can be increased, and the heat exchange effect of the first heat exchange flow passage 10 can be improved.

According to some embodiments of this application, referring to FIG. 7 and FIG. 12, the first heat exchange flow passage 10 may further include a fourth bent portion 14. The fourth bent portion 14 is arc-shaped and connected between the third heat exchange section 13 and the first heat exchange portion 111 in a bent manner.

The fourth bent portion 14 is arc-shaped. That is, the fourth bent portion 14 extends along an arc line. Fluid flow directions at both ends of the fourth bent portion 14 have a certain included angle. Thus, the fourth bent portion 14 can change the fluid flow direction, allowing the third heat exchange section 13 to extend along a preset direction. In addition, the arc shape can reduce the flow resistance of the fluid and reduce the pressure drop, thereby increasing the flow rate of the fluid and further improving the heat exchange efficiency of the first heat exchange flow passage 10.

In the above technical solution, providing the fourth bent portion 14 can change the fluid flow direction between the third heat exchange section 13 and the first heat exchange portion 111. In addition, the arc-shaped fourth bent portion 14 can reduce the flow resistance of the fluid, reduce the pressure drop, increase the flow rate of the fluid, and further improve the heat exchange efficiency of the first heat exchange flow passage 10.

According to some embodiments of this application, referring to FIG. 7 and FIG. 12, the fourth bent portion 14 is quarter-circular arc-shaped.

That is, the fourth bent portion 14 can extend along a semi-circular arc line. Specifically, the fourth bent portion 14 can extend along a quarter-circular arc line that protrudes toward a connection position between the second heat exchange portion 121 and the fourth heat exchange portion 125. An included angle between an inlet and outlet of the fourth bent portion 14 is 90°. The fourth bent portion 14 is similar to a 90° elbow in a pipe material, which can change the flow passage direction, allowing the fluid flow direction to be changed by 90° after the fluid passes through the fourth bent portion 14.

Optionally, the fourth bent portion 14 may be semi-circular arc-shaped. That is, the fourth bent portion 14 can extend along a semi-circular arc line, the included angle between the inlet and outlet of the fourth bent portion 14 is 180°, and the flow directions at the outlet and inlet positions of the fourth bent portion 14 are opposite, so that the third heat exchange section 13 and the first heat exchange portion 111 are closer to each other, and the structures of the third heat exchange section 13 and the first heat exchange portion 111 are more compact and reliable. In other embodiments, a bent degree of the fourth bent portion 14 can also be adjusted as needed, for example, it may be 150° or 135°. This is not limited in the embodiments of this application.

Further, the fourth bent portion 14 connects the third heat exchange section 13 and the first heat exchange portion 111. The third heat exchange section 13 and the first heat exchange portion 111 can be arranged perpendicular to each other. The first heat exchange portion 111 extends along the second direction. The third heat exchange section 13 extends along the first direction. The first direction is perpendicular to the second direction.

In the above technical solution, the fourth bent portion 14 is set to be quarter-circular arc-shaped, so that after the fluid passes through the fourth bent portion 14, the flow direction of the fluid can be changed from an original flow direction to a direction perpendicular to the original flow direction. In addition, the arc shape can also reduce the flow resistance of the fluid, allowing the fluid to flow smoothly within the fourth bent portion 14, and effectively preventing the reduction of heat exchange efficiency due to excessively slow fluid flow.

In some embodiments of this application, referring to FIG. 7, the fixing member 25 is connected to the fourth bent portion 14 or a portion of the first heat exchange portion 111 close to the fourth bent portion 14.

It can be understood that the fixing member 25 may be connected to the fourth bent portion 14, or the fixing member 25 is connected to the portion of the first heat exchange portion 111 close to the fourth bent portion 14. This can provide a restraining and limiting effect on a region where the fourth bent portion 14 is located, reducing the probability of detachment or insufficient adhesive compression between a position where the fourth bent portion 14 is located and the casing 200, improving the stability of the heat exchange fluid flowing through the fourth bent portion 14, and helping to improve the operating reliability of the first heat exchange member 100, thereby improving the reliability of the battery 1.

In the above technical solution, the fixing member 25 is set to be connected to the fourth bent portion 14 or the portion of the first heat exchange portion 111 close to the fourth bent portion 14, so that the probability of adhesive failure or insufficient adhesive compression between the position where the fourth bent portion 14 is located and the casing 200 can be reduced, improving the heat exchange reliability between the heat exchange fluid and the battery cell 102 when the heat exchange fluid flows through the fourth bent portion 14, thereby improving the reliability of the battery 1.

In some embodiments of this application, referring to FIG. 7 and FIG. 12, the first heat exchange flow passage 10 further includes a first inlet/outlet section 15. One end of the first inlet/outlet section 15 is connected to the third heat exchange section 13 at an included angle, and the other end of the first inlet/outlet section 15 is formed as a first inlet/outlet of the first heat exchange flow passage 10. The first inlet/outlet section 15 extends along the second direction Y away from the first heat exchange section 11. The third heat exchange section 13 extends along the first direction X.

The first inlet/outlet is used for the inflow or outflow of the heat exchange fluid. When the first inlet/outlet is used for the inflow of the heat exchange fluid, the first inlet/outlet section 15 is used to transport the heat exchange fluid into the third heat exchange section 13. When the first inlet/outlet is used for the outflow of the heat exchange fluid, the first inlet/outlet section 15 is used to guide the heat-exchanged heat exchange fluid out of the first heat exchange flow passage 10 through the first inlet/outlet.

The first inlet/outlet section 15 is connected to the third heat exchange section 13 at an included angle. For example, the first inlet/outlet section 15 is connected to the third heat exchange section 13 at an angle greater than 0° and less than or equal to 180°. For example, the included angle between the first inlet/outlet section 15 and the third heat exchange section 13 is 30°, 45°, 60°, 90°, 120°, 135°, or 150°.

A certain included angle is formed between the first inlet/outlet section 15 and the third heat exchange section 13, so that a certain space is formed on a side of the third heat exchange section 13 facing the first inlet/outlet section 15, which can facilitate the layout of other components in the battery 1.

In the above technical solution, providing the first inlet/outlet section 15 can facilitate connection to an external pipeline, allowing a heat exchange medium to enter or exit the first heat exchange flow passage 10. In addition, the heat exchange fluid entering or exiting the first heat exchange flow passage 10 can also be guided, and allowing the heat exchange fluid to enter or exit quickly, thereby improving the heat exchange velocity. Setting the first inlet/outlet section 15 to extend along the second direction Y away from the first heat exchange section 11 allows the pipeline arrangement of the first heat exchange flow passage 10 to be more reasonable and facilitates connection to the external pipeline. In addition, this also allows the first inlet/outlet to be away from the battery module, helping to reduce the occurrence of damage to the battery module due to liquid leakage from the first inlet/outlet.

According to some embodiments of this application, referring to FIG. 7 and FIG. 12, the second heat exchange section 12 may further include a sixth bent portion 126. The sixth bent portion 126 is connected between the fourth heat exchange portion 125 and the second heat exchange portion 121.

The sixth bent portion 126 is arc-shaped. That is, the sixth bent portion 126 extends along an arc line. Fluid flow directions at both ends of the sixth bent portion 126 have a certain included angle. Thus, the sixth bent portion 126 can change the fluid flow direction, allowing the second heat exchange portion 121 and the fourth heat exchange portion 125 to extend along a preset direction. In addition, the arc-shaped sixth bent portion 126 can reduce the flow resistance of the fluid and reduce the pressure drop, thereby increasing the flow rate of the heat exchange fluid and further improving the heat exchange efficiency of the first heat exchange flow passage 10.

In the above technical solution, providing the sixth bent portion 126 can change the fluid flow direction within the first heat exchange flow passage 10, achieving a tortuous arrangement of the first heat exchange flow passage 10. Thus, the heat exchange area of the first heat exchange flow passage 10 can be increased, and the heat exchange efficiency of the first heat exchange flow passage 10 can be improved. In addition, the arc-shaped sixth bent portion 126 can also reduce the flow resistance of the fluid and reduce the pressure drop, thereby increasing the flow rate of the heat exchange fluid and further improving the heat exchange efficiency of the first heat exchange flow passage 10.

According to some embodiments of this application, referring to FIG. 7 and FIG. 12, the sixth bent portion 126 is quarter-circular arc-shaped.

That is, the sixth bent portion 126 can extend along a semi-circular arc line. Specifically, the sixth bent portion 126 can extend along a quarter-circular arc line that protrudes away from the first heat exchange section 11. An included angle between an inlet and outlet of the sixth bent portion 126 is 90°. The sixth bent portion 126 is similar to a 90° elbow in a pipe material, which can change the flow passage direction, allowing the fluid flow direction to be changed by 90° after the fluid passes through the sixth bent portion 126.

Optionally, the sixth bent portion 126 may be semi-circular arc-shaped. That is, the sixth bent portion 126 can extend along a semi-circular arc line, the included angle between the inlet and outlet of the sixth bent portion 126 is 180°, and the flow directions at the outlet and inlet positions of the sixth bent portion 126 are opposite, so that the fourth heat exchange portion 125 and the second heat exchange portion 121 are closer to each other, and the structures of the fourth heat exchange portion 125 and the second heat exchange portion 121 are more compact and reliable. In other embodiments, a bent degree of the sixth bent portion 126 can also be adjusted as needed, for example, it may be 150° or 135°. This is not limited in the embodiments of this application.

Further, the sixth bent portion 126 connects the second heat exchange portion 121 and the fourth heat exchange portion 125. In this case, the second heat exchange portion 121 and the fourth heat exchange portion 125 are arranged perpendicular to each other.

In the above technical solution, the sixth bent portion 126 is set to be quarter-circular arc-shaped, so that after the fluid passes through the sixth bent portion 126, the flow direction of the fluid can be changed from an original flow direction to a direction perpendicular to the original flow direction. In addition, the arc shape can further reduce the flow resistance of the fluid, allowing the fluid to flow smoothly within the sixth bent portion 126, and effectively preventing the reduction of heat exchange efficiency due to excessively slow fluid flow.

In some embodiments of this application, referring to FIG. 7, the fixing member 25 is connected to the sixth bent portion 126 or a portion of the second heat exchange portion 121 close to the sixth bent portion 126.

It can be understood that the fixing member 25 may be connected to the sixth bent portion 126, or the fixing member 25 is connected to the portion of the second heat exchange portion 121 close to the sixth bent portion 126 (see FIG. 7 and FIG. 12). Thus, the fixing member 25 can provide a restraining and limiting effect on a region where the sixth bent portion 126 is located, reducing the probability of adhesive failure or insufficient adhesive compression between a position where the sixth bent portion 126 is located and the casing 200, improving the stability of the heat exchange fluid flowing through the sixth bent portion 126, and helping to improve the operating reliability of the first heat exchange member 100, thereby improving the reliability of the battery 1.

In the above technical solution, the fixing member 25 is set to be connected to the sixth bent portion 126 or the portion of the second heat exchange portion 121 close to the sixth bent portion 126, so that the probability of adhesive failure or insufficient adhesive compression between the position where the sixth bent portion 126 is located and the casing 200 can be reduced, improving the heat exchange reliability between the heat exchange fluid and the battery cell 102 when the heat exchange fluid flows through the sixth bent portion 126, thereby improving the reliability of the battery 1.

In some embodiments of this application, referring to FIG. 7 and FIG. 12, the first heat exchange flow passage 10 further includes a second inlet/outlet section 17. One end of the second inlet/outlet section 17 is connected to the fourth heat exchange portion 125 at an included angle, and the other end of the second inlet/outlet section 17 is formed as a second inlet/outlet of the first heat exchange flow passage 10. The second inlet/outlet section 17 extends along the second direction Y away from the first heat exchange section 11. The fourth heat exchange portion 125 extends along the first direction X.

The second inlet/outlet is used for the inflow or outflow of the heat exchange fluid. When the second inlet/outlet is used for the inflow of the heat exchange fluid, the second inlet/outlet section 17 is used to transport the heat exchange fluid into the third heat exchange section 13. The second inlet/outlet is used for the outflow of the heat exchange fluid, the second inlet/outlet section 17 is used to guide the heat-exchanged heat exchange fluid out of the first heat exchange flow passage 10 through the second inlet/outlet.

The second inlet/outlet section 17 is connected to the fourth heat exchange portion 125 at an included angle. For example, the second inlet/outlet section 17 is connected to the fourth heat exchange portion 125 at an angle greater than 0° and less than or equal to 180°. For example, the included angle between the second inlet/outlet section 17 and the fourth heat exchange portion 125 is 30°, 45°, 60°, 90°, 120°, 135°, or 150°.

It can be understood that a certain included angle is formed between the second inlet/outlet section 17 and the fourth heat exchange portion 125, so that a certain space is formed on a side of the fourth heat exchange portion 125 facing the second inlet/outlet section 17. This can facilitate the layout of other components (structures such as high-voltage boxes) in the battery 1.

In the above technical solution, providing the second inlet/outlet section 17 can facilitate connection to the external pipeline, allowing the heat exchange medium to enter or exit the first heat exchange flow passage 10 to complete heat exchange for the battery cell 102. In addition, the heat exchange fluid entering or exiting the first heat exchange flow passage 10 can also be guided, allowing the heat exchange fluid to enter or exit quickly, thereby improving the heat exchange velocity. Setting the second inlet/outlet section 17 to extend along the second direction Y away from the first heat exchange section 11 allows the pipeline arrangement of the first heat exchange flow passage 10 to be more reasonable and facilitates connection to the external pipeline. In addition, this also allows the second inlet/outlet to be away from the battery module, helping to reduce the occurrence of damage to the battery module due to liquid leakage at the second inlet/outlet.

According to some embodiments of this application, referring to FIG. 7 and FIG. 12, the first heat exchange flow passage 10 further includes a seventh bent portion 18. The seventh bent portion 18 is arc-shaped and connected between the fourth heat exchange portion 125 and the second inlet/outlet section 17 in a bent manner.

The seventh bent portion 18 is arc-shaped. That is, the seventh bent portion 18 has a certain included angle. Thus, the seventh bent portion 18 is connected between the fourth heat exchange portion 125 and the second inlet/outlet section 17 in a bent manner, which can realize the communication between the fourth heat exchange portion 125 and the second inlet/outlet section 17, allowing the heat exchange fluid to flow smoothly from the fourth heat exchange portion 125 to the second inlet/outlet section 17 or flow from the second inlet/outlet section 17 to the fourth heat exchange portion 125, thereby realizing the inflow or outflow of the second inlet/outlet section 17. In addition, the arc shape can also reduce the flow resistance of the fluid and reduce the pressure drop, thereby increasing the flow rate of the heat exchange fluid and further improving the heat exchange efficiency of the first heat exchange flow passage 10.

In the above technical solution, providing the seventh bent portion 18 allows the heat exchange fluid to flow smoothly from the fourth heat exchange portion 125 to the second inlet/outlet section 17 or flow from the second inlet/outlet section 17 to the fourth heat exchange portion 125, realizing the inflow or outflow of the second inlet/outlet section 17. In addition, the arc-shaped seventh bent portion 18 can also reduce the flow resistance of the fluid and reduce the pressure drop, thereby increasing the flow rate of the heat exchange fluid and further improving the heat exchange efficiency of the first heat exchange flow passage 10.

According to some embodiments of this application, referring to FIG. 7 and FIG. 12, the seventh bent portion 18 is arc-shaped, and a central angle corresponding to the seventh bent portion 18 is greater than or equal to 90° and less than 180°. For example, the central angle corresponding to the seventh bent portion 18 may be 90°, 120°, 150°, or 170°.

In the above technical solution, the seventh bent portion 18 is set to be arc-shaped, so that the flow resistance of the fluid can be further reduced, allowing the fluid to flow smoothly within the seventh bent portion 18, and effectively preventing the reduction of heat exchange efficiency due to excessively slow fluid flow. In addition, the central angle corresponding to the seventh bent portion 18 being greater than or equal to 90° and less than 180° can also form an avoidance space on the side of the fourth heat exchange portion 125 facing the second inlet/outlet section 17, thereby facilitating the layout of other components in the battery 1, and improving the rationality of the layout of the battery 1.

According to some embodiments of this application, the first heat exchange section 11 is connected downstream of the second heat exchange section 12 in the fluid flow direction. That is, the heat exchange fluid first flows through the second heat exchange section 12, and then flows into the first heat exchange section 11. The second heat exchange section 12 is wound around the circumference of the first heat exchange section 11. When the first heat exchange flow passage 10 exchanges heat with the battery module formed by a plurality of rows of battery cells 102, since a peripheral temperature of the battery module dissipates heat relatively quickly, especially in a low-temperature heating condition, a high-temperature heat exchange fluid starts to exchange heat from the second heat exchange section 12. This allows the first heat exchange flow passage 10 to prioritize heat exchange with the outer circumference of the battery module, thereby helping to alleviate the internal and external temperature difference of the battery module, and extending the service life of the battery 1 to a certain extent.

In the above technical solution, setting the first heat exchange section 11 to be connected downstream of the second heat exchange section 12 in the fluid flow direction allows the first heat exchange flow passage 10 to prioritize heat exchange with the outer circumference of the battery 1, thereby helping to alleviate the temperature difference of the battery 1 in different environments, and extending the service life of the battery 1 to a certain extent.

According to some embodiments of this application, the first heat exchange member 100 is configured as follows: when the battery module of the battery 1 is heated, the first heat exchange section 11 is connected downstream of the second heat exchange section 12 in the fluid flow direction; when the battery module of the battery 1 is cooled, the first heat exchange section 11 is connected upstream of the second heat exchange section 12 in the fluid flow direction.

Specifically, when the battery module of the battery 1 is heated, the temperature of the heat exchange fluid flowing in the first heat exchange member 100 is higher than an operating temperature of the battery 1, and the first heat exchange member 100 heats the battery module. The high-temperature heat exchange fluid first flows into the second heat exchange section 12 and then flows to the first heat exchange section 11. The temperature of the heat exchange fluid flowing inside the second heat exchange section 12 is higher than the temperature of the heat exchange fluid inside the first heat exchange section 11.

Since the high-temperature fluid first enters the second heat exchange section 12 located at the periphery of the first heat exchange flow passage 10, the second heat exchange section 12 can first heat the battery cell 102 at the periphery of the battery module, and then the heat exchange fluid enters the first heat exchange section 11 to cool the battery cell 102 at the middle position of the battery module. Since the battery cell 102 at the periphery of the battery 1 dissipate more heat to the external environment, the temperature of the battery cell 102 at the periphery of the battery 1 drops more. The heat exchange fluid first heats the battery cell 102 at the periphery of the battery 1. The heat exchange fluid with a relatively high temperature can increase the temperature of the battery cell 102 at the periphery and compensate for the heat lost by the battery cell 102 due to heat dissipation to the external environment, meeting the heating needs. The battery cell 102 at the middle position of the battery module has a small contact area with the external environment and less heat loss. The heat exchange fluid with a relatively low temperature flowing in the first heat exchange section 11 can cooperate with the heat generated by the battery cell 102 to well meet the heating needs. Thus, the battery cell 102 at the periphery of the battery module and the battery cell 102 at the middle position of the battery module can obtain substantially consistent heating effects, thereby making the temperature of the battery cell 102 at the periphery of the battery module and the battery cell 102 at the middle position of the battery module more consistent after heated, and making the temperature distribution inside the battery 1 more uniform.

When the battery module of the battery 1 is cooled, the temperature of the heat exchange fluid flowing in the first heat exchange member 100 is lower than the operating temperature of the battery 1. The first heat exchange member 100 is configured to cool the battery 1. The heat exchange fluid flows from the first heat exchange section 11 to the second heat exchange section 12. The temperature of the heat exchange fluid flowing inside the first heat exchange section 11 is lower than the temperature of the heat exchange fluid inside the second heat exchange section 12.

When the battery 1 is cooled, the heat exchange fluid flows from the first heat exchange section 11 to the second heat exchange section 12. That is, the heat exchange fluid flows from a middle position of the battery module to an edge position of the battery module and exchanges heat. Since the heat dissipation of the battery cell 102 at a peripheral position of the battery 1 is better than that of the inner battery cell 102, the heat exchange fluid with a relatively low temperature in the first heat exchange section 11 can better meet the heat dissipation needs of the battery cell 102 at the middle position of the battery 1. In addition, since the battery cell 102 at the peripheral position of the battery module can directly dissipate heat naturally to the external environment, even if the temperature of the heat exchange fluid in the second heat exchange section 12 is slightly higher, the heat dissipation needs of the battery cell 102 at the periphery can still be met, so that the battery cell 102 at the peripheral position of the battery 1 and the battery cell 102 at the middle position of the battery 1 obtain roughly consistent cooling effects, thereby making the temperature of the battery cell 102 at the peripheral position of the battery 1 and the battery cell 102 at the middle position of the battery 1 more consistent after cooled, reducing the internal and external temperature difference of the battery module, and making the temperature distribution inside the battery 1 more uniform.

In the above technical solution, the first heat exchange member 100 is set to be configured as follows: when the battery module of the battery 1 is heated, the first heat exchange section 11 is connected downstream of the second heat exchange section 12 in the fluid flow direction; when the battery module of the battery 1 is cooled, the first heat exchange section 11 is connected upstream of the second heat exchange section 12 in the fluid flow direction, the heat exchange effect on the battery 1 can be further improved, and the temperature uniformity of the battery module can be improved.

In some embodiments of this application, the first heat exchange member 100 has one or more heat exchange flow passages. When a plurality of heat exchange flow passages are provided, the plurality of heat exchange flow passages are arranged at intervals along the first direction X or wound around one another. At least one heat exchange flow passage forms the first heat exchange flow passage 10.

It can be understood that the number of heat exchange flow passages of the first heat exchange member 100 may be one, two, three, four, or more. When a plurality of heat exchange flow passages are provided, one of the plurality of heat exchange flow passages can form the first heat exchange flow passage 10; alternatively, two, three, four, or more heat exchange flow passages can form the first heat exchange flow passage 10; or all of the plurality of heat exchange flow passages can form the first heat exchange flow passage 10.

In some specific embodiments, a plurality of heat exchange flow passages are arranged at intervals along the first direction. For example, as shown in FIG. 7 and FIG. 12, the first heat exchange member 100 may include two heat exchange flow passages. The two first heat exchange flow passages 10 are arranged at intervals along the first direction. Further, the two heat exchange flow passages can both form the first heat exchange flow passage 10. For another example, the first heat exchange member 100 may include three heat exchange flow passages. The three heat exchange flow passages are arranged sequentially along the first direction. Further, two of the three heat exchange flow passages are the first heat exchange flow passages 10, and one is the second heat exchange flow passage. The second heat exchange flow passage is arranged between two first heat exchange flow passages 10.

In the above embodiments, the first heat exchange member 100 is set to have one or more heat exchange flow passages, and the plurality of heat exchange flow passages are arranged at intervals along the first direction or wound around one another, so that the diversity of heat exchange flow passages can be improved, thereby improving the adaptability of the first heat exchange member 100, allowing the first heat exchange member 100 to meet different needs of the battery 1, and thus improving the market competitiveness of the battery 1. In addition, the plurality of heat exchange flow passages are arranged in parallel, so that the plurality of heat exchange flow passages can exchange heat simultaneously, thereby reducing the heat exchange time of the first heat exchange member 100 and improving the heat exchange efficiency.

In some embodiments of this application, referring to FIG. 12, the plurality of heat exchange flow passages are symmetrically arranged with respect to a center line of the first heat exchange member 100 along the second direction Y. The second direction Y and the first direction X are arranged at an included angle.

Flow directions and inlets and outlets at both ends of the plurality of heat exchange flow passages are also symmetrically arranged, so that the first heat exchange member 100 can be divided into two symmetrically distributed portions. Thus, during the heat exchange process, the fluid distribution of structures of two symmetrical portions of the first heat exchange member 100 is consistent, which can improve the temperature consistency of heat exchange regions of the battery module corresponding to the two portions of the first heat exchange member 100, thereby further improving the temperature equalization effect of the battery module.

In the above embodiments, the plurality of heat exchange flow passages are set to be symmetrically arranged with respect to the center line of the first heat exchange member 100 along the second direction Y, so that the plurality of heat exchange flow passages can exchange heat with the battery module synchronously, improving the heat exchange efficiency. In addition, the temperature consistency of the heat exchange regions corresponding to the two symmetrically arranged portions of the battery module and the first heat exchange member 100 can also be improved, thereby further improving the temperature equalization effect of the battery module.

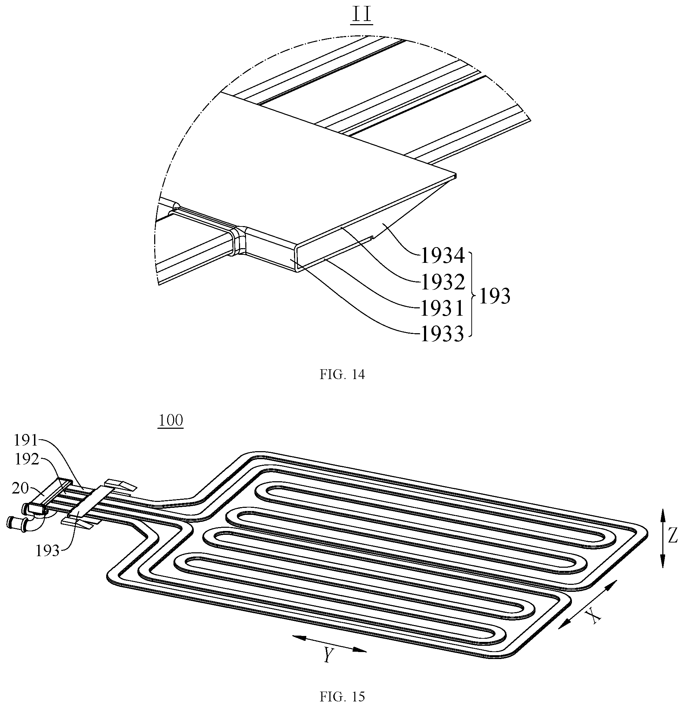

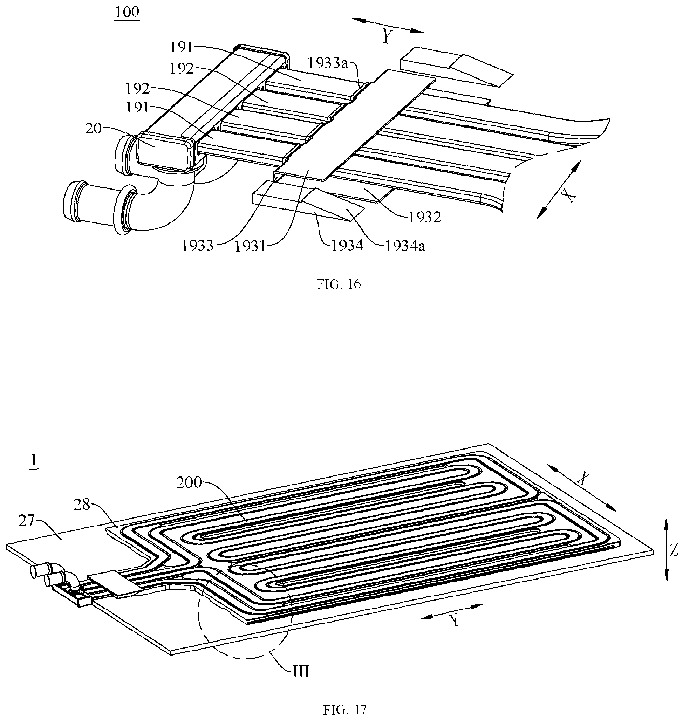

An installation member 193 according to an embodiment of this application is described below with reference to FIGs. 13 to 16. FIG. 13 is a first schematic three-dimensional structural diagram of a first heat exchange member 100 according to another embodiment of this application. FIG. 14 is an enlarged view of part II circled in FIG. 13. FIG. 15 is a schematic three-dimensional structural diagram of the first heat exchange member 100 from another angle. FIG. 16 is an enlarged view of a partial structure of FIG. 15.

In some embodiments of this application, referring to FIGs. 13 to 16, the first heat exchange member 100 includes a first pipe portion 191, a second pipe portion 192, and an installation member 193. An inlet end of the first pipe portion 191 is formed as a first inlet/outlet of the heat exchange flow passage. An outlet end of the second pipe portion 192 is formed as a second inlet/outlet of the heat exchange flow passage. The installation member 193 is configured to be hermetically connected to the casing 200. A through hole 1933a is formed on the installation member 193 and is in communication with spaces on both sides of the installation member 193. The first pipe portion 191 and/or the second pipe portion 192 passes through the through hole 1933a and is hermetically connected to the through hole 1933a.

One end of the first pipe portion 191 is formed as the first inlet/outlet of the heat exchange flow passage. One end of the second pipe portion 192 is formed as the second inlet/outlet of the heat exchange flow passage.

Specifically, the first pipe portion 191 and the second pipe portion 192 are mainly used for a fluid collector 20 to provide a heat exchange fluid to the heat exchange flow passage or discharge the heat-exchanged heat exchange fluid, so that the heat exchange member 100 can realize heat exchange. Both the first inlet/outlet and the second inlet/outlet can be used for the inflow and outflow of the heat exchange fluid. When the first inlet/outlet is used as an inflow end of the heat exchange fluid, the second inlet/outlet is used as an outflow end of the heat exchange fluid. When the first inlet/outlet is used as the outflow end of the heat exchange fluid, the second inlet/outlet is used as the inflow end of the heat exchange fluid.

The installation member 193 is configured to be hermetically connected to the casing 200 of the battery 1. The through hole 1933a in communication with the spaces on both sides of the installation member 193 is formed on the installation member 193. The first pipe portion 191 and/or the second pipe portion 192 passes through the through hole 1933a and is hermetically connected to a peripheral edge of the through hole 1933a. That is, at least one of the first pipe portion 191 and the second pipe portion 192 passes through the through hole 1933a and is hermetically connected to the through hole 1933a.

Specifically, the spaces on both sides of the installation member 193 are respectively a space for placing the first heat exchange member 100 and a space for connecting the first inlet/outlet and the second inlet/outlet to an external pipeline. The installation member 193 is configured to be hermetically connected to the casing 200 of the battery 1, so that the spaces on both sides of the installation member 193 may be independent of each other. Thus, when leakage occurs at a connection position between the first inlet/outlet and the second inlet/outlet and the fluid collector 20, the heat exchange fluid does not enter the space where the first heat exchange member 100 is placed, which can effectively reduce the risk of corrosion of the first heat exchange member 100.

In the prior art, in order to reduce the risk of corrosion of the first heat exchange member 100, a gap between the first pipe portion 191 and the second pipe portion 192 and the casing 200 is typically sealed, so that a large amount of sealing structural adhesive and a lot of manpower are used, thus leading to low production efficiency and high production cost of the battery 1.

In the above technical solution, after the installation member 193 is sealed with the first pipe portion 191 and the second pipe portion 192, the installation member 193 is then sealed with the casing 200. This not only increases the structural strength at positions of the first pipe portion 191 and the second pipe portion 192, but also reduces the labor and materials required for sealing. Thus, the production rate of the battery 1 can be improved, and the labor cost for production of the battery 1 can be reduced.

In the above embodiment, the installation member 193 is provided, so that the first pipe portion 191 and the second pipe portion 192 do not need to be separately sealed with the casing 200 when the battery 1 is assembled. This can reduce the labor and materials required for assembling the battery 1, thereby improving the production rate of the battery 1 and reducing the labor cost for production of the battery 1.

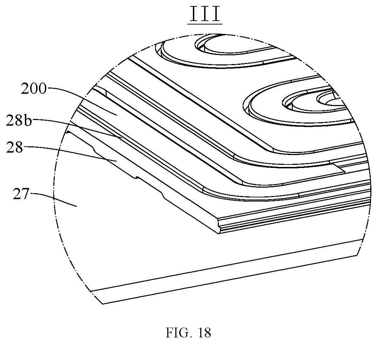

In some embodiments of this application, referring to FIGs. 6, 13 to 19, the battery 1 further includes a protective plate 27. The protective plate 27 is disposed on a side of the first heat exchange member 100 away from the casing 200. An outer peripheral surface of the protective plate 27 is hermetically connected to the casing 200, jointly forming a third cavity 101a configured to accommodate the first heat exchange member 100. The installation member 193 has a cavity with an opening on one side. The through hole 1933a runs through a bottom wall of the cavity opposite to the opening. The installation member 193 is adapted to be disposed between the casing 200 and the protective plate 27. An outer peripheral surface of the installation member 193 is adapted to be hermetically connected to the casing 200 and the protective plate 27.

The installation member 193 has the cavity with the opening on one side. It should be noted that the opening side of the installation member 193 can face a side of a space where the first inlet/outlet and the second inlet/outlet are located, or face a space of a side facing away from the first inlet/outlet and the second inlet/outlet.

Further, the opening side of the installation member 193 faces the space of the side facing away from the first inlet/outlet and the second inlet/outlet. For example, the opening of the cavity is disposed facing away from the fluid collector 20, which can effectively prevent dust and other impurities from accumulating in the installation member 193.

The installation member 193 is adapted to be disposed between the casing 200 and the protective plate 27, which means that the first heat exchange member 100 is disposed between the bottom wall of the casing 200 and the protective plate 27, that is, the first heat exchange member 100 is disposed on the outer side of the casing 200. This can effectively reduce the damage to the battery cell 102 caused by leakage of the first heat exchange member 100. In addition, the protective plate 27 is disposed on a lower side of the casing 200, which can further improve the structural strength of the bottom of the battery 1, improve the bearing strength of the bottom plate 23, and protect the bottom from being impacted, thereby effectively reducing the safety issues of the plurality of battery cells 102 and the first heat exchange member 100 due to the bottom impact.

The outer peripheral surface of the installation member 193 is adapted to be hermetically connected to the casing 200 and the protective plate 27. It should be noted that the outer peripheral surface of the installation member 193 can be designed according to specific structures of the casing 200 and the protective plate 27. For example, if the bottom of the casing 200 and the protective plate 27 are both flat plates, the outer peripheral surface of the installation member 193 can also be formed into a flat plate shape, so that the outer peripheral surface of the installation member 193 can be hermetically connected to the bottom plate 23 and the protective plate 27, improving the sealing performance between the bottom plate 23 and the protective plate 27.

For example, as shown in FIGs. 13 to 16, the installation member 193 includes a first plate 1931, a second plate 1932, and a mounting plate 1933. The mounting plate 1933 is vertically disposed. The first plate 1931 is horizontally disposed and connected to one end of the mounting plate 1933 in the direction Z. The second plate 1932 is horizontally disposed and connected to the other end of the mounting plate 1933 in the direction Z. In addition, the first plate 1931 and the second plate 1932 are located on a same side of the mounting plate 1933 in a thickness direction and are arranged at intervals along the direction Z. A plurality of through holes 1933a are formed on the mounting plate 1933, and the plurality of through holes 1933a are respectively a first through hole and a second through hole. The first pipe portion 191 passes through the first through hole. The second pipe portion 192 passes through the second through hole.

Further, the first pipe portion 191 is welded to a peripheral edge of the first through hole. The second pipe portion 192 is welded to a peripheral edge of the second through hole.

Further, one or more first through holes are provided. The first through hole is in one-to-one correspondence with the first pipe portion 191. One or more second through holes are provided. The second through hole is in one-to-one correspondence with the second pipe portion 192.

Further, one end of the first plate 1931 is connected to the mounting plate 1933, and the other end extends toward the first heat exchange section 11. One end of the second plate 1932 is connected to the mounting plate 1933, and the other end extends toward the first heat exchange section 11. Further, in a direction from the installation member 193 to the first heat exchange section 11, the length of the first plate 1931 is different from the length of the second plate 1932. For example, the length of the first plate 1931 is less than the length of the second plate 1932. Specifically, the length of the first plate 1931 is less than two-thirds of the length of the second plate 1932.

Further, the first plate 1931, the second plate 1932, and the mounting plate 1933 are integrally formed.

Further, the installation member 193 further includes stoppers 1934. The stoppers 1934 are arranged at both ends of the mounting plate 1933 in a length direction (for example, the first direction X in FIG. 16). The stoppers 1934 are hermetically connected to all of the mounting plate 1933, the first plate 1931, and the second plate 1932. For example, the stoppers 1934 can be welded or adhesively connected to all of the mounting plate 1933, the first plate 1931, and the second plate 1932. The mounting plate 1933, the first plate 1931, the second plate 1932, and the two stoppers 1934 enclose the cavity.

Referring to FIG. 16, a side surface of the stopper 1934 facing away from the mounting plate 1933 is formed as an inclined surface 1934a. The length of the first plate 1931 is less than the length of the second plate 1932. An end of the inclined surface 1934a facing the first plate 1931 is flush with an end of the first plate 1931 facing away from the mounting plate 1933. In a direction from the first plate 1931 to the second plate 1932, the other end of the inclined surface 1934a extends obliquely to an end of the second plate 1932 facing away from the mounting plate 1933.

In addition, it should be noted that a sealing member is disposed at a peripheral edge of the first heat exchange member 100. The sealing member extends along a circumferential direction of the first heat exchange member 100. The sealing member extends to form a ring, or after the sealing member surrounds the first heat exchange member 100, both ends of the sealing member are connected to the installation member 193. The sealing member may be a sealant.

In the above embodiments, setting the installation member 193 as a cavity with an opening on one side can reduce the overall weight of the installation member 193, thereby reducing the overall weight of the entire battery 1, and facilitating the lightweight design of the battery 1. In addition, the installation member 193 is adapted to be disposed between the casing 200 and the protective plate 27, so that the bottom of the casing 200 can isolate the first heat exchange member 100 and a plurality of battery cells 102. Thus, when the first heat exchange member 100 is damaged, no influence is generated on the plurality of battery cells 102, thereby reducing the maintenance cost of battery 1.

In some embodiments of this application, referring to FIGs. 4, 6, and 17, the battery 1 further includes a protective plate 27. The protective plate 27 is disposed on a side of the first heat exchange member 100 away from the casing 200. An outer peripheral surface of the protective plate 27 is hermetically connected to the casing 200, jointly forming a third cavity 101a configured to accommodate the first heat exchange member 100. The battery 1 further includes a filler 28. The filler 28 is filled in a gap between the first heat exchange member 100 and the third cavity 101a.

The protective plate 27 may refer to a plate configured to protect the first heat exchange member 100. When the battery 1 is impacted, the protective plate 27 can bear the impact force, reducing the damage to the first heat exchange member 100 caused by the impact, thereby improving the reliability of the first heat exchange member 100. Exemplarily, when an electric apparatus is a vehicle 1000, the battery 1 is disposed at the bottom of the vehicle. The battery 1 is easily impacted by objects such as stones during the driving process of the vehicle 1000. Since the first heat exchange member 100 is disposed on an outer side of the casing 200, the protective plate 27 can bear the impact of objects such as stones, reducing the probability of damage to the first heat exchange member 100, and providing good protection for the first heat exchange member 100.

Optionally, the protective plate 27 may be, but is not limited to, a metal component or a plastic component. Exemplarily, the protective plate 27 may be a steel plate or an aluminum plate.

An arrangement position of the protective plate 27 on the casing 200 corresponds to the first heat exchange member 100. Referring to the foregoing description, the casing 200 may include a casing body 22, a bottom plate 23, and a top plate 24. When the first heat exchange member 100 is attached to an outer side of the casing body 22, the protective plate 27 is disposed on a side of the casing 200. When the first heat exchange member 100 is attached to an outer side of the top plate 24, the protective plate 27 is disposed at the top of the casing 200. When the first heat exchange member 100 is attached to an outer side of the bottom plate 23, the protective plate 27 is disposed at the bottom of the casing 200 (referring to FIGs. 4, 5, and 6).

The third cavity 101a may refer to a closed space jointly defined by the protective plate 27 and the casing 200. The first heat exchange member 100 is disposed in the third cavity 101a, which can reduce external impacts and contact with water and dust in the external environment, thereby reducing the probability of damage to the first heat exchange member 100 and extending the service life of the first heat exchange member 100.

The filler 28 may refer to a substance or a material used to fill gaps and empty spaces between materials. For example, the filler 28 may include, but is not limited to, a plastic material and a foamed material. Optionally, the filler 28 is a foamed material, and the foamed material may refer to a material with a closed or open foamed structure. The filler 28 may include, but is not limited to, polystyrene foam and polyurethane foam.

Optionally, the filler 28 may be a molded component and integrated on a side surface of the casing 200 close to the first heat exchange member 100. For example, the filler 28 can be integrated on one of the casing body 22, the bottom plate 23, and the top plate 24. In this example, the first heat exchange member 100 can be installed on the filler 28, and then the protective plate 27 is installed on the casing 200. The filler 28 can alternatively be integrated on the side surface of the protective plate 27 close to the first heat exchange member 100. In this example, the first heat exchange member 100 can be installed on the casing 200, and then the protective plate 27 is installed on the casing 200.

Referring to FIGs. 6, 18, and 19, the filler 28 can be provided with an installation groove 28b. The first heat exchange member 100 is disposed in the installation groove 28b, thereby improving the installation reliability of the first heat exchange member 100 and the filler 28.

Optionally, the protective plate 27 and the casing 200 may also be provided with injection holes. The filler 28 is a foamed material, and the foam can be injected into the third cavity 101a through the injection holes, thereby filling the gap between the first heat exchange member 100 and the third cavity 101a, and forming after cooling.

In the above technical solution, setting the protective plate 27 on the side of the first heat exchange member 100 away from the casing 200 can protect the first heat exchange member 100, reducing the probability of the first heat exchange member 100 being impacted. The filler 28 can isolate the first heat exchange member 100 and the protective plate 27 and provide a buffering effect when the protective plate 27 is impacted, reducing the damage to the first heat exchange member 100 when the protective plate 27 is impacted, thereby improving the reliability of the first heat exchange member 100. Moreover, the filler 28 is filled in the gap between the first heat exchange member 100 and the third cavity 101a, so that the filler 28 can act on the first heat exchange member 100, the casing 200, and the protective plate 27, making the installation of the first heat exchange member 100 in the third cavity 101a more secure, reducing the probability of displacement of the first heat exchange member 100 in the third cavity 101a, and improving the stability of the first heat exchange member 100. Secondly, the filler 28 can also provide thermal insulation, reducing the probability of heat exchange between the first heat exchange member 100 and the protective plate 27 as well as the external environment, so that the first heat exchange member 100 can perform concentrated heat exchange with the battery cell 102 in the accommodation cavity 21, helping to improve the heat exchange effect.

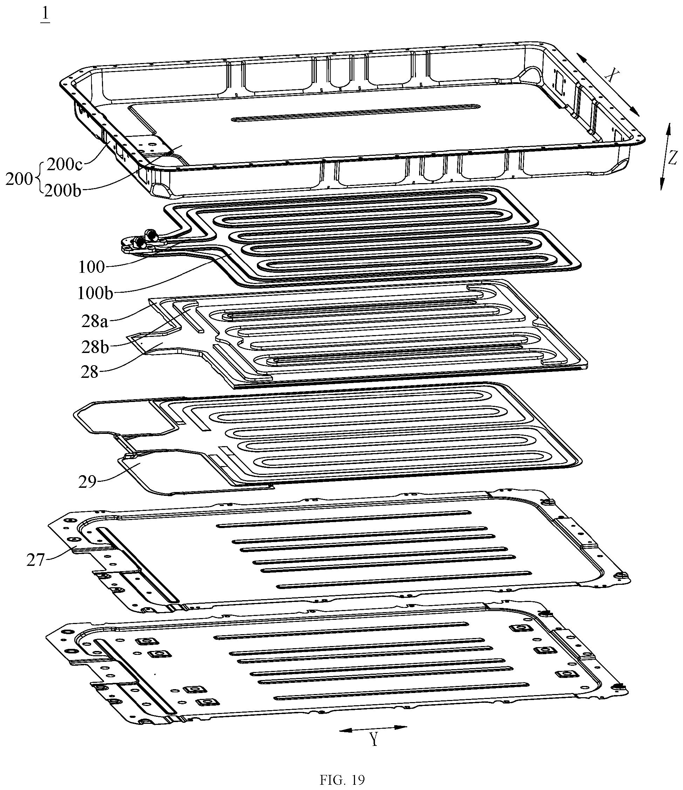

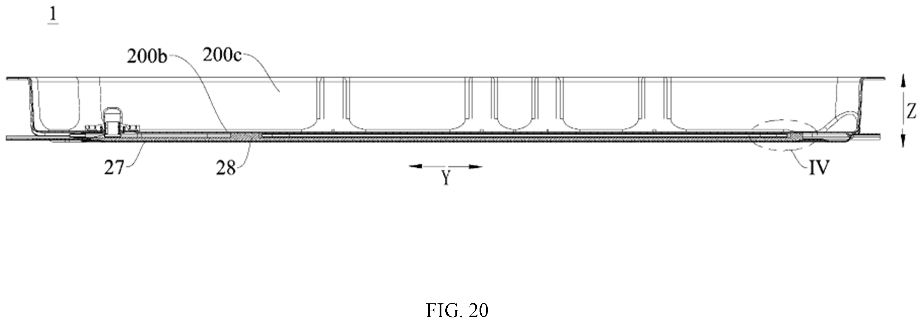

In some embodiments of this application, referring to FIGs. 19, 20, and 21, the filler 28 is a filling layer and is disposed on the protective plate 27. The filling layer has a first top surface 28a close to a side of the casing 200. The first heat exchange member 100 has a second top surface 100b close to a side of the casing 200. A height of the second top surface 100b relative to the protective plate 27 is greater than a height of the first top surface 28a relative to the protective plate 27. The battery 1 further includes an adhesive member 29. The adhesive member 29 is disposed on the first top surface 28a and the second top surface 100b.

The filling layer may refer to a layer of foamed material. The first top surface 28a may refer to a surface of the filling layer close to the casing 200. Exemplarily, when the first heat exchange member 100 and the protective plate 27 are disposed at the bottom of the casing 200, the first top surface 28a is an upper surface of the filling layer.

The second top surface 100b may refer to a surface of the first heat exchange member 100 close to the casing 200. Exemplarily, when the first heat exchange member 100 and the protective plate 27 are disposed at the bottom of the casing 200, the second top surface 100b is an upper surface of the first heat exchange member 100.

The adhesive member 29 may refer to a connecting member that adheres the filling layer and the first heat exchange member 100 to the casing 200 by using an adhesive material and can also provide a sealing effect. The adhesive member 29 may include, but is not limited to, glue, an adhesive tape, an adhesive, and a structural adhesive.

In the above technical solution, the second top surface 100b of the first heat exchange member 100 protrudes relative to the first top surface 28a of the filling layer. Thus, a gap between the first top surface 28a and the wall of the casing 200 is larger than a gap between the second top surface 100b and the wall of the casing 200. An adhesive thickness of the filling layer is larger than an adhesive thickness of the first heat exchange member 100. A larger adhesive thickness of the filling layer can improve the connection reliability between the filling layer and the casing 200, thereby helping to improve the installation reliability of the first heat exchange member 100. A smaller adhesive thickness of the first heat exchange member 100 can improve the connection reliability between the first heat exchange member 100 and the casing 200 and can also reduce the obstruction to heat exchange of the first heat exchange member 100, improving the heat exchange effect of the first heat exchange member 100 on the battery cell 102 in the casing 200, thereby helping to improve the heat exchange efficiency of the first heat exchange member 100.

In some embodiments of this application, referring to FIG. 19, the casing 200 is an integrally stamped component and includes a bottom wall 200b and a peripheral wall 200c.

The bottom wall 200b may refer to a bottom wall of the casing 200. The peripheral wall 200c may refer to a peripheral annular wall of the casing 200. The first heat exchange member 100 may be attached to an outer side of the bottom wall 200b and/or the peripheral wall 200c.

In the related art, a water-cold plate of a battery is disposed at a bottom of a frame and configured to close an opening at the bottom of the frame, serving as a bottom wall of a casing. In this technical solution, a large number of fasteners (such as hundreds of screws) are required when the cold plate and the frame are assembled, and a sealant or a sealing gasket is required between the cold plate and the frame for sealing, which not only increases the manufacturing cost, but also poses a risk of sealing failure. In the above exemplary solution, the casing 200 being an integrally stamped component can reduce the sealing requirements. For example, a side of the casing 200 close to the first heat exchange member 100 may not need to be sealed, which can reduce the sealant and the sealing gasket used, reduce the cost, and also greatly reduce the probability of sealing failure, improving the reliability of the battery 1.

Secondly, compared to a method of forming a casing structure by fasteners between the cold plate and the frame, the casing 200 of this application is an integrally stamped component, which has neither fasteners such as screws nor welds. The casing 200 has better integrity, which helps to reduce the probability of positions with low strength, and can improve the structural strength and reliability of the casing 200.

In the above technical solution, the casing 200 is set to be an integrally stamped component, and the bottom and peripheral side of the casing 200 are closed, so that the casing 200 has relatively high sealing performance. After the first heat exchange member 100 is attached to an outer side of the casing 200, the sealing requirements for the casing 200 can be reduced, helping to simplify the assembly process and reduce the manufacturing cost. Moreover, since the casing 200 is an integrally stamped component, the casing 200 has relatively high structural strength, and the probability of deformation and impact damage is relatively low, helping to improve the reliability of the battery 1. In addition, since the casing 200 is an integrally stamped component, the casing 200 has relatively high strength and a relatively small wall thickness, which can reduce the weight of the casing 200 and increase the volumetric energy density of the battery 1.

In some embodiments of this application, referring to FIG. 7, the first heat exchange member 100 includes a plurality of flat tubes in communication with each other sequentially, and an inner wall of each flat tube encloses a heat exchange flow passage.

A flat tube may refer to a tube with a flat shape or a narrow diameter and a long length. The flat tube typically has an elliptical or rectangular cross-section.

The heat exchange flow passage may refer to a flow passage for circulating the heat exchange fluid. The heat exchange fluid can exchange heat with the battery cell 102 when flowing through the battery cell 102 along the heat exchange flow passage, thereby adjusting the temperature of the battery 1.

In the above technical solution, since the casing 200 is an integrally stamped component, on this basis, the first heat exchange member 100 is set to include a plurality of flat tubes, the structural arrangement of the first heat exchange member 100 and the casing 200 may be made more compact, and space utilization may be more efficient, helping to reduce the volume of the casing 200 and increase the volumetric energy density of the battery 1. Secondly, the flat tubes also have good pressure resistance and can withstand a certain amount of pressure and load and provide good pipeline protection and structural support, thereby helping to improve the reliability of the first heat exchange member 100.

In some embodiments of this application, the flat tube includes one of a bent aluminum alloy tube, an aluminum alloy harmonica cold tube, a stamped aluminum alloy cold plate, and a brazed aluminum alloy cold plate.

In the above technical solution, the flat tube is set to include one of the bent aluminum alloy tube, the aluminum alloy harmonica cold tube, a stamped aluminum alloy cold plate, and a brazed aluminum alloy cold plate, so that various structures can be provided for the design of the flat tube, improving the design flexibility and reducing the manufacturing difficulty.

According to some embodiments of this application, the first heat exchange member 100 includes at least one heat exchange tube. When a plurality of heat exchange tubes are provided, the plurality of heat exchange tubes are arranged at intervals along the first direction. One heat exchange flow passage is defined by an inner side of each heat exchange tube.

For example, the number of heat exchange tubes may be one, two, three, or more. The number of heat exchange tubes may be designed according to the size of the battery module.

Specifically, the heat exchange flow passage is defined in the heat exchange tube for the circulation of the heat exchange fluid. The shape of the heat exchange tube may include various types, for example, it may be a circular tube or a flat tube. In addition, the shape of the heat exchange flow passage defined by the heat exchange tube may further include various types, for example, a U-shaped heat exchange flow passage and a serpentine heat exchange flow passage.

Further, a plurality of heat exchange tubes are arranged in parallel. For example, inlet ends of the plurality of heat exchange tubes are connected to a fluid diversion chamber of the fluid collector 20, and outlet ends of the plurality of heat exchange tubes are all connected to the fluid collection chamber of the fluid collector 20.

The plurality of heat exchange tubes may be arranged sequentially along the first direction X. Certainly, the plurality of heat exchange tubes may also be wound around one another. Further, the plurality of heat exchange tubes wound around one another in a same plane.

In the above embodiment, setting the first heat exchange member 100 to include at least one heat exchange tube can reduce the manufacturing complexity of the first heat exchange member 100, thereby improving the production rate of the first heat exchange member 100, and can also reduce the fluid pressure drop in a single heat exchange tube, thereby improving heat exchange efficiency. In addition, a tubular structure is simpler than a plate-like structure, has a low cost, and is easy to process.

According to some embodiments of this application, the heat exchange tube can be formed by bending a single tube.

Being formed by bending a single tube means that the heat exchange tube can be formed by bending a single straight tube multiple times through processing techniques such as rolling. For example, a single straight tube can be bent at a plurality of preset positions to form a V-shape, U-shape, and the like at the bent positions. The bent shape of the single tube can be designed according to actual conditions.

In the above embodiment, setting the heat exchange tube to be formed by bending a single tube can reduce the number of welds of the first heat exchange member 100, thereby reducing the risk of leakage of the first heat exchange member 100 and improving the service reliability of the first heat exchange member 100. In addition, an operation process of forming by bending the single tube is simpler to operate compared to the manufacturing process of the plate-like structure, thereby significantly reducing the cost of the first heat exchange member 100.

According to some embodiments of this application, the heat exchange tube is bent in an arc shape at the bent position.

The arc-shaped bending can reduce the flow resistance of the fluid and reduce the pressure drop. Furthermore, the heat exchange tube being bent in an arc shape at the bent position can increase the flow rate of the heat exchange fluid in the heat exchange flow passage, thereby improving the heat exchange efficiency of the heat exchange member 100.

In the above embodiment, setting the heat exchange tube to be bent in an arc shape at the bent position can reduce the flow resistance of the fluid and reduce the pressure drop, thereby increasing the flow rate of the heat exchange fluid in the heat exchange flow passage, and thus improving the heat exchange efficiency of the heat exchange member 100.

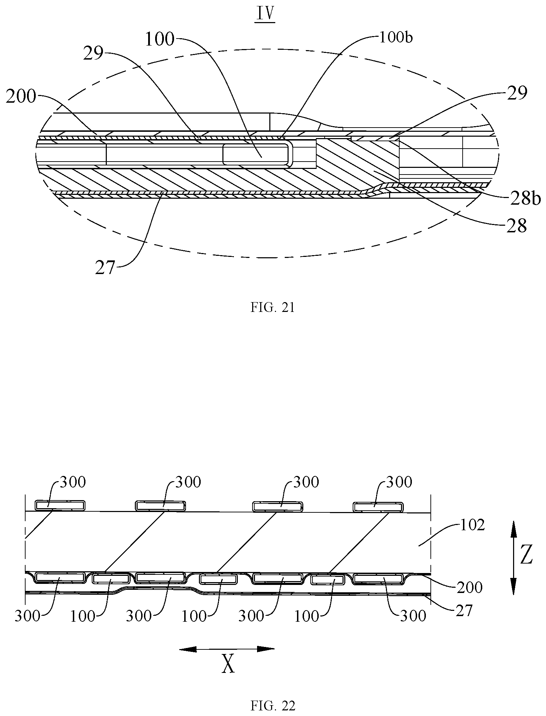

In some embodiments of this application, referring to FIG. 22, the battery 1 further includes a second heat exchange member 300. The second heat exchange member 300 is disposed in the accommodation cavity 21 and attached to at least one inner wall surface of the casing 200. A structure of the second heat exchange member 300 is the same as or different from a structure of the first heat exchange member 100.

The second heat exchange member 300 may refer to an apparatus or a component configured to transfer heat during a heat exchange process. The second heat exchange member 300 is typically configured to transfer heat from one medium to another medium, achieving the transfer and utilization of heat. Exemplarily, the second heat exchange member 300 may be, but is not limited to, a radiator or a cold plate. The second heat exchange member 300 may adopt the same structure as the first heat exchange member 100 or a different structure from the first heat exchange member 100.

The inner wall surface of the casing 200 may refer to a wall surface located on an inner side of the accommodation cavity 21. The casing 200 may have a plurality of inner wall surfaces. The number of inner wall surfaces varies depending on the shape of the casing 200. Exemplarily, when the casing 200 is cuboid or square, the casing 200 may have six inner wall surfaces. The second heat exchange member 300 can be attached to at least one of a top inner wall surface, a bottom inner wall surface, and four peripheral side inner wall surfaces of the casing 200.

Exemplarily, the first heat exchange member 100 is attached to the outer side surface of the bottom wall of the casing 200, and the second heat exchange member 300 is attached between the four peripheral inner wall surfaces of the casing 200 and the battery cell 102. Thus, the first heat exchange member 100 can exchange heat with a bottom surface of the battery cell 102, and the second heat exchange member 300 can exchange heat with an outermost battery cell 102 of a plurality of battery cells 102, improving the overall heat exchange efficiency for the battery cell 102 in the accommodation cavity 21.

In the above technical solution, the battery 1 can not only exchange heat with one side of the battery cell 102 in the casing 200 through the first heat exchange member 100, but also exchange heat with the other side of the battery cell 102 in the casing 200 through the second heat exchange member 300. That is, the second heat exchange member 300 and the first heat exchange member 100 can cooperate to exchange heat with the battery cell 102, thereby exchanging heat with more side surfaces of the battery cell 102, increasing heat exchange surfaces of the battery cell 102, helping to improve the heat exchange efficiency, and greatly improving the heat exchange effect.

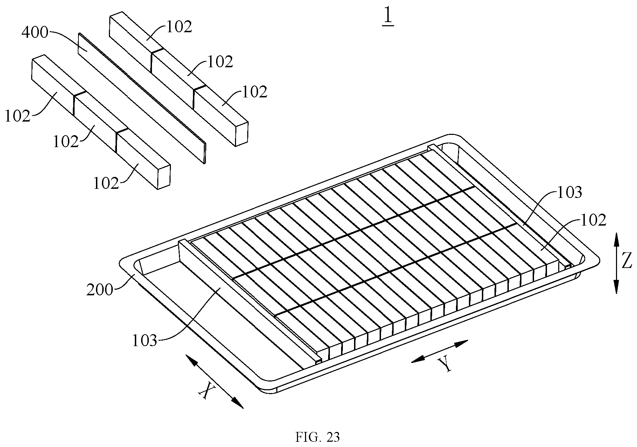

In some embodiments of this application, referring to FIG. 23, the battery 1 further includes a third heat exchange member 400. The third heat exchange member 400 is disposed in the accommodation cavity 21 and configured to be arranged between two adjacent battery cells 102. A structure of the third heat exchange member 400 is the same as or different from a structure of the first heat exchange member 100.

The third heat exchange member 400 may refer to an apparatus or a component configured to transfer heat during a heat exchange process. The third heat exchange member 400 is typically configured to transfer heat from one medium to another medium, achieving the transfer and utilization of heat. Exemplarily, the third heat exchange member 400 may be, but is not limited to, a radiator or a cold plate. The third heat exchange member 400 may adopt the same structure as the first heat exchange member 100 or a different structure from the first heat exchange member 100.

One or more rows of battery cells 102 may be provided in the accommodation cavity 21. Referring to FIG. 6, a plurality of rows of battery cells 102 are arranged along the second direction Y of the casing 200. In each row of battery cells 102, a plurality of battery cells are arranged along the first direction X. The third heat exchange member 400 may be disposed between two adjacent rows of battery cells 102, and the third heat exchange member 400 is attached to two adjacent battery cells 102, so that the third heat exchange member 400 can exchange heat with the two adjacent battery cells 102.

Optionally, the battery 1 may include the first heat exchange member 100 and the third heat exchange member 400. The first heat exchange member 100 is attached to the outer side of the wall of the casing 200 facing away from the accommodation cavity 21, and the third heat exchange member 400 is disposed between two adjacent battery cells 102, thereby exchanging heat with the battery cells 102 through the two heat exchange members.

Optionally, the battery 1 may further include the first heat exchange member 100, the second heat exchange member 300, and the third heat exchange member 400. The first heat exchange member 100 is attached to the outer side of the wall of the casing 200 facing away from the accommodation cavity 21, the second heat exchange member 300 is attached to the inner wall surface of the casing 200, and the third heat exchange member 400 is disposed between two adjacent battery cells 102. Thus, heat is exchanged with the battery cells 102 through the three heat exchange members.

In the above technical solution, the first heat exchange member 100 can exchange heat with the same side surface of a plurality of battery cells 102 in the casing 200, and the third heat exchange member 400 can exchange heat with the other side between the two adjacent battery cells 102. Thus, the third heat exchange member 400 and the first heat exchange member 100 cooperate to exchange heat with two sides of the battery cell 102, thereby exchanging heat with more side surfaces of the battery cell 102, increasing heat exchange surfaces of the battery cell 102, helping to improve the heat exchange efficiency, and greatly improving the heat exchange effect.

A battery 1 according to an embodiment of this application includes a casing body 22, a bottom plate 23, a first heat exchange member 100, and a beam body 103. The casing body 22 is a frame structure. The bottom plate 23 is connected to a bottom of the casing body 22. The beam body 103 is disposed in the casing body 22. The casing body 22, the bottom plate 23, and the beam body 103 form a cavity structure in the casing 200 for accommodating a battery cell 102. The first heat exchange member 100 is a cold tube and is attached to an outer side of the bottom plate 23, so that the bottom plate 23 can physically isolate the cold tube and the battery cell 102. The cold tube is formed by bending a single tube, with a hollow structure formed in the middle.

The casing body 22 and the bottom plate 23 are both steel components. A thickness of a plate of the frame structure of the casing body 22 is 0.8 mm to 2.0 mm. A thickness of the bottom plate 23 is 0.4 mm to 1.2 mm. The bottom plate 23 and the casing body 22 are welded to each other. The cold tube is disposed in a region of the bottom plate 23 corresponding to the battery cell 102, which can reduce the material used for the cold tube and reduce the cost.

In some embodiments of this application, referring to FIG. 12, the first heat exchange member 100 includes a first heat exchange flow passage 10. The first heat exchange flow passage 10 includes a plurality of heat exchange portions. The plurality of heat exchange portions are arranged at intervals along a first direction X and sequentially connected to each other. Each heat exchange portion extends linearly along a second direction Y. The second direction Y and the first direction X are arranged at an included angle. The battery 1 includes at least one row of battery cells 102. The battery cells 102 in each row are sequentially arranged along the second direction Y. A side of the battery cells 102 close to the first heat exchange member 100 corresponds to at least two heat exchange portions.

It can be understood that the first heat exchange member 100 may include a plurality of heat exchange flow passages. One of the plurality of heat exchange flow passages may be denoted as a first heat exchange flow passage 10. The first heat exchange flow passage 10 may be configured to circulate a heat exchange fluid to perform heat exchange and adjust the temperature of the battery cell 102.

The heat exchange portion may refer to the aforementioned first heat exchange portion 111 and second heat exchange portion 121.

The side of the battery cells 102 close to the first heat exchange member 100 corresponding to at least two first heat exchange portions 111 can be understood as a side surface of the battery cells 102 close to the first heat exchange member 100 is attached with heat exchange portions 111, where the number of the heat exchange portions 111 may include, but is not limited to, two, three, four, and the like.

In the above technical solution, the side of the battery cells 102 close to the first heat exchange member 100 corresponds to at least two heat exchange portions, so that a heat exchange area between the battery cells 102 and the first heat exchange member 100 can be increased, and the temperature of the battery cells 102 can be adjusted quickly, thereby improving the heat exchange efficiency of the battery cells 102, making the temperature adjustment of the battery cells 102 faster, and improving the heat exchange effect of the battery cells 102, and thus improving the reliability of the battery 1.

According to a second aspect, an embodiment of this application further provides an electric apparatus including the battery 1 as described above.

In the above technical solution, the battery 1 has relatively high sealing performance and insulation performance and relatively high reliability. Therefore, the electric apparatus using this battery 1 has relatively high electrical reliability. Moreover, since most of the sealing and insulation structures of the casing 200 of the battery 1 can be omitted, the overall manufacturing cost of the battery 1 can be effectively reduced, and the volumetric energy density of the battery 1 can be increased. This can reduce the production cost of the electric apparatus and help to extend the service life.

It should be noted that, without conflict, the embodiments and features in the embodiments in this application can be combined with each other.

The foregoing embodiments are only preferred embodiments of this application and are not intended to limit this application. For those skilled in the art, this application can have various modifications and changes. Any modifications, equivalent replacements, improvements, and the like made without departing from the spirit and principle of this application shall fall within the protection scope of this application.

## Claims

1. A battery, wherein the battery comprises:
a casing having an accommodation cavity; and
a first heat exchange member attached to an outer side of a wall of the casing facing away from the accommodation cavity and configured to exchange heat with a battery cell.

2. The battery according to claim 1, wherein the accommodation cavity comprises a first cavity; the first cavity is configured to accommodate the battery cell; the first heat exchange member has a heat exchange region configured for heat exchange; and an area of a projected contour of an orthographic projection of the heat exchange region on a side surface of the casing close to the first heat exchange member is greater than or equal to an area of a projected surface of an orthographic projection of the first cavity on the side surface of the casing close to the first heat exchange member, and is less than an area of the side surface of the casing close to the first heat exchange member.

3. The battery according to claim 2, wherein the accommodation cavity comprises a second cavity configured to accommodate an electrical component; and an orthographic projection of the second cavity on the side surface of the casing close to the first heat exchange member is located outside the orthographic projection of the heat exchange region on the side surface of the casing close to the first heat exchange member.

4. The battery according to any one of claims 1 to 3, wherein the casing comprises a casing body, a bottom plate, and a top plate; the bottom plate and the top plate are connected to the casing body; and the first heat exchange member is attached to an outer side of the bottom plate and/or an outer side of the top plate.

5. The battery according to claim 4, wherein the casing body, the bottom plate, and the top plate are steel components or aluminum components.

6. The battery according to claim 5, wherein when the casing body, the bottom plate, and the top plate are steel components, a thickness of the casing body is 0.8 mm to 2.0 mm.

7. The battery according to claim 6, wherein thicknesses of the bottom plate and the top plate are 0.4 mm to 1.2 mm.

8. The battery according to claim 4, wherein when the casing body, the bottom plate, and the top plate are aluminum components, a thickness of the casing body is 1.0 mm to 5.0 mm.

9. The battery according to claim 8, wherein thicknesses of the bottom plate and the top plate are 1.0 mm to 3.0 mm.

10. The battery according to any one of claims 4 to 9, wherein both the bottom plate and the top plate are welded to the casing body.

11. The battery according to any one of claims 1 to 10, wherein the battery further comprises a fixing member; the fixing member is disposed on the casing; and the fixing member is disposed close to at least one edge of the first heat exchange member and configured to fixedly connect the first heat exchange member and the casing.

12. The battery according to claim 11, wherein a first groove is provided in a wall of the casing close to the first heat exchange member; and the fixing member is at least partially located in the first groove.

13. The battery according to claim 12, wherein the wall of the casing close to the first heat exchange member protrudes toward an inner side of the accommodation cavity to form a protrusion; a peripheral wall of a protruding position of the protrusion forms the first groove; the battery further comprises a beam body; the beam body is disposed in the accommodation cavity, and the beam body is provided with a second groove; and the protrusion is at least partially disposed in the second groove.

14. The battery according to any one of claims 11 to 13, wherein the first heat exchange member comprises a first heat exchange flow passage; the first heat exchange flow passage comprises a first heat exchange section and a second heat exchange section; the second heat exchange section is bent to form a U-shaped region; and the first heat exchange section is disposed within the U-shaped region in a bent manner and connected to the second heat exchange section in a bent manner; and
the fixing member is connected to the first heat exchange section and the second heat exchange section and disposed close to or corresponding to bent portions of the first heat exchange section and the second heat exchange section.

15. The battery according to any one of claims 1 to 14, wherein the first heat exchange member comprises a first heat exchange flow passage; the first heat exchange flow passage comprises a first heat exchange section and a second heat exchange section; the second heat exchange section is bent to form a U-shaped region; and the first heat exchange section is disposed within the U-shaped region in a bent manner and connected to the second heat exchange section in a bent manner.

16. The battery according to claim 15, wherein the first heat exchange section comprises a plurality of first heat exchange portions; the plurality of first heat exchange portions are arranged at intervals along a first direction and sequentially connected to each other in a bent manner; each of the first heat exchange portions extends linearly along a second direction; and the first direction and the second direction are arranged at an included angle.

17. The battery according to claim 15 or 16, wherein the second heat exchange section comprises a second heat exchange portion, a third heat exchange portion, and a fourth heat exchange portion; the second heat exchange portion extends along a first side periphery of the first heat exchange section; the third heat exchange portion is connected between the second heat exchange portion and the first heat exchange section and extends along a second side periphery of the first heat exchange section; a first end of the third heat exchange portion is connected to the second heat exchange portion at an included angle, and a second end of the third heat exchange portion is connected to the first heat exchange section at an included angle; the fourth heat exchange portion is in communication with the second heat exchange portion, is connected to the second heat exchange portion at an included angle, and extends along a third side periphery of the first heat exchange section.

18. The battery according to claim 17, wherein the first heat exchange section comprises a plurality of first heat exchange portions, and the plurality of first heat exchange portions are sequentially connected to each other in a bent manner in a first direction; wherein
the second heat exchange portion is located on a side of the plurality of first heat exchange portions along the first direction; the third heat exchange portion is located on a side of the plurality of first heat exchange portions along a second direction; the first direction and the second direction are arranged at an included angle; a first end of the third heat exchange portion is connected to one end of the second heat exchange portion along the second direction, and a second end of the third heat exchange portion is connected to one of the plurality of first heat exchange portions that is farthest from the second heat exchange portion along the first direction; the fourth heat exchange portion is located on the other side of the plurality of first heat exchange portions along the second direction; and one end of the fourth heat exchange portion is connected to one end of the second heat exchange portion away from the third heat exchange portion, and the other end of the fourth heat exchange portion extends along the first direction away from the second heat exchange portion.

19. The battery according to claim 18, wherein the third heat exchange portion and the fourth heat exchange portion extend along the first direction; and the first heat exchange portion and the second heat exchange portion both extend along the second direction.

20. The battery according to claim 19, wherein the fourth heat exchange portion extends along the first direction to a position close to the one of the plurality of first heat exchange portions that is farthest from the second heat exchange portion.

21. The battery according to any one of claims 17 to 20, wherein the first heat exchange flow passage further comprises a third heat exchange section; the first heat exchange section is connected between the third heat exchange section and the second heat exchange section; and the third heat exchange section is connected to the first heat exchange section at an included angle.

22. The battery according to claim 21, wherein the first heat exchange section comprises a plurality of first heat exchange portions, and the plurality of first heat exchange portions are sequentially connected to each other in a bent manner in a first direction; and
the third heat exchange section is disposed on a side of the first heat exchange section facing away from the third heat exchange portion, and the third heat exchange section is connected to one of the plurality of first heat exchange portions that is closest to the second heat exchange portion along the first direction.

23. The battery according to claim 22, wherein the third heat exchange section extends along the first direction away from the second heat exchange portion; the first heat exchange portion extends along the second direction; and the first direction and the second direction are arranged at an included angle.

24. The battery according to claim 23, wherein the third heat exchange section extends along the first direction to a position close to one of the plurality of first heat exchange portions that is farthest from the second heat exchange portion.

25. The battery according to any one of claims 21 to 23, wherein the first heat exchange flow passage further comprises a first inlet/outlet section; one end of the first inlet/outlet section is connected to the third heat exchange section at an included angle, and the other end of the first inlet/outlet section is formed as a first inlet/outlet of the first heat exchange flow passage; the first inlet/outlet section extends along the second direction away from the first heat exchange section; and the third heat exchange section extends along the first direction.

26. The battery according to any one of claims 17 to 25, wherein the first heat exchange flow passage further comprises a second inlet/outlet section; one end of the second inlet/outlet section is connected to the fourth heat exchange portion at an included angle, and the other end of the second inlet/outlet section is formed as a second inlet/outlet of the first heat exchange flow passage; the second inlet/outlet section extends along the second direction away from the first heat exchange section; and the fourth heat exchange portion extends along the first direction.

27. The battery according to any one of claims 14 to 26, wherein the first heat exchange member has one or more heat exchange flow passages; when a plurality of heat exchange flow passages are provided, the plurality of heat exchange flow passages are arranged at intervals along a first direction or wound around one another; and at least one heat exchange flow passage forms the first heat exchange flow passage.

28. The battery according to claim 27, wherein the plurality of heat exchange flow passages are symmetrically arranged with respect to a center line of the first heat exchange member along a second direction; and the second direction and the first direction are arranged at an included angle.

29. The battery according to claim 27 or 28, wherein the first heat exchange member comprises:
a first pipe portion, wherein an inlet end of the first pipe portion is formed as a first inlet/outlet of the heat exchange flow passage;
a second pipe portion, wherein an outlet end of the second pipe portion is formed as a second inlet/outlet of the heat exchange flow passage; and
an installation member, wherein the installation member is configured to be hermetically connected to the casing, and a through hole is formed on the installation member and is in communication with spaces on both sides of the installation member; and the first pipe portion and/or the second pipe portion passes through the through hole and is hermetically connected to the through hole.

30. The battery according to claim 29, wherein the battery further comprises a protective plate; the protective plate is disposed on a side of the first heat exchange member away from the casing; an outer peripheral surface of the protective plate is hermetically connected to the casing, jointly forming a third cavity configured to accommodate the first heat exchange member; the installation member has a cavity with an opening on one side; the through hole runs through a bottom wall of the cavity opposite to the opening; the installation member is adapted to be disposed between the casing and the protective plate; and an outer peripheral surface of the installation member is adapted to be hermetically connected to the casing and the protective plate.

31. The battery according to any one of claims 1 to 30, wherein the battery further comprises a protective plate; the protective plate is disposed on a side of the first heat exchange member away from the casing; an outer peripheral surface of the protective plate is hermetically connected to the casing, jointly forming a third cavity configured to accommodate the first heat exchange member; and the battery further comprises a filler, and the filler is filled in a gap between the first heat exchange member and the third cavity.

32. The battery according to claim 31, wherein the filler is a filling layer and is disposed on the protective plate; the filling layer has a first top surface close to a side of the casing; the first heat exchange member has a second top surface close to a side of the casing; a height of the second top surface relative to the protective plate is greater than a height of the first top surface relative to the protective plate; and the battery further comprises an adhesive member, and the adhesive member is disposed on the first top surface and the second top surface.

33. The battery according to any one of claims 1 to 32, wherein the casing is an integrally stamped component and comprises a bottom wall and a peripheral wall.

34. The battery according to claim 33, wherein the first heat exchange member comprises a plurality of flat tubes in communication with each other sequentially, and an inner wall of each flat tube encloses a heat exchange flow passage.

35. The battery according to claim 34, wherein the flat tube comprises one of a bent aluminum alloy tube, an aluminum alloy harmonica cold tube, a stamped aluminum alloy cold plate, and a brazed aluminum alloy cold plate.

36. The battery according to any one of claims 1 to 35, wherein the battery further comprises a second heat exchange member; the second heat exchange member is disposed in the accommodation cavity and attached to at least one inner wall surface of the casing; and a structure of the second heat exchange member is the same as or different from a structure of the first heat exchange member.

37. The battery according to any one of claims 1 to 36, wherein the battery further comprises a third heat exchange member; the third heat exchange member is disposed in the accommodation cavity and configured to be arranged between two adjacent battery cells; and a structure of the third heat exchange member is the same as or different from a structure of the first heat exchange member.

38. The battery according to any one of claims 1 to 37, wherein the first heat exchange member comprises a first heat exchange flow passage; the first heat exchange flow passage comprises a plurality of heat exchange portions; the plurality of heat exchange portions are arranged at intervals along a first direction and sequentially connected to each other; each heat exchange portion extends linearly along a second direction; and the second direction and the first direction are arranged at an included angle; and
the battery comprises at least one row of battery cells; the battery cells in each row are sequentially arranged along the second direction; and a side of the battery cells close to the first heat exchange member corresponds to at least two heat exchange portions.

39. An electric apparatus, comprising the battery according to any one of claims 1 to 38.
